(19) **Europäisches Patentamt / European Patent Office / Office européen des brevets**

(11) **EP 3 995 997 B1**

(12) **EUROPEAN PATENT SPECIFICATION**

(45) Date of publication and mention of the grant of the patent:
**01.07.2026 Bulletin 2026/27**

(21) Application number: **20834753.4**

(22) Date of filing: **20.05.2020**

(51) International Patent Classification (IPC):
**G06N 3/04** *(2023.01)* **G06N 20/00** *(2019.01)*

(52) Cooperative Patent Classification (CPC):
**G05B 17/02; B01J 19/0013; G06N 3/045; G06N 3/0455; G06N 3/0464; G06N 3/088; G06N 3/09; G06N 5/01; G06N 20/20;** B01J 2219/00051; B01J 2219/00191; B01J 2219/00231; G06N 3/08

(86) International application number:
**PCT/JP2020/019936**

(87) International publication number:
**WO 2021/002110 (07.01.2021 Gazette 2021/01)**

(54) **LEARNING DEVICE, OPERATING METHOD OF LEARNING DEVICE, OPERATING PROGRAM OF LEARNING DEVICE, AND OPERATING DEVICE**

LERNVORRICHTUNG, BETRIEBSVERFAHREN FÜR LERNVORRICHTUNG, BETRIEBSPROGRAMM EINER LERNVORRICHTUNG UND BETRIEBSVORRICHTUNG

DISPOSITIF D'APPRENTISSAGE, PROCÉDÉ DE FONCTIONNEMENT D'UN DISPOSITIF D'APPRENTISSAGE, PROGRAMME DE FONCTIONNEMENT D'UN DISPOSITIF D'APPRENTISSAGE, ET DISPOSITIF DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2019 JP 2019124420**

(43) Date of publication of application:
**11.05.2022 Bulletin 2022/19**

(73) Proprietor: **FUJIFILM Corporation**
**Tokyo 106-8620 (JP)**

(72) Inventor: **HASEGAWA Masataka**
**Minamiashigara-shi, Kanagawa 250-0193 (JP)**

(74) Representative: **Meissner Bolte Partnerschaft mbB**
**Patentanwälte Rechtsanwälte**
**Postfach 86 06 24**
**81633 München (DE)**

(56) References cited:
WO-A1-2019/073666 JP-A- 2016 091 359
JP-A- 2016 091 359 JP-A- 2018 005 773
JP-A- 2018 116 054 JP-A- H06 304 724

- MAGGIPINTO MARCO ET AL: "A Convolutional Autoencoder Approach for Feature Extraction in Virtual Metrology", vol. 17, 1 January 2018 (2018-01-01), 43rd North American Manufacturing Research Conference, NAMRC 43, 8-12 June 2015, UNC Charlotte, North Carolina, United States, pages 126 - 133, XP055953263, ISSN: 2351-9789, Retrieved from the Internet <URL:https://www.sciencedirect.com/science/article/pii/S2351978918311399/pdf?md5=7499e857c6cfb423cd696df62f066053&pid=1-s2.0-S2351978918311399-main.pdf> DOI: 10.1016/j.promfg.2018.10.023

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

**(Cont. next page)**

EP 3 995 997 B1

- **YUNBO WANG ET AL: "Reversing Two-Stream Networks with Decoding Discrepancy Penalty for Robust Action Recognition", ARXIV.ORG, CORNELL UNIVERSITY LIBRARY, 201 OLIN LIBRARY CORNELL UNIVERSITY ITHACA, NY 14853, 20 November 2018 (2018-11-20), XP080937180**

**Description**

## BACKGROUND OF THE INVENTION

1. Field of the Invention

A technique of the present disclosure relates to a learning apparatus, an operation method of the learning apparatus, an operation program of the learning apparatus, and an operating apparatus.

2. Description of the Related Art

A quality of a product is predicted using a machine learning model. In order to improve accuracy of prediction, JP2018-018354A proposes a machine learning model that learns, as learning input data, physical-property relevance data derived from physical-property data representing a physical property of a product.

In JP2018-018354A, as a product, foods and drinks such as coffee beans are exemplified. Further, in JP2018-018354A, as physical-property data, spectrum data such as near infrared (NIR) spectroscopic analysis data, Fourier transform infrared (FT-IR) spectroscopic analysis data, or nuclear magnetic resonance (NMR) spectroscopic analysis data, or image data obtained by imaging a product using a camera is exemplified. As physical-property relevance data, numerical values obtained from spectrum data, for example, a slope, a periodicity, an amplitude, a peak height, and a peak width of a waveform of a spectrum are exemplified. Further, as physical-property relevance data, image data itself obtained by imaging a product using a camera is exemplified. JP 016091359A describes an information processing method for spectroscopic data.

## SUMMARY OF THE INVENTION

The physical-property data may be data representing one type of physical properties of a product by one parameter, such as a weight of a product, and may be data representing one type of physical properties of a product by a plurality of parameters, such as the spectrum data or the image data. More specifically, in a case where the physical-property data is spectrum data, a spectrum is a physical property of a product, and, for example, a wave number and an intensity correspond to a plurality of parameters. In a case where the physical-property data is image data, a color is a physical property of a product, and a red pixel value, a green pixel value, and a blue pixel value correspond to a plurality of parameters. In a case where a parameter is regarded as a dimension, it can be said that the physical-property data is multi-dimensional physical-property data. On the other hand, it can be said that the physical-property data representing one type of physical properties of a product by one parameter is one-dimensional physical-property data. Hereinafter, physical-property data representing one type of physical properties of a product by a plurality of parameters is referred to as multi-dimensional physical-property data. Further, physical-property relevance data derived from the multi-dimensional physical-property data is referred to as multi-dimensional physical-property relevance data.

As described above, in JP2018-018354A, as the multi-dimensional physical-property relevance data which is derived from the spectrum data as the multi-dimensional physical-property data, a slope, a periodicity, an amplitude, a peak height, and a peak width of a spectrum waveform are exemplified. However, numerical values exemplified in JP2018-018354A do not comprehensively cover overall characteristics of the multi-dimensional physical-property data. As a result, it cannot be said that the numerical values accurately represent the physical property of the product. For this reason, in a case where learning is performed by inputting, as learning input data, the numerical values to the machine learning model, there is a problem that accuracy of prediction is leveled off at a relatively-low level.

An object of the technique of the present disclosure is to provide a learning apparatus, an operation method of the learning apparatus, an operation program of the learning apparatus, and an operating apparatus capable of further improving accuracy of prediction of a quality of a product by a machine learning model in a case where learning is performed by inputting, as learning input data, multi-dimensional physical-property relevance data, which is derived from multi-dimensional physical-property data of the product, to the machine learning model.

The invention is defined by the appended claims.

## BRIEF DESCRIPTION OF THE DRAWINGS

Fig. 1 is a diagram illustrating a machine learning system, a flow reaction apparatus, a physical-property analysis apparatus, and a quality evaluation apparatus.
Fig. 2 is a diagram illustrating an outline of processing in the flow reaction apparatus, the physical-property analysis apparatus, and the quality evaluation apparatus.

Fig. 3 is a diagram illustrating an outline of processing in a learning apparatus and an operating apparatus.

Fig. 4 is a diagram illustrating that production condition data, physical-property data, relevance data, and quality data are associated with a common ID.

Fig. 5 is a diagram illustrating the flow reaction apparatus that includes a reaction section including a T-shaped junction portion.

Fig. 6 is a diagram illustrating the flow reaction apparatus that includes a reaction section including a cross-shaped junction portion.

Fig. 7 is a diagram illustrating production condition data.

Fig. 8 is a diagram illustrating spectrum data and a spectrum.

Fig. 9 is a diagram illustrating quality data.

Fig. 10 is a block diagram illustrating a computer including the learning apparatus and the operating apparatus.

Fig. 11 is a block diagram illustrating a processing unit of a CPU of the learning apparatus.

Fig. 12 is a diagram illustrating an autoencoder.

Fig. 13 is a diagram explaining convolution processing.

Fig. 14 is a diagram illustrating an image feature map.

Fig. 15 is a diagram illustrating that the autoencoder is prepared for each of a plurality of intervals of spectrum data.

Fig. 16 is a diagram illustrating a state where learning is performed by inputting, as learning input image data, image data of a spectrum of a product of which a quality is higher than a preset level, to the autoencoder.

Fig. 17 is a diagram illustrating a state where difference data between input image data and output image data of the autoencoder is derived.

Fig. 18 is a diagram illustrating a state where a first derivation unit derives, as relevance data, an average value and a sum of the difference data for each of a plurality of intervals obtained by dividing spectrum data.

Fig. 19 is a diagram illustrating details of a learning unit.

Fig. 20 is a diagram illustrating processing of a first processing unit.

Fig. 21 is a block diagram illustrating a processing unit of a CPU of the operating apparatus.

Fig. 22 is a diagram illustrating processing of a second processing unit.

Fig. 23 is a diagram illustrating a quality prediction display screen.

Fig. 24 is a flowchart illustrating a processing procedure of the learning apparatus.

Fig. 25 is a flowchart illustrating a processing procedure of the learning apparatus.

Fig. 26 is a flowchart illustrating a processing procedure of the operating apparatus.

Fig. 27 is a table illustrating a determination coefficient of a molecular weight dispersion and a determination coefficient of a molecular weight in Comparative Examples and Example.

Fig. 28 is a diagram illustrating relevance data according to Comparative Example 2.

Fig. 29 is a diagram illustrating image data.

Fig. 30 is a diagram illustrating a plurality of regions obtained by dividing image data.

Fig. 31 is a diagram illustrating a state where the first derivation unit derives relevance data for each of the plurality of regions obtained by dividing image data.

Fig. 32 is a diagram illustrating a state where relevance data is derived based on the image feature map.

Fig. 33 is a block diagram illustrating a processing unit of a CPU of the learning apparatus according to a fourth embodiment.

Fig. 34 is a diagram illustrating processing of a first processing unit in temporary learning.

Fig. 35 is a diagram illustrating details of an extraction unit.

Fig. 36 is a diagram illustrating processing of a third processing unit.

Fig. 37 is a diagram illustrating processing of a fourth processing unit.

Fig. 38 is a diagram illustrating processing of a calculation unit.

Fig. 39 is a diagram illustrating a specific example of processing of the calculation unit.

Fig. 40 is a diagram illustrating contribution information.

Fig. 41 is a diagram illustrating processing of a determination unit.

Fig. 42 is a diagram illustrating processing of the first processing unit in main learning.

Fig. 43 is a flowchart illustrating a processing procedure of the learning apparatus according to the fourth embodiment.

Fig. 44 is a block diagram illustrating a processing unit of a CPU of the operating apparatus according to the fourth embodiment.

Fig. 45 is a diagram illustrating processing of the second processing unit.

**DESCRIPTION OF THE PREFERRED EMBODIMENTS**

[First Embodiment]

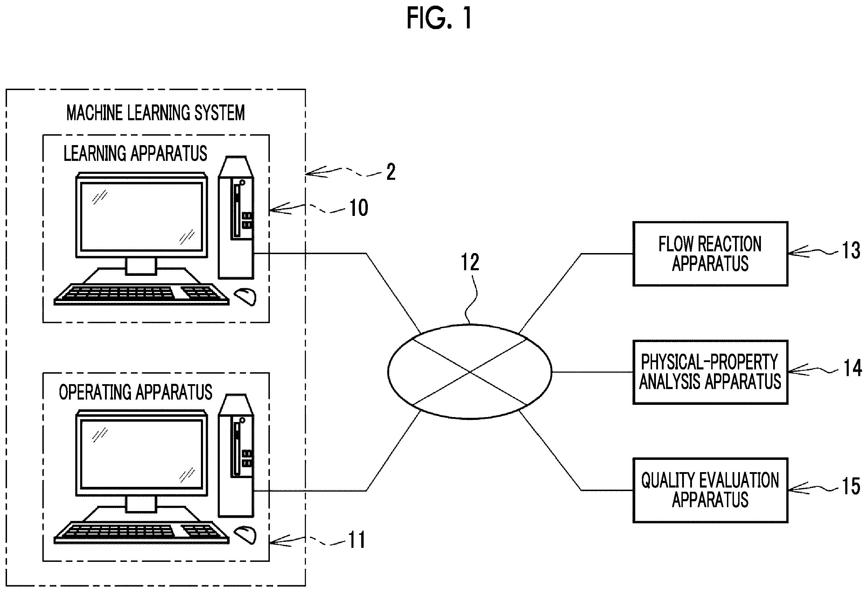

In Fig. 1, a machine learning system 2 includes a learning apparatus 10 and an operating apparatus 11. The learning apparatus 10 and the operating apparatus 11 are, for example, desktop personal computers. The learning apparatus 10 and the operating apparatus 11 are connected to each other so as to communicate with each other via a network 12. The network 12 is, for example, a local area network (LAN) or a wide area network (WAN) such as the Internet or a public communication network. A flow reaction apparatus 13, a physical-property analysis apparatus 14, and a quality evaluation apparatus 15 are also connected to the network 12.

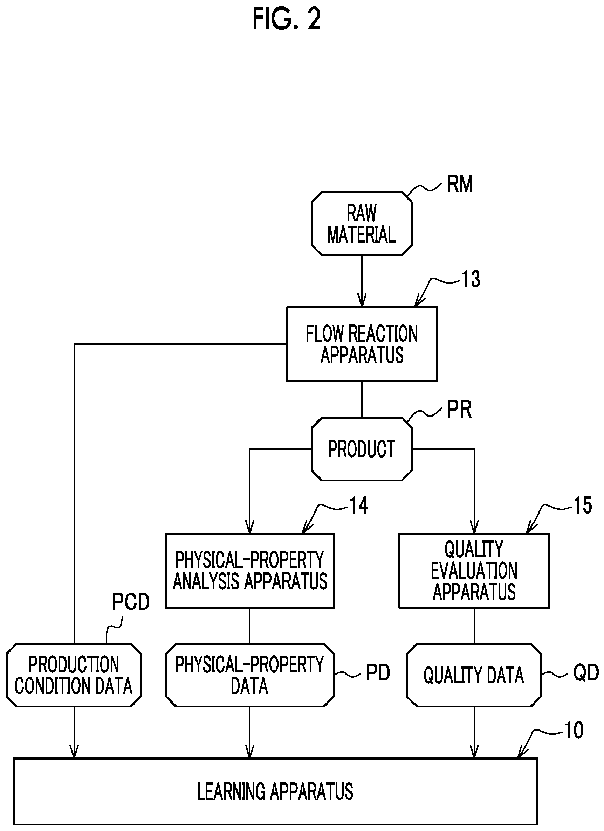

In Fig. 2, the flow reaction apparatus 13 produces a product PR from a raw material RM according to production condition data PCD of a production process by a flow synthesis method. The physical-property analysis apparatus 14 analyzes a physical-property of the product PR, and outputs physical-property data PD as an analysis result. The quality evaluation apparatus 15 evaluates a quality of the product PR, and outputs quality data QD as an evaluation result. The production condition data PCD from the flow reaction apparatus 13, the physical-property data PD from the physical-property analysis apparatus 14, and the quality data QD from the quality evaluation apparatus 15 are respectively transmitted to the learning apparatus 10.

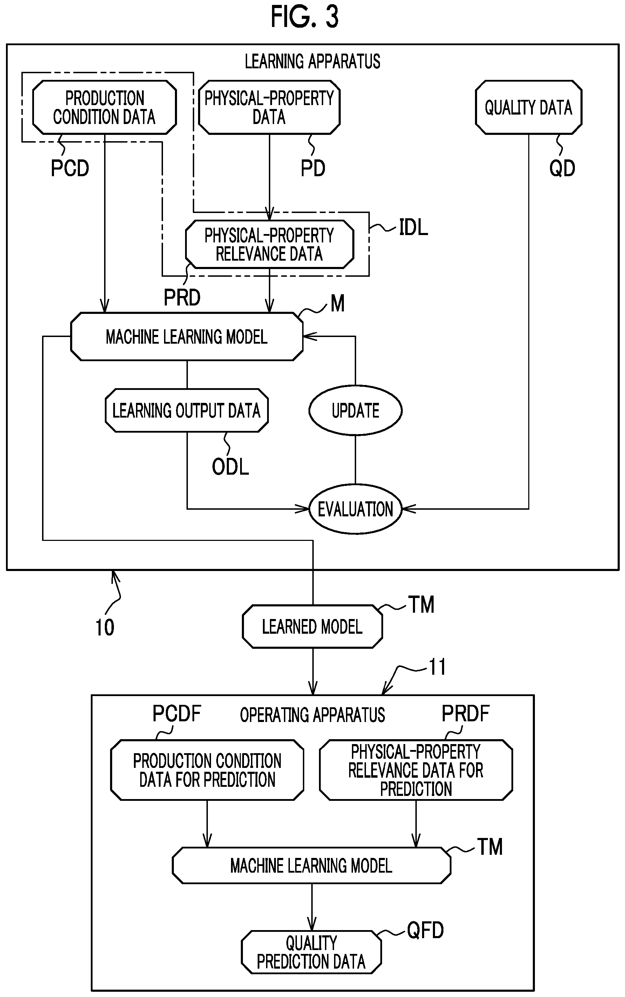

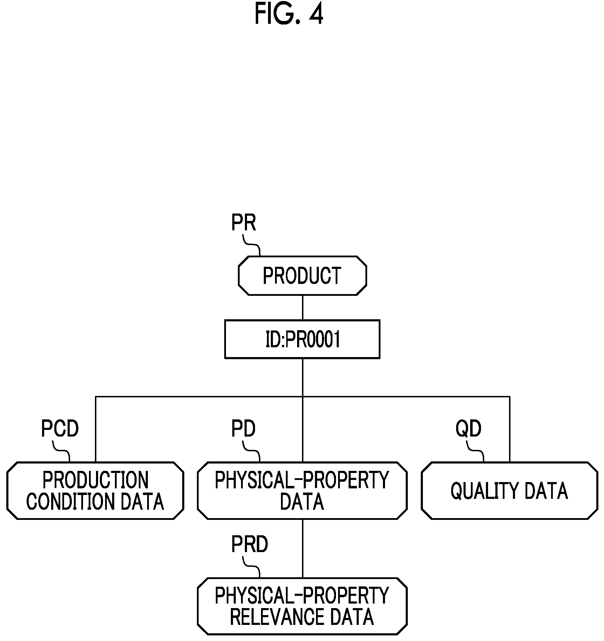

In Fig. 3, the learning apparatus 10 acquires the production condition data PCD from the flow reaction apparatus 13, the physical-property data PD from the physical-property analysis apparatus 14, and the quality data QD from the quality evaluation apparatus 15. The learning apparatus 10 derives physical-property relevance data (hereinafter, abbreviated as relevance data) PRD from the physical-property data PD. Learning input data IDL includes the relevance data PRD and the production condition data PCD. As illustrated in Fig. 4, the production condition data PCD, the physical-property data PD, the relevance data PRD derived from the physical-property data PD, and the quality data QD are associated with common identification data (ID) which is assigned to one product PR.

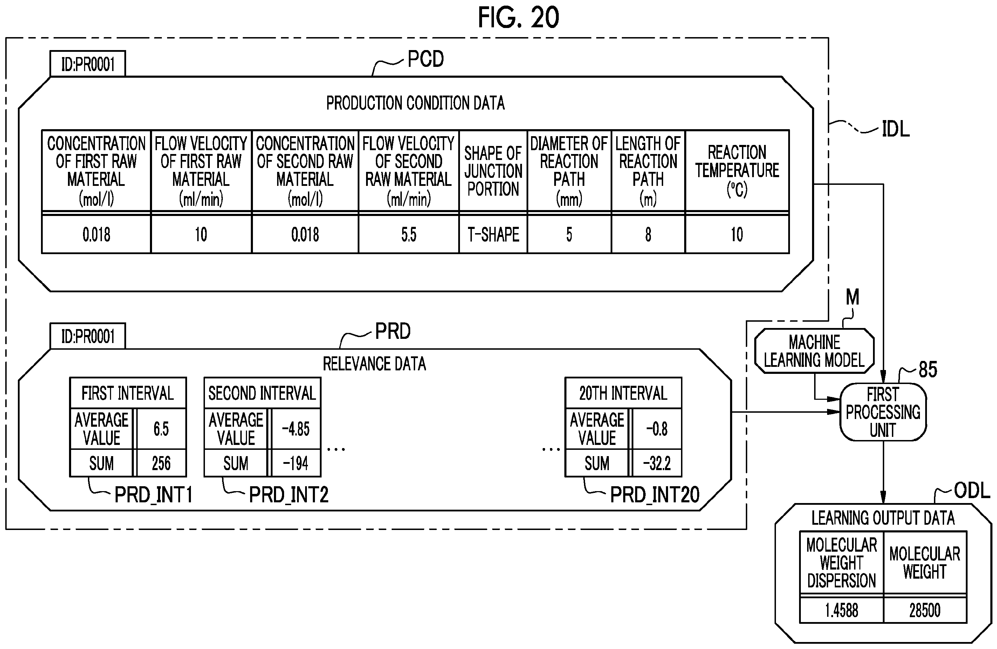

The learning apparatus 10 includes a machine learning model M. The machine learning model M is a model for predicting a quality of the product PR. In order to improve an accuracy of prediction of the machine learning model M, the learning apparatus 10 inputs the learning input data IDL including the production condition data PCD and the relevance data PRD with the same ID, to the machine learning model M (refer to Fig. 20). The machine learning model M outputs learning output data ODL according to the learning input data IDL.

The quality data QD is data for matching the learning output data ODL with an answer. As an accuracy of prediction of the machine learning model M is higher, a difference between the quality data QD and the learning output data ODL is smaller. Therefore, the learning apparatus 10 evaluates an accuracy of prediction of the machine learning model M by comparing the learning output data ODL with the quality data QD having the same ID as the learning input data IDL. The machine learning model M is updated according to the evaluation result. The learning apparatus 10 inputs the learning input data IDL to the machine learning model M, outputs the learning output data ODL from the machine learning model M, evaluates an accuracy of prediction of the machine learning model M, and updates the machine learning model M, while changing the learning input data IDL and the quality data QD. The series of processing is repeated until an accuracy of prediction of the machine learning model M reaches a preset level. The learning apparatus 10 transmits, to the operating apparatus 11, the machine learning model M of which an accuracy of prediction reaches a preset level, as a learned model TM to be used for actual operation.

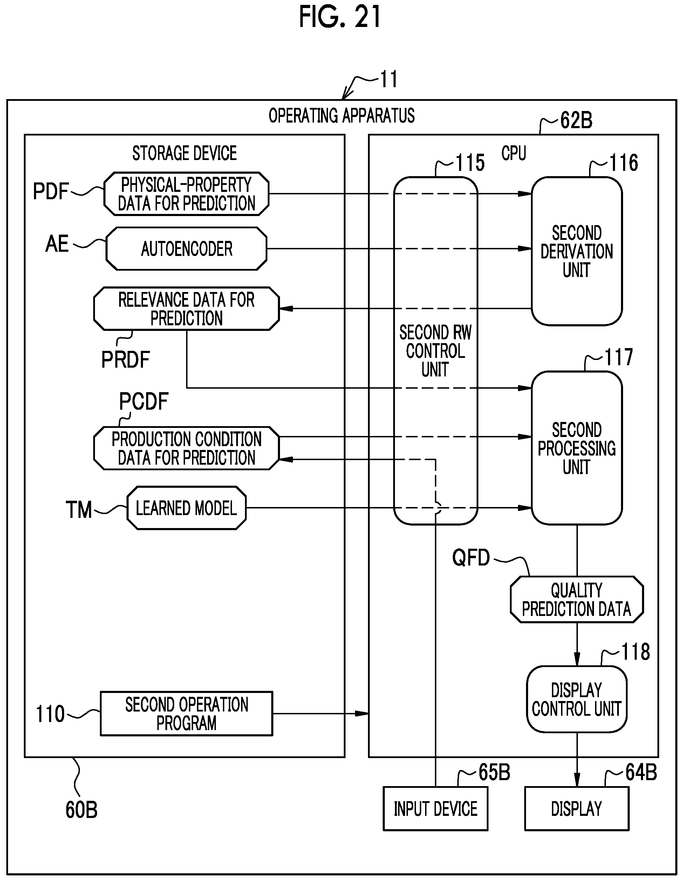

The operating apparatus 11 receives the learned model TM from the learning apparatus 10. The operating apparatus 11 inputs, to the learned model TM, production condition data for prediction PCDF, which is production condition data of a product PR of which a quality is unknown, and physical-property relevance data for prediction (hereinafter, abbreviated to as relevance data for prediction) PRDF, which is relevance data of the product PR of which a quality is unknown. The relevance data for prediction PRDF is data derived from the physical-property data for prediction PDF (refer to Fig. 21), which is physical-property data PD of the product PR of which a quality is unknown, similar to the relevance data PRD. The learned model TM outputs quality prediction data QFD according to the production condition data for prediction PCDF and the relevance data for prediction PRDF.

A flow reaction performed in the flow reaction apparatus 13 is a synthesis reaction of synthesizing monomers, a polymerization reaction of generating a polymer by reacting monomers with each other, or the like. Therefore, the product PR may be, for example, a compound at a growth stage, which is a target of a polymerization reaction. In the example, the flow reaction apparatus 13 performs, as the flow reaction, an anionic polymerization reaction of polystyrene which is a product PR.

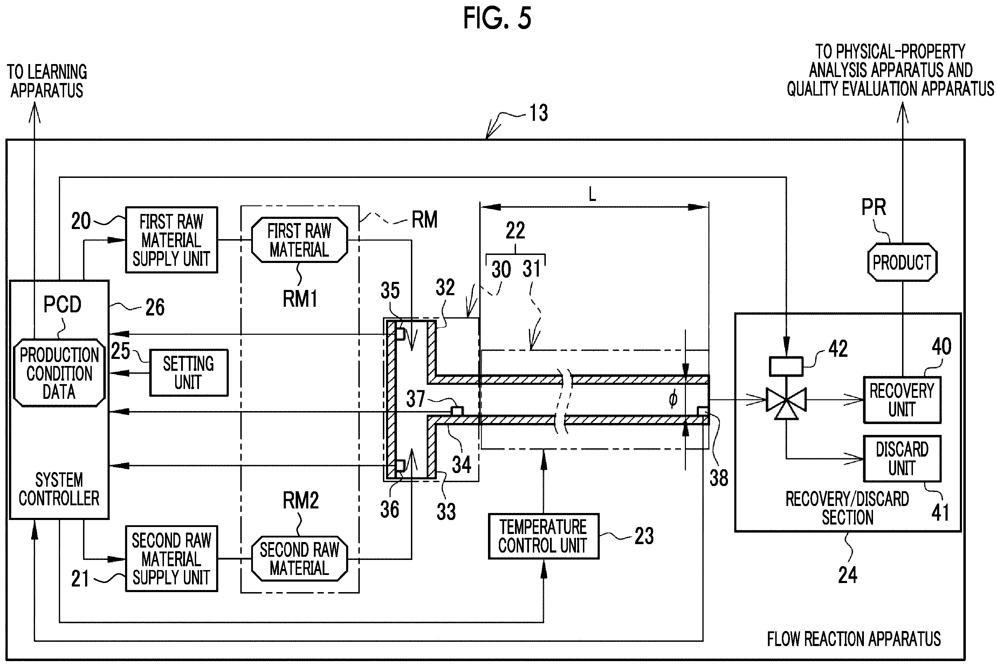

In Fig. 5, the flow reaction apparatus 13 includes a first raw material supply unit 20, a second raw material supply unit 21, a reaction section 22, a temperature control unit 23, a recovery/discard section 24, a setting unit 25, a system controller 26, and the like.

The first raw material supply unit 20 is connected to an upstream end of the reaction section 22 by a pipe (not illustrated). The first raw material supply unit 20 supplies a first raw material RM1 to the reaction section 22. The first raw material supply unit 20 includes a pump for transporting the first raw material RM1 to the reaction section 22. By controlling a rotation speed of the pump, a flow rate of the first raw material RM1 which is transported from the first raw material supply unit 20 to the reaction section 22 is adjusted.

In the example, the first raw material RM1 is a solution obtained by dissolving polystyryl lithium in a solvent. The polystyryl lithium functions as an initiator for the anionic polymerization reaction of polystyrene which is the product PR. As the solvent, tetrahydrofuran is used. In addition, a small amount of toluene and a small amount of hexane are mixed in the solution. A raw material for the flow reaction may be a mixture of a reactant such as polystyryl lithium and another substance, such as the first raw material RM1, or may be made of only a reactant.

Similar to the first raw material supply unit 20, the second raw material supply unit 21 is connected to the upstream end of the reaction section 22 by a pipe (not illustrated). The second raw material supply unit 21 supplies a second raw material RM2 to the reaction section 22. Similar to the first raw material supply unit 20, the second raw material supply unit 21 also includes a pump for transporting the second raw material RM2 to the reaction section 22. By controlling a rotation speed of the pump, a flow rate of the second raw material RM2 which is transported from the second raw material supply unit 21 to the reaction section 22 is adjusted.

In the example, the second raw material RM2 is an aqueous methanol solution. Methanol is used as a terminator for an anionic polymerization reaction.

The reaction section 22 is a section for performing a flow reaction (in the example, anionic polymerization reaction). The reaction section 22 includes a junction portion 30 and a reaction portion 31. The junction portion 30 includes a first pipe portion 32, a second pipe portion 33, and a third pipe portion 34. The first pipe portion 32 and the second pipe portion 33 are connected in a straight line, and the third pipe portion 34 intersects with the first pipe portion 32 and the second pipe portion 33 at a right angle. That is, the junction portion 30 has a T-shape.

The first pipe portion 32 is connected to the first raw material supply unit 20, and the second pipe portion 33 is connected to the second raw material supply unit 21. Further, the third pipe portion 34 is connected to the reaction portion 31. The first raw material RM1 is supplied from the first raw material supply unit 20 to the first pipe portion 32, and the second raw material RM2 is supplied from the second raw material supply unit 21 to the second pipe portion 33. The first raw material RM1 and the second raw material RM2 are mixed in the third pipe portion 34, and are transported to the reaction portion 31 in a mixed state.

A first flow velocity sensor 35 that detects a flow velocity of the first raw material RM1 passing through the first pipe portion 32 is provided in the first pipe portion 32. In addition, a second flow velocity sensor 36 that detects a flow velocity of the second raw material RM2 passing through the second pipe portion 33 is provided in the second pipe portion 33. Further, a third flow velocity sensor 37 that detects a flow velocity of the mixture of the first raw material RM1 and the second raw material RM2 passing through the third pipe portion 34 is provided in the third pipe portion 34.

The reaction portion 31 is an elongated pipe obtained by connecting a plurality of linear-shaped pipes having the same inner diameter in a straight line. A length L of the reaction portion 31 may be changed by changing the number of linear-shaped pipes to be connected and/or lengths of the linear-shaped pipes. Further, the inner diameter Ø of the reaction portion 31 may be changed by changing the inner diameter of the linear-shaped pipe to be connected.

The inside of the reaction portion 31 is a flow path through which the mixture of the first raw material RM1 and the second raw material RM2 flows, and is a portion at which a flow reaction is performed. In a case where the mixture passes through the reaction portion 31, a flow reaction is promoted, and thus a polystyrene solution is obtained. The flow reaction is slightly promoted in the third pipe portion 34 of the junction portion 30. On the other hand, a length of the third pipe portion 34 is very shorter than a length L of the reaction portion 31. For this reason, the length of the third pipe portion 34 is ignored, and the length L of the reaction portion 31 is regarded as a length of a reaction path, which is a length of a portion at which a flow reaction is performed. Similarly, the inner diameter Ø of the reaction portion 31 is regarded as a diameter of the reaction path, which is a diameter of a portion at which a flow reaction is performed.

The temperature control unit 23 includes a heater and/or a cooler, and controls a temperature inside the reaction portion 31 (hereinafter, referred to as a reaction temperature). A temperature sensor 38 for detecting the reaction temperature is provided at a downstream end of the reaction portion 31.

The recovery/discard section 24 is a section for recovering polystyrene which is the product PR and discarding a waste in which a reaction is failed. The recovery/discard section 24 includes a recovery unit 40 and a discard unit 41. The recovery unit 40 and the discard unit 41 are connected to the downstream end of the reaction portion 31 by a three-way valve 42. By using the three-way valve 42, switching between a recovery line that connects the reaction portion 31 and the recovery unit 40 and a discard line that connects the reaction portion 31 and the discard unit 41 can be performed.

The recovery unit 40 precipitates polystyrene from the polystyrene solution. The recovery unit 40 collects the precipitated polystyrene by filtering the solution. The collected polystyrene is dried. More specifically, the recovery unit 40 includes a container with a stirrer, and precipitates polystyrene by filling the container with methanol and mixing the polystyrene solution into the stirred methanol. Further, the recovery unit 40 includes a constant-temperature tank with a depressurization function, and dries the methanol by heating the inside of the constant-temperature tank in a depressurization state.

The discard unit 41 is a tank for storing a waste. Here, the waste is transported from the reaction portion 31 in a case where the flow velocity of the first raw material RM1, the flow velocity of the second raw material RM2, the flow velocity of the mixture, the reaction temperature, or the like is disturbed for some reason and, as a result, production cannot be performed under originally-predetermined production conditions.

The setting unit 25 receives setting of production conditions of the production process of the product PR by an operator of the flow reaction apparatus 13. The production conditions received by the setting unit 25 are registered in the system controller 26, as the production condition data PCD which is set in the production process of the product PR.

The system controller 26 overall controls operations of the entire flow reaction apparatus 13. The system controller 26 is connected to the first raw material supply unit 20, the second raw material supply unit 21, the temperature control unit 23, the first flow velocity sensor 35, the second flow velocity sensor 36, the third flow velocity sensor 37, the temperature sensor 38, and the three-way valve 42.

The system controller 26 adjusts the flow rate of the first raw material RM1 by controlling the rotation speed of the pump of the first raw material supply unit 20 according to the flow velocity of the first raw material RM1 that is detected by the first flow velocity sensor 35. Similarly, the system controller 26 adjusts the flow rate of the second raw material RM2 by controlling the rotation speed of the pump of the second raw material supply unit 21 according to the flow velocity of the second raw material RM2 that is detected by the second flow velocity sensor 36. In addition, the system controller 26 drives the temperature control unit 23 according to the reaction temperature detected by the temperature sensor 38. Further, the system controller 26 performs switching between the recovery line and the discard line by controlling the three-way valve 42.

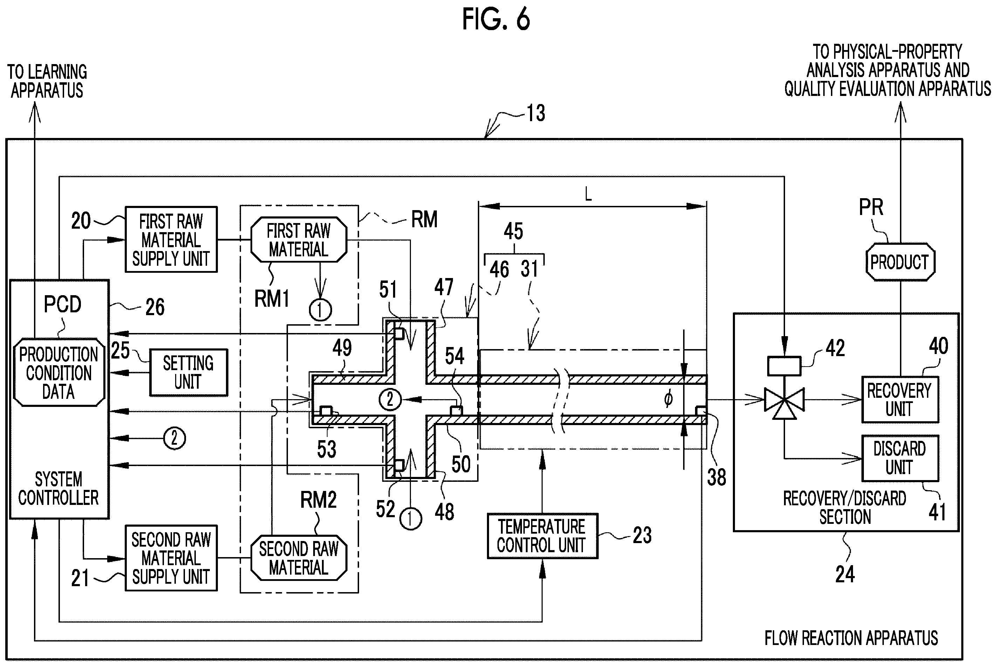

Instead of the reaction section 22, a reaction section 45 illustrated in Fig. 6 may be used. In Fig. 6, the same components as those in Fig. 5 are denoted by the same reference numerals, and a description thereof will be omitted.

The junction portion 46 of the reaction section 45 illustrated in Fig. 6 includes a first pipe portion 47, a second pipe portion 48, a third pipe portion 49, and a fourth pipe portion 50. The first pipe portion 47 and the second pipe portion 48 are connected in a straight line. Similarly, the third pipe portion 49 and the fourth pipe portion 50 are connected in a straight line. The first pipe portion 47 intersects with the third pipe portion 49 at a right angle, and the second pipe portion 48 intersects with the fourth pipe portion 50 at a right angle. That is, the junction portion 46 has a cross shape.

The first pipe portion 47 and the second pipe portion 48 are connected to the first raw material supply unit 20, and the third pipe portion 49 is connected to the second raw material supply unit 21. Further, the fourth pipe portion 50 is connected to the reaction portion 31. The first raw material RM1 is supplied from the first raw material supply unit 20 to the first pipe portion 47 and the second pipe portion 48, and the second raw material RM2 is supplied from the second raw material supply unit 21 to the third pipe portion 49. The first raw material RM1 and the second raw material RM2 are mixed in the fourth pipe portion 50, and are transported to the reaction portion 31 in a mixed state.

A first flow velocity sensor 51 and a second flow velocity sensor 52 that detect the flow velocity of the first raw material RM1 passing through the first pipe portion 47 and the second pipe portion 48 are provided in the first pipe portion 47 and the second pipe portion 48. In addition, a third flow velocity sensor 53 that detects the flow velocity of the second raw material RM2 passing through the third pipe portion 49 is provided in the third pipe portion 49. Further, a fourth flow velocity sensor 54 that detects the flow velocity of the mixture of the first raw material RM1 and the second raw material RM2 passing through the fourth pipe portion 50 is provided in the fourth pipe portion 50.

In this case, the system controller 26 adjusts the flow rate of the first raw material RM1 by controlling the rotation speed of the pump of the first raw material supply unit 20 according to an average value of the flow velocity of the first raw material RM1 that is detected by the first flow velocity sensor 51 and the flow velocity of the first raw material RM1 that is detected by the second flow velocity sensor 52. Further, the system controller 26 adjusts the flow rate of the second raw material RM2 by controlling the rotation speed of the pump of the second raw material supply unit 21 according to the flow velocity of the second raw material RM2 that is detected by the third flow velocity sensor 53.

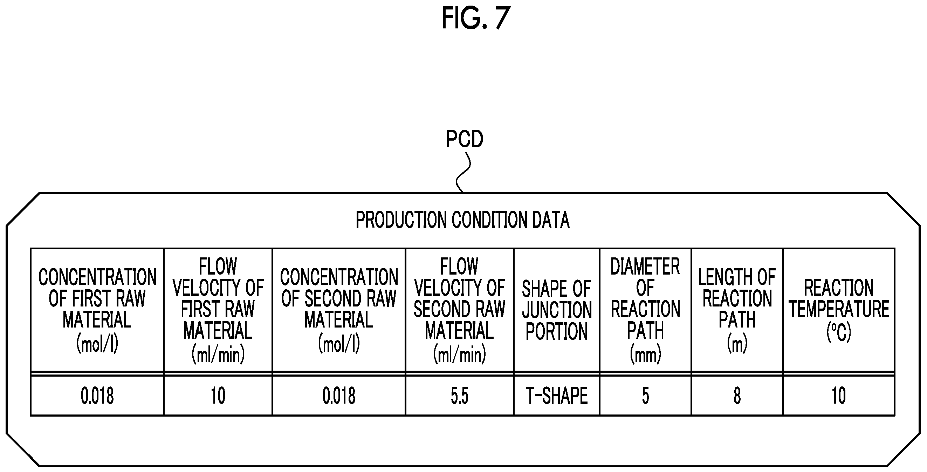

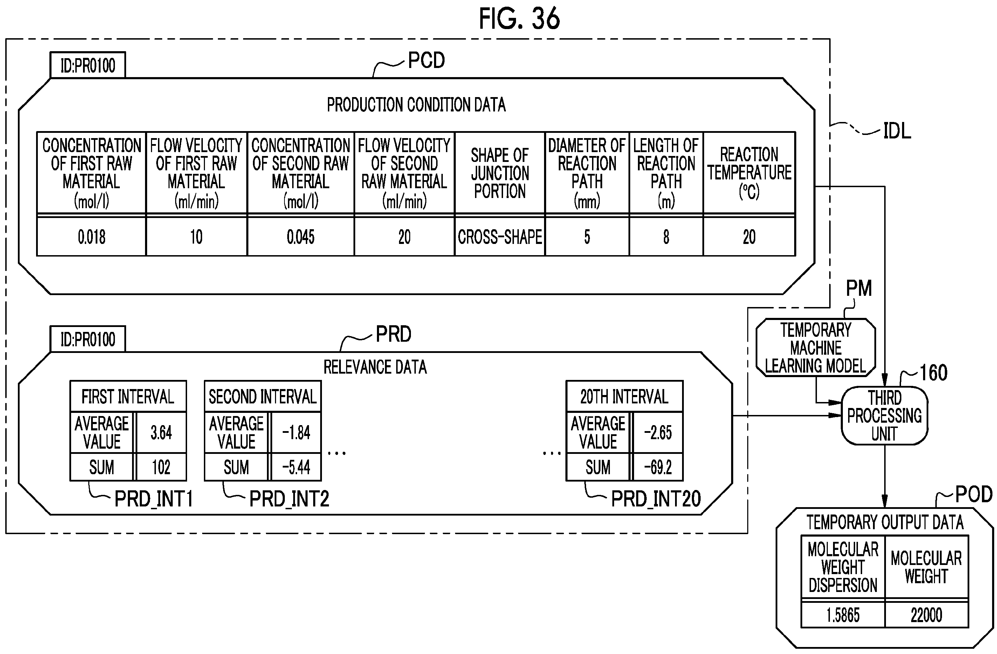

In Fig. 7, the production condition data PCD includes items of a concentration (unit: mol/l) and a flow velocity (unit: ml/min) of the first raw material RM1, a concentration (unit: mol/l) and a flow velocity (unit: ml/min) of the second raw material RM2, a shape of the junction portion, a diameter Ø (unit: mm) of the reaction path, a length L (unit: m) of the reaction path, and a reaction temperature (unit: °C). In the item of the shape of the junction portion, in a case where the reaction section 22 illustrated in Fig. 5 is used, "T-shape" illustrated in Fig. 7 is registered, and in a case where the reaction section 45 illustrated in Fig. 6 is used, "cross-shape" (refer to Fig. 36) is registered. The flow velocity of the mixture may be added as an item of the production condition data PCD.

In a case where the reaction section 22 is used, the system controller 26 adjusts the flow rate of the first raw material RM1 by controlling the rotation speed of the pump of the first raw material supply unit 20 such that the flow velocity of the first raw material RM1 detected by the first flow velocity sensor 35 matches with the flow velocity of the first raw material RM1 registered in the production condition data PCD. Similarly, the system controller 26 adjusts the flow rate of the second raw material RM2 by controlling the rotation speed of the pump of the second raw material supply unit 21 such that the flow velocity of the second raw material RM2 detected by the second flow velocity sensor 36 matches with the flow velocity of the second raw material RM2 registered in the production condition data PCD.

In a case where the reaction section 45 is used, the system controller 26 adjusts the flow rate of the first raw material RM1 by controlling the rotation speed of the pump of the first raw material supply unit 20 such that an average value of the flow velocity of the first raw material RM1 detected by the first flow velocity sensor 51 and the flow velocity of the first raw material RM1 detected by the second flow velocity sensor 52 matches with the flow velocity of the first raw material RM1 registered in the production condition data PCD. Similarly, the system controller 26 adjusts the flow rate of the second raw material RM2 by controlling the rotation speed of the pump of the second raw material supply unit 21 such that the flow velocity of the second raw material RM2 detected by the third flow velocity sensor 53 matches with the flow velocity of the second raw material RM2 registered in the production condition data PCD.

Further, the system controller 26 drives the temperature control unit 23 such that the reaction temperature detected by the temperature sensor 38 matches with a reaction temperature registered in the production condition data PCD.

In a case where a deviation between each value detected by each of the sensors 35, 36, 38, 51, 52, and 53 and each value registered in the production condition data PCD exceeds a preset range, the system controller 26 controls the three-way valve 42 to perform switching to the discard line and guide the waste to the discard unit 41. In a case where the reaction fails and the waste is generated, of course, the physical-property data PD and the quality data QD are not output. Therefore, in a case where the waste is generated, the production condition data PCD is discarded without being transmitted to the learning apparatus 10.

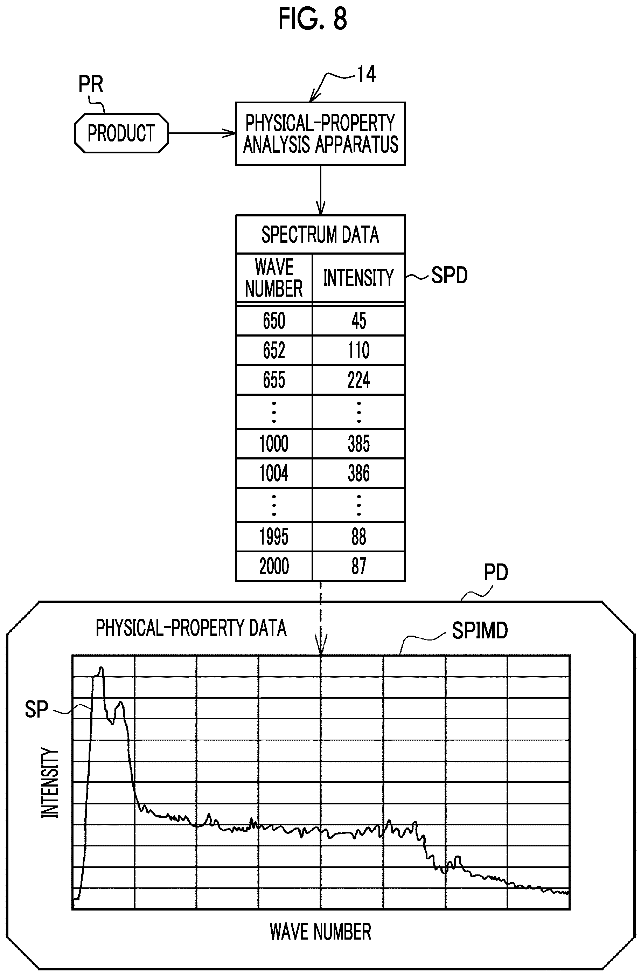

In Fig. 8, the physical-property analysis apparatus 14 detects spectrum data SPD by performing spectroscopic analysis on the product PR. The physical-property analysis apparatus 14 performs, as spectroscopic analysis, for example, near-infrared spectroscopic analysis, Fourier transform infrared spectroscopic analysis, Raman spectroscopic analysis, and nuclear magnetic resonance spectroscopic analysis. The spectrum data SPD illustrated in Fig. 8 is obtained by Raman spectroscopic analysis, and includes a set of a wave number and an intensity. A spectrum SP is obtained by plotting the intensity of the spectrum data SPD for each wave number and connecting the intensities with a line. In the example, image data SPIMD of the spectrum SP is the physical-property data PD. The image data SPIMD of the spectrum SP is an example of "multi-dimensional physical-property data" according to the technique of the present disclosure. The spectrum data SPD may include a set of a wavelength and an intensity instead of the set of the wave number and the intensity.

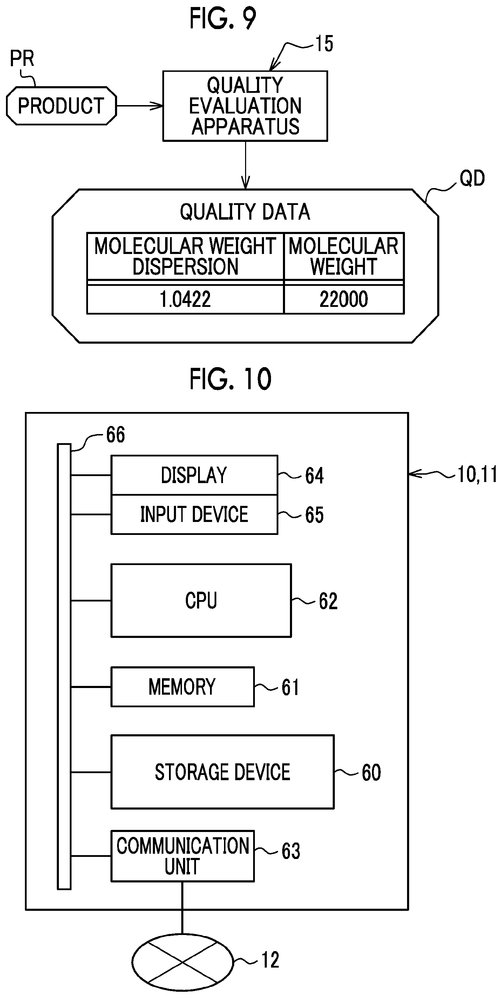

In Fig. 9, the quality evaluation apparatus 15 outputs, as the quality data QD, a molecular weight dispersion and a molecular weight of the product PR. Here, the molecular weight is a number average molecular weight. Further, the molecular weight dispersion is a value obtained by dividing a weight-average molecular weight by the number average molecular weight. The quality evaluation apparatus 15 obtains the molecular weight dispersion and the molecular weight by gel permeation chromatography (hereinafter, abbreviated as GPC) using, for example, a polystyrene solution obtained by dissolving polystyrene which is the product PR in tetrahydrofuran.

GPC is performed under the following conditions.

Apparatus: HLC-8220GPC (manufactured by Tosoh Corporation)
Detector: Differential refractometer (refractive index (RI) detector)
Pre-column: TSKGUARDCOLUMN HXL-L 6 mm x 40 mm (manufactured by Tosoh Corporation)
Sample-side column: Following three columns (1) to (3) are directly connected in order (all manufactured by Tosoh Corporation)

(1) TSK-GEL GMHXL 7.8 mm x 300 mm
(2) TSK-GEL G4000HXL 7.8 mm x 300 mm
(3) TSK-GEL G2000HXL 7.8 mm x 300 mm

Reference-side column: TSK-GEL G1000HXL 7.8 mm x 300 mm
Temperature of constant-temperature tank: 40°C
Movement layer: tetrahydrofuran
Flow rate of sample-side movement layer: 1.0 ml/min
Flow rate of reference-side movement layer: 1.0 ml/min
Concentration of sample : 0.1% by mass
Injection amount of sample: 100 $\mu$l
Collection time of data: 5 to 45 minutes after injection of sample
Sampling pitch: 300 msec

Instead of GPC, various methods such as infrared spectroscopic analysis, nuclear magnetic resonance spectroscopic analysis, high performance liquid chromatography (HPLC), or gas chromatography (GC) may be used. Further, the quality data QD is not limited to the molecular weight dispersion and the molecular weight of the product PR. In a case where the product PR is obtained in a state of a solution, a molar concentration which is a concentration of the product PR in the solution may be used as the quality data QD. Alternatively, a yield of the product PR that is obtained by dividing an amount of the product PR by an amount of the raw material RM may be used as the quality data QD. Further, in a case where a by-product is produced, a yield of the by-product may be used as the quality data QD.

In Fig. 10, the computer including the learning apparatus 10 and the computer including the operating apparatus 11 have the same basic configuration, and each of the computers includes a storage device 60, a memory 61, a central processing unit (CPU) 62, a communication unit 63, a display 64, and an input device 65. The components are connected to each other via a bus line 66.

The storage device 60 is a hard disk drive that is built in the computer including the learning apparatus 10 or the like or is connected via a cable or a network. Alternatively, the storage device 60 is a disk array in which a plurality of hard disk drives are connected in series. The storage device 60 stores a control program such as an operating system, various application programs, and various data associated with the programs. A solid state drive may be used instead of or in addition to the hard disk drive.

The memory 61 is a work memory which is necessary to execute processing by the CPU 62. The CPU 62 loads the program stored in the storage device 60 into the memory 61, and collectively controls each unit of the computer by executing processing according to the program.

The communication unit 63 is a network interface that controls transmission of various information via the network 12. The display 64 displays various screens. The computer constituting the learning apparatus 10 or the like receives an input of an operation instruction from the input device 65 via the various screens. The input device 65 includes a keyboard, a mouse, a touch panel, and the like.

In the following description, in order to distinguish the components, a subscript "A" is attached to each component of the learning apparatus 10, and a subscript "B" is attached to each component of the operating apparatus 11.

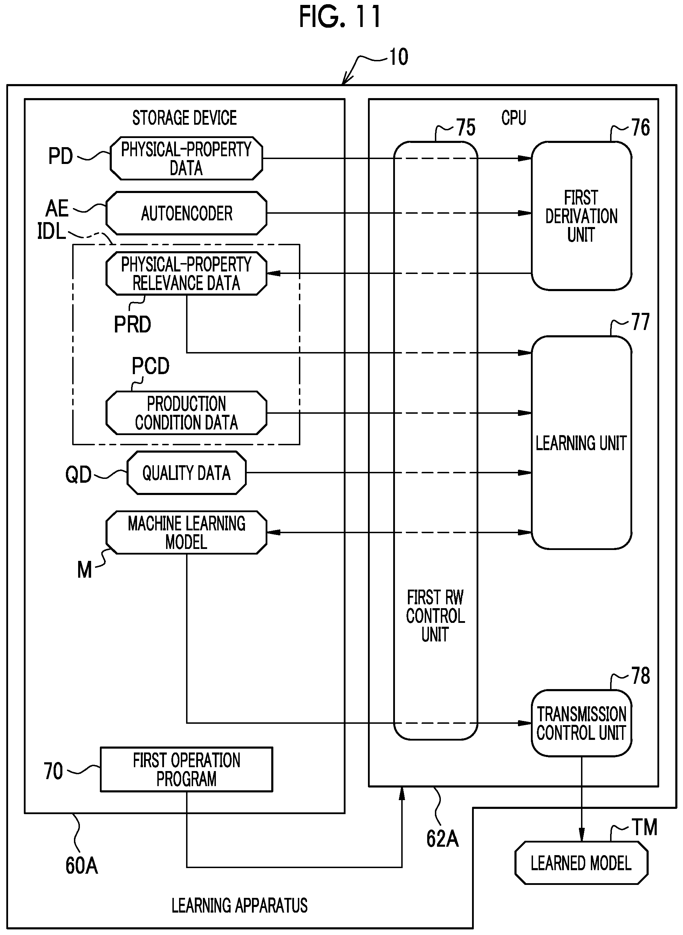

In Fig. 11, a first operation program 70 is stored in the storage device 60A of the learning apparatus 10. The first operation program 70 is an application program for causing the computer to function as the learning apparatus 10. That is, the first operation program 70 is an example of "the operation program of the learning apparatus" according to the technique of the present disclosure.

The storage device 60A also stores the production condition data PCD of the production process of the product PR from the flow reaction apparatus 13, the physical-property data PD from the physical-property analysis apparatus 14, and the quality data QD from the quality evaluation apparatus 15. In addition, the storage device 60A stores an autoencoder AE. Further, the storage device 60A also stores the relevance data PRD, which is derived from the physical-property data PD by using the autoencoder AE, and the machine learning model M. A plurality of sets of the production condition data PCD, the physical-property data PD, the relevance data PRD, and the quality data QD are stored in the storage device 60A.

In a case where the first operation program 70 is started, the CPU 62A of the computer including the learning apparatus 10 functions as a first read/write (hereinafter, abbreviated as RW) control unit 75, a first derivation unit 76, a learning unit 77, and a transmission control unit 78, in cooperation with the memory 61 and the like.

The first RW control unit 75 controls reading of various data stored in the storage device 60A and storing of various data in the storage device 60A. The first RW control unit 75 reads the physical-property data PD and the autoencoder AE from the storage device 60A, and outputs the physical-property data PD and the autoencoder AE to the first derivation unit 76. Further, the first RW control unit 75 stores the relevance data PRD from the first derivation unit 76 in the storage device 60A. The first RW control unit 75 acquires the physical-property data PD by reading the physical-property data PD from the storage device 60A. That is, the first RW control unit 75 is an example of a "first acquisition unit" according to the technique of the present disclosure.

The first RW control unit 75 reads the relevance data PRD, the production condition data PCD, and the quality data QD from the storage device 60A, and outputs the read data to the learning unit 77. In addition, the first RW control unit 75 reads the machine learning model M from the storage device 60A, and outputs the machine learning model M to any of the learning unit 77 and the transmission control unit 78. Further, the first RW control unit 75 stores the machine learning model M from the learning unit 77 in the storage device 60A.

The first derivation unit 76 receives the physical-property data PD from the first RW control unit 75. The first derivation unit 76 derives the relevance data PRD by applying the autoencoder AE to the physical-property data PD. That is, the first derivation unit 76 is an example of a "derivation unit" according to the technique of the present disclosure. The first derivation unit 76 assigns the same ID as the ID of the physical-property data PD to the derived relevance data PRD, and outputs the relevance data PRD to the first RW control unit 75. The first derivation unit 76 derives the relevance data PRD each time new physical-property data PD is transmitted from the physical-property analysis apparatus 14.

The learning unit 77 receives the learning input data IDL, the quality data QD, and the machine learning model M from the first RW control unit 75. The learning unit 77 performs learning by inputting the learning input data IDL to the machine learning model M, and outputs a learned model TM.

The transmission control unit 78 receives the machine learning model M from the first RW control unit 75. The machine learning model M received by the transmission control unit 78 from the first RW control unit 75 is a learned model TM. The transmission control unit 78 performs a control for transmitting the learned model TM to the operating apparatus 11.

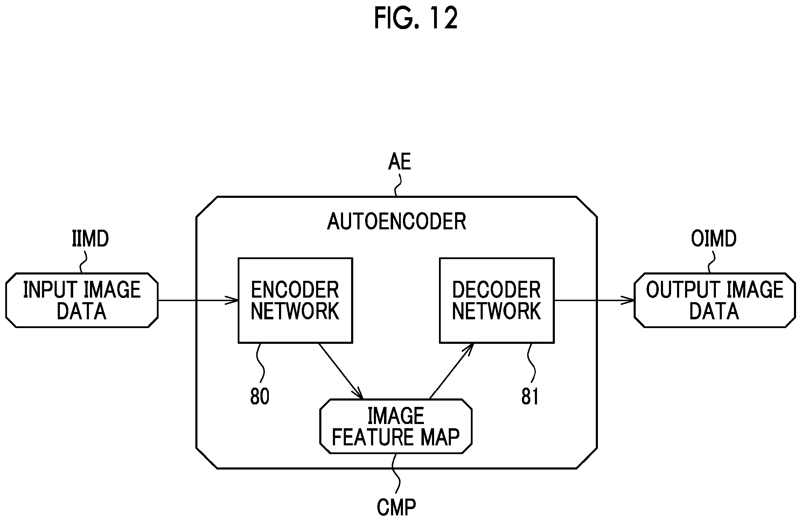

The autoencoder AE is a hierarchical machine learning model configured with a convolutional neural network that includes a plurality of layers for analyzing the input image data IIMD (refer to Fig. 12) and extracts, for each layer, features in different frequency bands of spatial frequencies included in the input image data IIMD. The convolutional neural network is, for example, an U-shaped neural network (U-Net), SegNet, or the like. In the example, the input image data IIMD is the image data SPIMD of the spectrum SP.

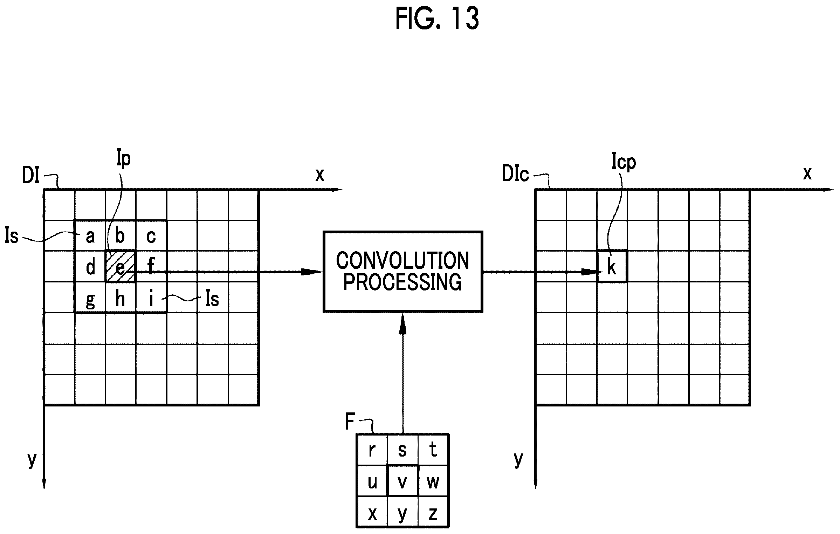

As illustrated in Fig. 12, the autoencoder AE includes an encoder network 80 and a decoder network 81. The encoder network 80 performs convolution processing for extracting an image feature map CMP by performing a convolution operation using a filter F (refer to Fig. 13) for each layer. The decoder network 81 gradually enlarges an image size of a minimum-size image feature map CMP which is output from a lowest layer of the encoder network 80. The image feature map CMP which is gradually enlarged and the image feature map CMP which is output in each layer of the encoder network 80 are combined with each other, and thus output image data OIMD having an image size similar to the image size of the input image data IIMD is generated. The output image data OIMD is an example of "output data" according to the technique of the present disclosure.

In each layer of the encoder network 80, input data DI (refer to Fig. 13) in which a plurality of pixel values are two-dimensionally arranged is input. In each layer of the encoder network 80, convolution processing is performed on the input data DI, and thus an image feature map CMP is extracted. The input image data IIMD is input to the uppermost first layer of the encoder network 80, as input data DI. In the first layer, convolution processing is performed on the input image data IIMD, and thus, for example, an image feature map CMP having the same image size as the input image data IIMD is output. In the second layer and the lower layers, the image feature map CMP output by each higher layer is input as input data DI. In the second layer and the lower layers, convolution processing is performed on the image feature map CMP, and thus, for example, an image feature map CMP having the same image size as the input image feature map CMP is output.

In Fig. 13, the convolution processing is processing of obtaining output data DIc in which the pixel values are two-dimensionally arranged in the same manner as the input data DI by applying, for example, a $3\times3$ filter F to the input data DI, and convolving a pixel value e of an attention pixel Ip in the input data DI and pixel values a, b, c, d, f, g, h, and i of eight pixels Is adjacent to the attention pixel Ip. In a case where coefficients of the filter F are r, s, t, u, v, w, x, y, and z, a pixel value k of a pixel Icp of the output data DIc, which is a result of a convolution operation on the attention pixel Ip, is obtained by, for example, calculating the following Equation 1.

$$k = az + by + cx + dw + ev + fu + gt + hs + ir \cdots \text{(Equation 1)}$$

In the convolution processing, the pixel value k is output by performing the convolution operation on each pixel of the input data DI. In this way, the output data DIc in which the pixel values k are two-dimensionally arranged is output. One piece of the output data DIc is output in correspondence with one filter F. In a case where a plurality of filters F having different types are used, the output data DIc is output for each filter F.

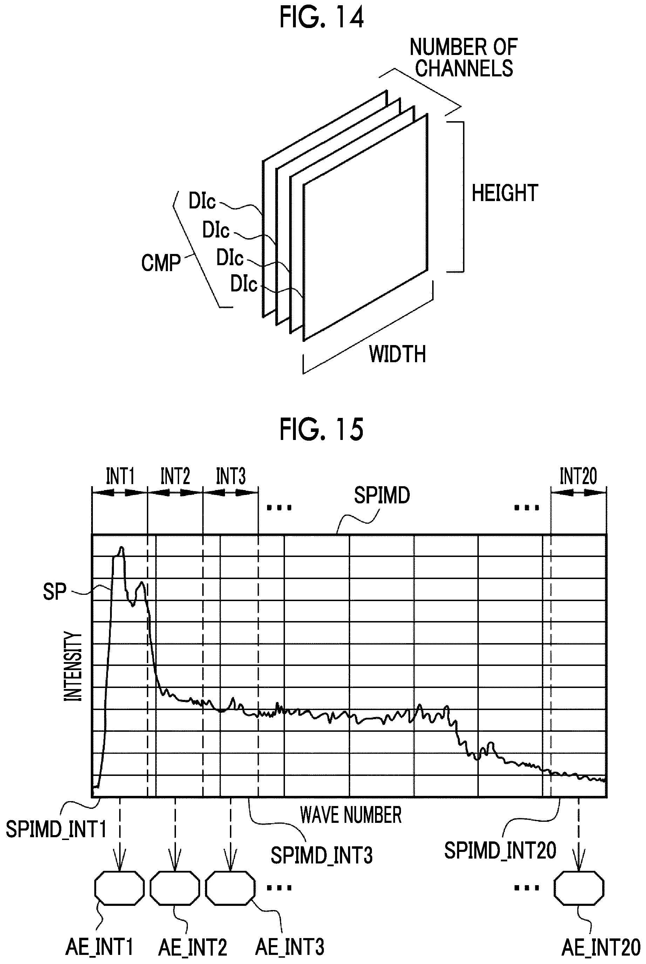

As illustrated in Fig. 14, the output data DIc is data in which the pixel values k are two-dimensionally arranged, and has a width and a height. Further, in a case where a plurality of pieces of output data DIc are output by applying a plurality of filters F having different types, the image feature map CMP is a set of the plurality of pieces of output data DIc. In the image feature map CMP, the number of filters F is called the number of channels. The image feature map CMP illustrated in Fig. 14 is an example of a 4-channel image feature map CMP including four pieces of output data DIc which are output by applying four filters F.

As illustrated in Fig. 15, the autoencoder AE is prepared for each of the plurality of intervals of the spectrum data SPD. In Fig. 15, as the plurality of intervals by which the spectrum data SPD is divided, 20 intervals INT1, INT2, INT3, $\cdots$, and INT20 for dividing the spectrum data SPD into 20 equal parts are illustrated. Fig. 15 illustrates a case where the autoencoders AE_INT1 to AE_INT20 are prepared for the intervals INT1 to INT20. The autoencoders AE_INT1 to AE_INT20 are specialized for pieces of the image data SPIMD_INT1 to SPIMD_INT20 of the spectrum SP in the intervals INT1 to INT20. In the following description, the autoencoders AE_INT1 to AE_INT20 may be collectively referred to as the autoencoder AE.

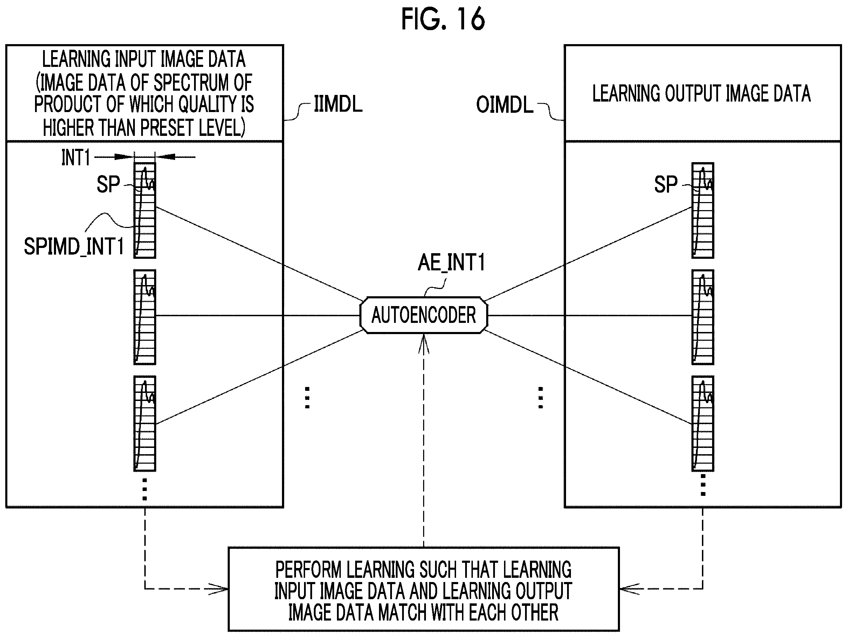

As illustrated in Fig. 16, the image data SPIMD of the spectrum SP of the product PR of which the quality is higher than the preset level is input to the autoencoder AE, as the learning input image data IIMDL. The autoencoder AE is learned such that the learning input image data IIMDL and the learning output image data OIMDL match with each other. That is, in a case where the image data SPIMD of the spectrum SP of the product PR of which the quality is higher than the preset level is input as the input image data IIMD, ideally, the autoencoder AE outputs the output image data OIMD of which the spectrum SP has the same shape as the spectrum SP of the input image data IIMD. The preset level means, for example, that the molecular weight dispersion is equal to or higher than 1.5, or that the molecular weight is equal to or larger than 25,000.

Fig. 16 illustrates the autoencoder AE_INT1 of the autoencoders AE_INT1 to AE _INT20. Thus, the learning input image data IIMDL is the image data SPIMD_INT1 of the spectrum SP in the interval INT1.

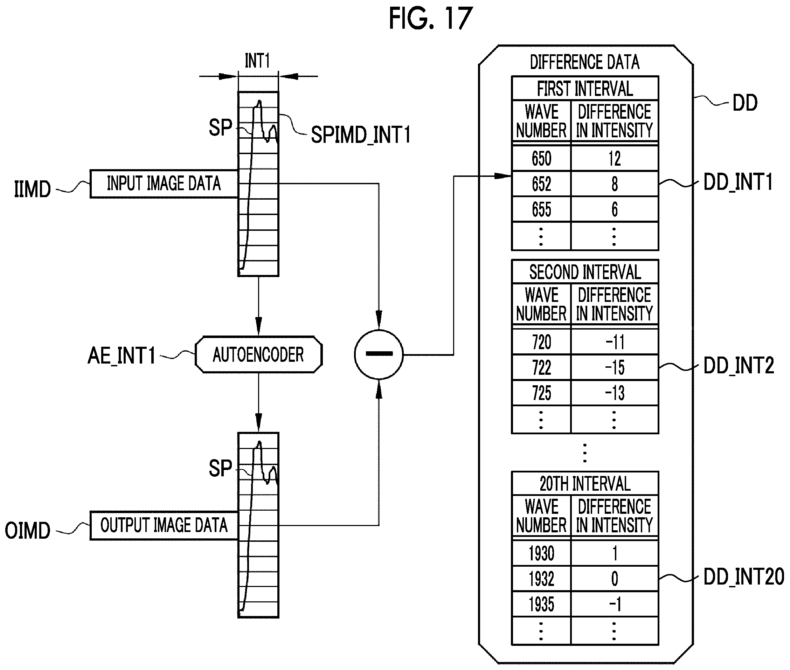

As illustrated in Fig. 17, the first derivation unit 76 outputs the output image data OIMD by inputting, as the input image data IIMD, the image data SPIMD of the spectrum SP to the autoencoder AE. Next, the first derivation unit 76 derives the difference data DD between the input image data IIMD and the output image data OIMD. Specifically, the first derivation unit 76 derives, as the difference data DD, a difference in the intensity of each wave number between the input image data IIMD and the output image data OIMD for each of the intervals INT1 to INT20.

In Fig. 17, as in Fig. 16, only the autoencoder AE_INT1 is illustrated. As the input image data IIMD, the image data SPIMD_INT1 of the spectrum SP in the interval INT1 is input to the autoencoder AE_INT1. The difference data DD_INT1 in the interval INT1 is derived based on the input image data IIMD and the output image data OIMD of the autoencoder AE_INT1.

Here, as illustrated in Fig. 16, the autoencoder AE is learned by inputting, as the learning input image data IIMDL, the image data SPIMD of the spectrum SP of the product PR of which the quality is higher than the preset level. Thus, in a case where the quality of the product PR which is a source of the input image data IIMD is higher than the preset level, the output image data OIMD substantially the same as the input image data IIMD is output from the autoencoder AE. Therefore, the difference in the intensity is relatively small. On the contrary, in a case where the quality of the product PR is equal to or lower than the preset level, the output image data OIMD different from the input image data IIMD is output from the autoencoder AE. Therefore, the difference in the intensity is relatively large. That is, according to the difference data DD, the operator can recognize whether or not the quality of the product PR is higher than the preset level.

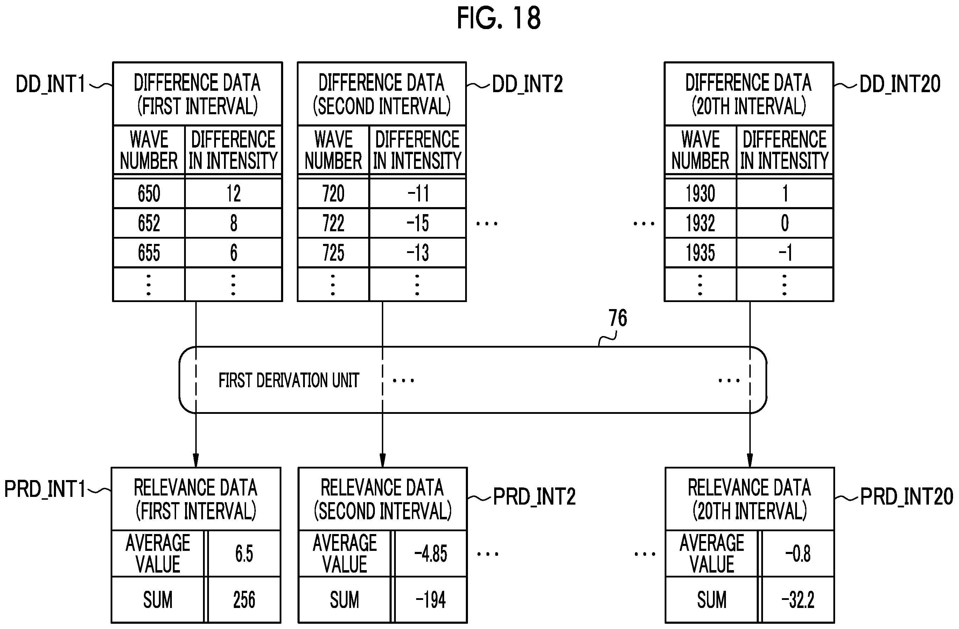

As illustrated in Fig. 18, the first derivation unit 76 derives pieces of the relevance data PRD_INT1, PRD _INT2, ⋯, and PRD_INT20 for each of pieces of the difference data DD_INT1, DD_INT2, ⋯, and DD_INT20 in each of the intervals INT1 to INT20. Specifically, the first derivation unit 76 derives, as pieces of the relevance data PRD_INT1 to PRD _INT20, an average value and a sum of the differences in the intensity in each of the intervals INT1 to INT20. Each of the pieces of the relevance data PRD_INT1 to PRD_INT20 is an example of "multi-dimensional physical-property relevance data" according to the technique of the present disclosure. In a case of the example, the total number of items of the relevance data PRD obtained by integrating the pieces of the relevance data PRD_INT1 to PRD_INT20 is $2\times20=40$ because there are two types of the representative values including the average value and the sum of the differences in the intensity and the intervals include 20 intervals. Instead of or in addition to the average value and the sum of the differences in the intensity, other representative values such as a maximum value, a minimum value, a median value, and a variance of the differences in the intensity may be derived as the relevance data PRD.

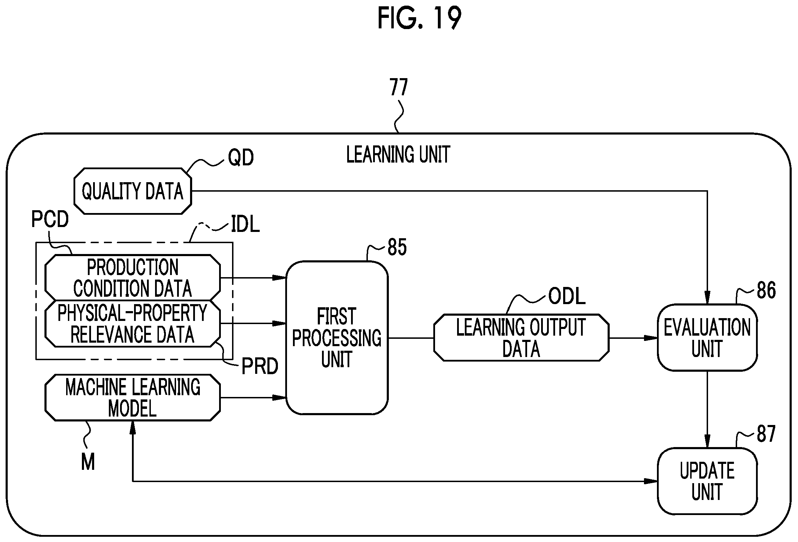

As illustrated in Fig. 19, the learning unit 77 includes a first processing unit 85, an evaluation unit 86, and an update unit 87. The first processing unit 85 outputs learning output data ODL from the machine learning model M by inputting the learning input data IDL to the machine learning model M. The learning output data ODL includes the molecular weight dispersion and the molecular weight, similar to the quality data QD (refer to Fig. 20 and the like). The first processing unit 85 outputs the learning output data ODL to the evaluation unit 86.

The evaluation unit 86 receives the learning output data ODL from the first processing unit 85. The evaluation unit 86 evaluates an accuracy of prediction of the machine learning model M by comparing the learning output data ODL and the quality data QD. The evaluation unit 86 outputs an evaluation result to the update unit 87.

The evaluation unit 86 evaluates an accuracy of prediction of the machine learning model M using, for example, a loss function. The loss function is a function that represents a degree of a difference between the learning output data ODL and the quality data QD. As a calculated value of the loss function is closer to 0, an accuracy of prediction of the machine learning model M is higher.

The update unit 87 updates the machine learning model M according to the evaluation result from the evaluation unit 86. For example, the update unit 87 changes various parameter values of the machine learning model M by a stochastic gradient descent method or the like using a learning coefficient. The learning coefficient indicates a change range in various parameter values of the machine learning model M. That is, as the learning coefficient has a relatively large value, the change range in various parameter values becomes wider, and thus, an update level of the machine learning model M becomes higher.

The inputting of the learning input data IDL to the machine learning model M and the outputting of the learning output data ODL to the evaluation unit 86 by the first processing unit 85, the evaluation of the accuracy of prediction by the evaluation unit 86, and the updating of the machine learning model M by the update unit 87 are repeated until the accuracy of prediction reaches a preset level.

As illustrated in Fig. 20, the first processing unit 85 inputs the learning input data IDL including the production condition data PCD and the relevance data PRD to the machine learning model M. The evaluation unit 86 evaluates an accuracy of prediction of the machine learning model M, and the update unit 87 updates the machine learning model M. By repeating the processing while changing the learning input data IDL, the accuracy of prediction of the machine learning model M reaches a preset level. The machine learning model M of which the accuracy of prediction reaches a preset level is stored in the storage device 60A by the first RW control unit 75, as the learned model TM.

In Fig. 21, a second operation program 110 is stored in the storage device 60B of the operating apparatus 11. The second operation program 110 is an application program for causing the computer to function as the operating apparatus 11.

The storage device 60B also stores the learned model TM from the learning apparatus 10, the autoencoder AE which is the same as the autoencoder AE of the learning apparatus 10, and the physical-property data for prediction PDF from the physical-property analysis apparatus 14. In addition, the storage device 60B also stores the production condition data for prediction PCDF. The production condition data for prediction PCDF is input via the input device 65B by the operator. More specifically, an input screen including input boxes for each item of the production condition data for prediction PCDF is displayed on the display 64B, and the production condition data for prediction PCDF is input via the input screen. The production condition data for prediction PCDF and the physical-property data for prediction PDF are the production condition data PCD and the physical-property data PD of the product PR of which a quality is unknown, and are used to predict the quality by using the learned model TM.

Further, the storage device 60B also stores the physical-property relevance data for prediction (hereinafter, abbreviated as relevance data for prediction) PRDF derived from the physical-property data for prediction PDF.

In a case where the second operation program 110 is started, the CPU 62B of the computer including the operating apparatus 11 functions as a second RW control unit 115, a second derivation unit 116, a second processing unit 117, and a display control unit 118 in cooperation with the memory 61 and the like.

Similar to the first RW control unit 75 of the learning apparatus 10, the second RW control unit 115 controls reading of various data stored in the storage device 60B and storing of various data in the storage device 60B. The second RW control unit 115 reads the physical-property data for prediction PDF and the autoencoder AE from the storage device 60B, and outputs the physical-property data for prediction PDF and the autoencoder AE to the second derivation unit 116. Further, the second RW control unit 115 stores the relevance data for prediction PRDF from the second derivation unit 116 in the storage device 60B.

The second RW control unit 115 reads the learned model TM from the storage device 60B, and outputs the learned model TM to the second processing unit 117. The second RW control unit 115 acquires the learned model TM by reading the learned model TM from the storage device 60B. That is, the second RW control unit 115 is an example of a "second acquisition unit" according to the technique of the present disclosure.

The second RW control unit 115 reads the relevance data for prediction PRDF and the production condition data for prediction PCDF from the storage device 60B, and outputs the read data to the second processing unit 117. The second RW control unit 115 acquires the relevance data for prediction PRDF by reading the relevance data for prediction PRDF from the storage device 60B. That is, the second RW control unit 115 is an example of a "third acquisition unit" according to the technique of the present disclosure.

The second derivation unit 116 receives the physical-property data for prediction PDF and the autoencoder AE from the second RW control unit 115. The second derivation unit 116 derives the relevance data for prediction PRDF from the physical-property data for prediction PDF. More specifically, similar to the first derivation unit 76 of the learning apparatus 10, the second derivation unit 116 derives an average value and a sum of the differences in the intensity for each of the plurality of intervals INT1 to INT20 obtained by dividing the spectrum data SPD.

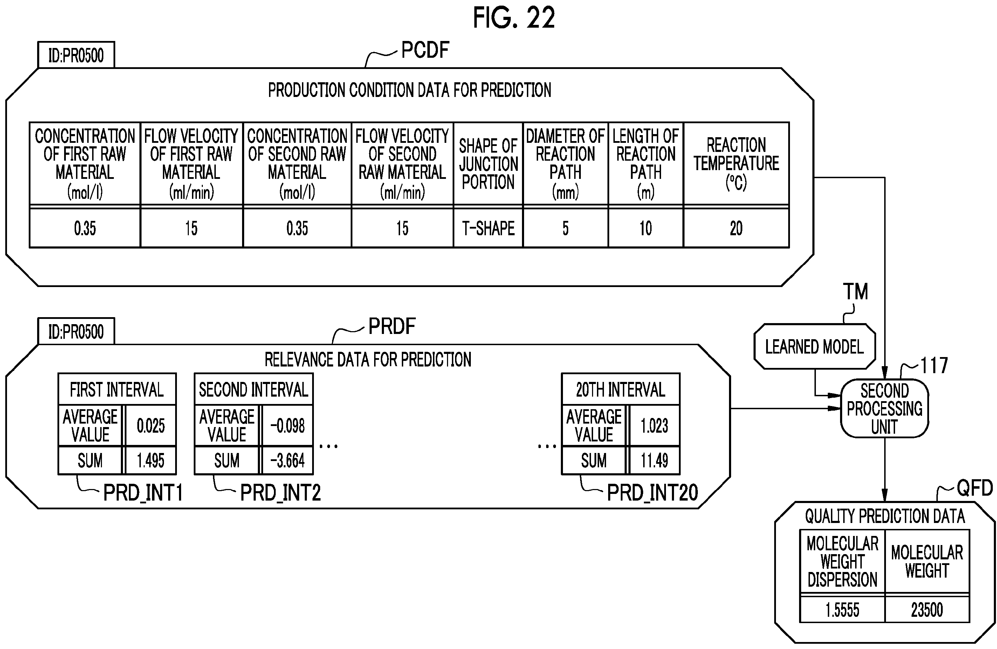

The second processing unit 117 receives the production condition data for prediction PCDF, the relevance data for prediction PRDF, and the learned model TM from the second RW control unit 115. The second processing unit 117 predicts a quality by inputting the production condition data for prediction PCDF and the relevance data for prediction PRDF to the learned model TM. That is, the second processing unit 117 is an example of a "processing unit" according to the technique of the present disclosure. The second processing unit 117 outputs quality prediction data QFD, which is a quality prediction result by the learned model TM, to the display control unit 118. The quality prediction data QFD includes the molecular weight dispersion and the molecular weight, similar to the quality data QD (refer to Fig. 22 and the like).

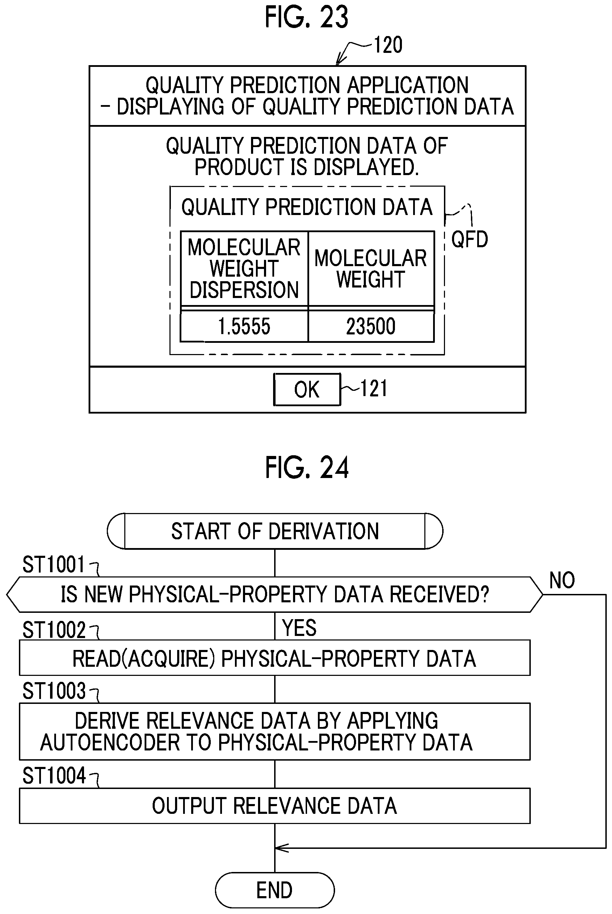

The display control unit 118 controls displaying of various screens on the display 64B. The various screens include a quality prediction display screen 120 (refer to Fig. 23) for displaying the quality prediction data QFD, in addition to the input screen for the production condition data for prediction PCDF. That is, the display control unit 118 is an example of an "output control unit" according to the technique of the present disclosure.

Fig. 22 illustrates a method of predicting the quality of the product PR of which an ID is PR0500 and of which the quality is unknown by using the learned model TM. The second processing unit 117 inputs the production condition data for prediction PCDF and the relevance data for prediction PRDF to the learned model TM.

In Fig. 23, on the quality prediction display screen 120 displayed on the display 64B under a control of the display control unit 118, the quality prediction data QFD which is output from the learned model TM is displayed. The display of the quality prediction display screen 120 disappears in a case where an OK button 121 is selected.

Next, an operation according to the configuration will be described with reference to flowcharts illustrated in Fig. 24 to Fig. 26. First, in a case where the first operation program 70 is started in the learning apparatus 10, as illustrated in Fig. 11, the CPU 62A of the learning apparatus 10 functions as the first RW control unit 75, the first derivation unit 76, the learning unit 77, and the transmission control unit 78. As illustrated in Fig. 19, the learning unit 77 functions as the first processing unit 85, the evaluation unit 86, and the update unit 87.

In Fig. 24, in the learning apparatus 10, in a case where new physical-property data PD from the physical-property analysis apparatus 14, in the example, the image data SPIMD of the spectrum SP is received and stored in the storage device 60A (YES in step ST1001), the first RW control unit 75 reads the image data SPIMD of the spectrum SP from the storage device 60A (step ST1002). The image data SPIMD of the spectrum SP is output from the first RW control unit 75 to the first derivation unit 76. The step ST1002 is an example of a "first acquisition step" according to the technique of the present disclosure.

As illustrated in Fig. 17, first, the first derivation unit 76 inputs the image data SPIMD of the spectrum SP to the autoencoder AE. Thereby, the difference data DD between the output image data OIMD which is output from the autoencoder AE and the image data SPIMD of the spectrum SP which is input to the autoencoder AE is derived. Next, as illustrated in Fig. 18, the first derivation unit 76 derives, as the relevance data PRD, an average value and a sum of the differences in the intensity, based on the difference data DD, for each of the plurality of intervals INT1 to INT20 obtained by dividing the spectrum data SPD (step ST1003). The relevance data PRD is output from the first derivation unit 76 to the first RW control unit 75 (step ST1004). The relevance data PRD is stored in the storage device 60A by the first RW control unit 75. The step ST1003 is an example of "a derivation step" according to the technique of the present disclosure.

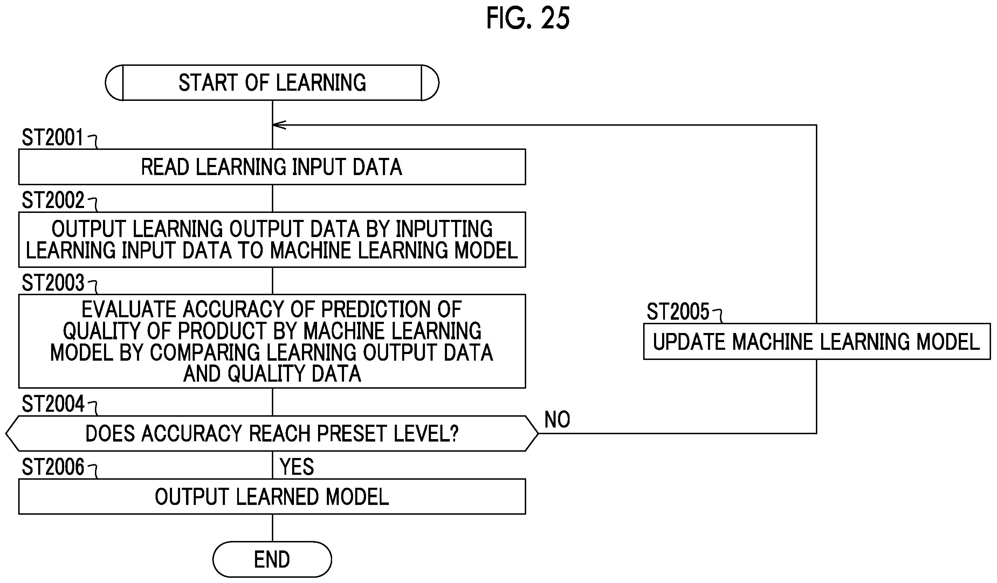

As illustrated in Fig. 25, in the learning apparatus 10, the first RW control unit 75 reads the learning input data IDL including a set of the production condition data PCD which is set in the production process of the product PR and the relevance data PRD, from the storage device 60A (step ST2001). The learning input data IDL is output from the first RW control unit 75 to the learning unit 77.

In the learning unit 77, as illustrated in Fig. 20, the first processing unit 85 outputs the learning output data ODL from the machine learning model M by inputting the learning input data IDL including the production condition data PCD and the relevance data PRD to the machine learning model M (step ST2002). The evaluation unit 86 evaluates the accuracy of prediction of the quality of the product PR by the machine learning model M by comparing the learning output data ODL and the quality data QD (step ST2003).

In a case where an evaluation result of the accuracy of prediction of the machine learning model M by the evaluation unit 86 includes content indicating that the accuracy of prediction of the machine learning model M is lower than a preset level (NO in step ST2004), the update unit 87 updates the machine learning model M (step ST2005). Processing of step ST2001, step ST2002, and step ST2003 is repeated by using the updated machine learning model M. In a case where the evaluation result of the accuracy of prediction of the machine learning model M by the evaluation unit 86 includes content indicating that the accuracy of prediction of the machine learning model M reaches a preset level (YES in step ST2004), the processing of step ST2001 to step ST2003 is ended. The machine learning model M of which the accuracy of prediction reaches a preset level is output from the learning unit 77 to the first RW control unit 75, as the learned model TM (step ST2006). The learned model TM is stored in the storage device 60A by the first RW control unit 75. The learned model TM is transmitted to the operating apparatus 11 by the transmission control unit 78. A series of step ST2001 to step ST2006 is an example of a "learning step" according to the technique of the present disclosure.

In a case where the second operation program 110 is started in the operating apparatus 11, as illustrated in Fig. 21, the CPU 62B of the operating apparatus 11 functions as the second RW control unit 115, the second derivation unit 116, the second processing unit 117, and the display control unit 118.

In the operating apparatus 11, the second RW control unit 115 reads the physical-property data for prediction PDF and the autoencoder AE from the storage device 60B, and outputs the physical-property data for prediction PDF and the autoencoder AE to the second derivation unit 116. The second derivation unit 116 derives an average value and a sum of the differences in the intensity, for each of the plurality of intervals INT1 to INT20 obtained by dividing the spectrum data SPD of the physical-property data for prediction PDF. In this way, the second derivation unit 116 derives the relevance data for prediction PRDF. The relevance data for prediction PRDF is stored in the storage device 60B by the second RW control unit 115.

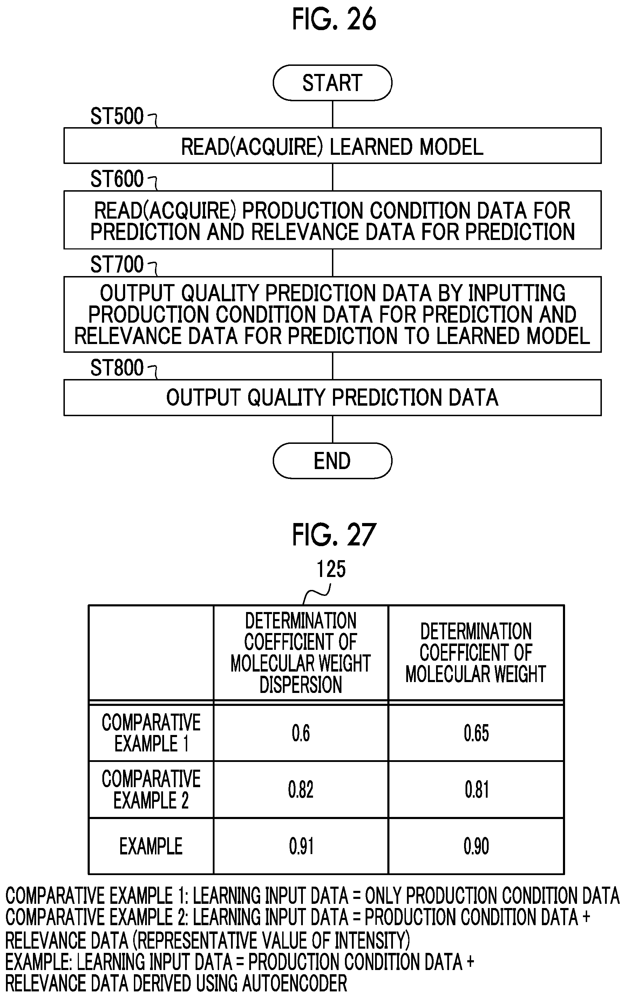

As illustrated in Fig. 26, in the operating apparatus 11, the second RW control unit 115 reads the learned model TM from the storage device 60B (step ST500). Further, the second RW control unit 115 reads, from the storage device 60B, the production condition data for prediction PCDF which is set in the production process of the product PR and the relevance data for prediction PRDF (step ST600). The learned model TM, the production condition data for prediction PCDF, and the relevance data for prediction PRDF are output from the second RW control unit 115 to the second processing unit 117.

As illustrated in Fig. 22, the second processing unit 117 outputs the quality prediction data QFD from the learned model TM by inputting the production condition data for prediction PCDF and the relevance data for prediction PRDF to the learned model TM (step ST700). The quality prediction data QFD is output from the second processing unit 117 to the display control unit 118.

The display control unit 118 displays the quality prediction display screen 120 illustrated in Fig. 23 on the display 64B (step ST800). The quality prediction display screen 120 allows the operator to browse the quality prediction data QFD.

As described above, in the learning apparatus 10, the first RW control unit 75 acquires the physical-property data PD, and the first derivation unit 76 derives, as the learning input data IDL, the relevance data PRD by applying the autoencoder AE to the physical-property data PD. The learning unit 77 performs learning by inputting the learning input data IDL including the relevance data PRD to the machine learning model M, and outputs the learned model TM. Therefore, numerical values (in the example, the average value and the sum of the differences in the intensity) that accurately represent the physical property of the product PR can be derived as the relevance data PRD, and thus it is possible to further improve the accuracy of prediction of the quality of the product PR by the learned model TM.

More specifically, as illustrated in a table 125 of Fig. 27, in the example in which the production condition data PCD and the relevance data PRD derived using the autoencoder AE are input as the learning input data IDL, a result is obtained that a determination coefficient of the molecular weight dispersion and a determination coefficient of the molecular weight are higher than those of Comparative Example 1 and Comparative Example 2. Comparative Example 1 corresponds to a case where learning is performed by inputting only the production condition data PCD as the learning input data IDL, and Comparative Example 2 corresponds to a case where learning is performed by inputting, as the learning input data IDL, the production condition data PCD and the relevance data PRD including the representative values of the intensity. In this way, in a case where learning is performed by inputting, as the learning input data IDL, the relevance data PRD derived using the autoencoder AE, it is confirmed that the accuracy of prediction of the quality of the product PR by the learned model TM can be further improved.

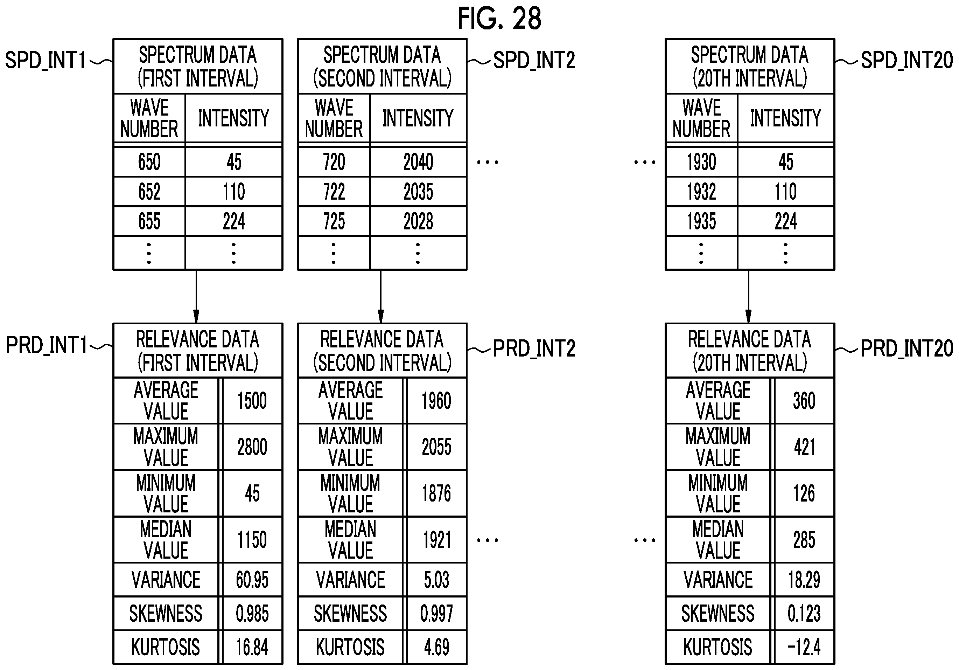

For example, as illustrated in Fig. 28, the relevance data PRD according to Comparative Example 2 includes an average value, a maximum value, a minimum value, a median value, a variance, skewness, and kurtosis, which are representative values of intensities of pieces of the spectrum data SPD_INT1 to SPD_INT20 in the intervals INT1 to INT20. In this case, the spectrum data SPD itself is the physical-property data PD.

The learning input data IDL includes not only the relevance data PRD but also the production condition data PCD. Thus, the quality prediction data QFD considering an influence of the production condition data PCD can be output from the machine learning model M.

The physical-property data PD includes image data SPIMD of a spectrum SP which is represented by spectrum data SPD detected by performing spectroscopic analysis on the product PR. The relevance data PRD includes the average value and the sum of the differences in the intensity that are derived for each of the plurality of intervals INT1 to INT20 obtained by dividing the spectrum data SPD. As compared with a case where the intensity of each wave number of the spectrum data SPD is used as the relevance data PRD, a data amount of the relevance data PRD can be reduced.

In the operating apparatus 11, the second RW control unit 115 acquires the learned model TM and the relevance data for prediction PRDF. Next, the second processing unit 117 predicts a quality by inputting the relevance data for prediction PRDF to the learned model TM. Under a control of the display control unit 118, the quality prediction display screen 120 including the quality prediction data QFD, which is a quality prediction result by the learned model TM, is displayed on the display 64B. Therefore, the operator can easily recognize a degree of the quality of the product PR without actually applying the product PR to the quality evaluation apparatus 15 and evaluating the quality of the product PR.

Here, in a case where the quality evaluation apparatus 15 actually evaluates the quality of the product PR, it takes a relatively long time, for example, approximately 1 to 2 weeks, for preprocessing and quality evaluation processing of the product PR. On the other hand, in a case where the learned model TM is used, it is possible to predict the quality of the product PR in a very short time. Moreover, as illustrated in Fig. 27, in the example, the accuracy of prediction of the learned model TM is relatively high, and thus the operator can make a future production plan for the product PR with great reference to the quality prediction data QFD.

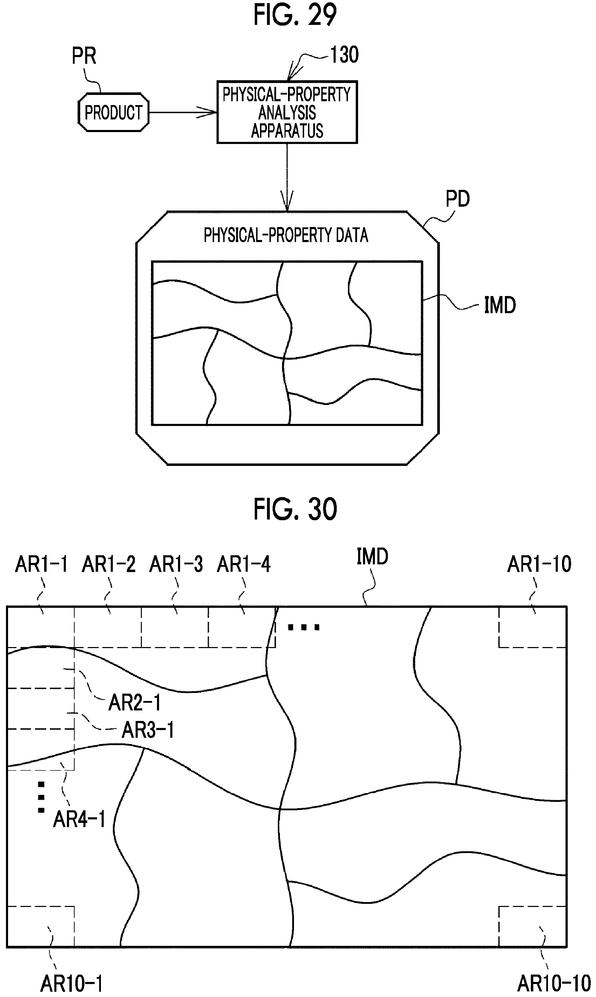

The following is an example that does not fall into the scope of protection of the invention:
In the second embodiment illustrated in Fig. 29 to Fig. 31, it is assumed that image data IMD obtained by imaging the product PR is the physical-property data PD.

In Fig. 29, the physical-property analysis apparatus 130 according to the second embodiment is, for example, a digital optical microscope, and outputs, as the physical-property data PD, the image data IMD obtained by imaging the product PR. The image data IMD is an example of "multi-dimensional physical-property data" according to the technique of the present disclosure.

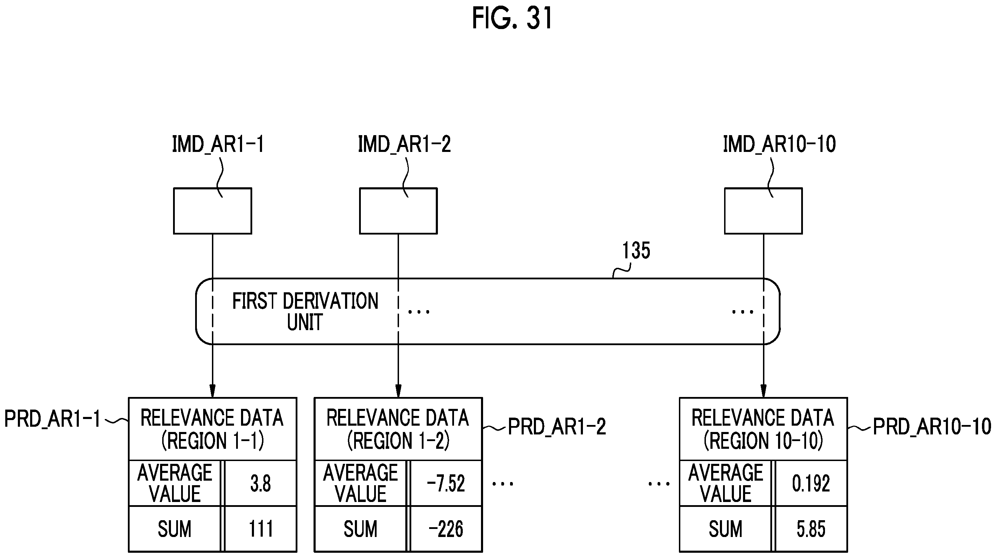

As illustrated in Fig. 30 and Fig. 31, a first derivation unit 135 according to the second embodiment derives pieces of relevance data PRD_AR1-1, PRD_AR1-2, ···, and PRD_AR10-10 for each of a plurality of regions AR1-1, AR1-2, ···, and AR10-10 obtained by equally dividing the image data IMD. Specifically, the first derivation unit 135 derives, as each of pieces of relevance data PRD_AR1-1 to PRD_AR10-10, an average value and a sum of differences between pixel values of each of pieces of image data IMD_AR1-1 to IMD_AR10-10 of regions AR1-1 to AR10-10 and pixel values of output image data OIMD which is output by inputting each of the pieces of image data IMD_AR1-1 to IMD_AR10-10 to the autoencoder AE. Further, although an illustration and a detailed description are omitted, similar to the first derivation unit 135, the second derivation unit of the operating apparatus also derives, as relevance data for prediction PRDF, an average value and a sum of differences between pixel values of the image data IMD of the product PR of which the quality is unknown. The autoencoder AE is prepared for each region AR of the image data IMD.

As described above, in the second embodiment, it is assumed that the image data IMD obtained by imaging the product PR is the physical-property data PD. Therefore, the physical property of the product PR can be more easily recognized.

The image data IMD may be used as the physical-property data PD instead of the image data SPIMD of the spectrum SP according to the first embodiment, or may be used as the physical-property data PD in addition to the image data SPIMD of the spectrum SP. Further, the physical-property analysis apparatus 130 is not limited to the exemplified digital optical microscope, and may be a scanning electron microscope (SEM) or the like.

The multi-dimensional physical-property data is not limited to the spectrum data SPD according to the first embodiment and the image data IMD according to the second embodiment. The multi-dimensional physical-property data related to any of five human senses of sight, hearing, smell, touch, and taste may be used. For example, touch data of the product PR, odor data at a time of production of the product PR, audio data at a time of production of the product PR, and the like may be used. In a case of touch data, an output of a touch sensor provided at each of a plurality of portions of the product PR is used as touch data, and an average value of the output of the touch sensor provided at each of the plurality of portions is derived as the relevance data PRD. In a case of audio data, an audio recorded for a period from the start to the end of production by a microphone is used as audio data. In this case, the audio data is divided into a plurality of intervals, and an average value of a frequency of each of the plurality of intervals and an average value of an amplitude of each of the plurality of intervals are derived as the relevance data PRD.

[Third Embodiment]

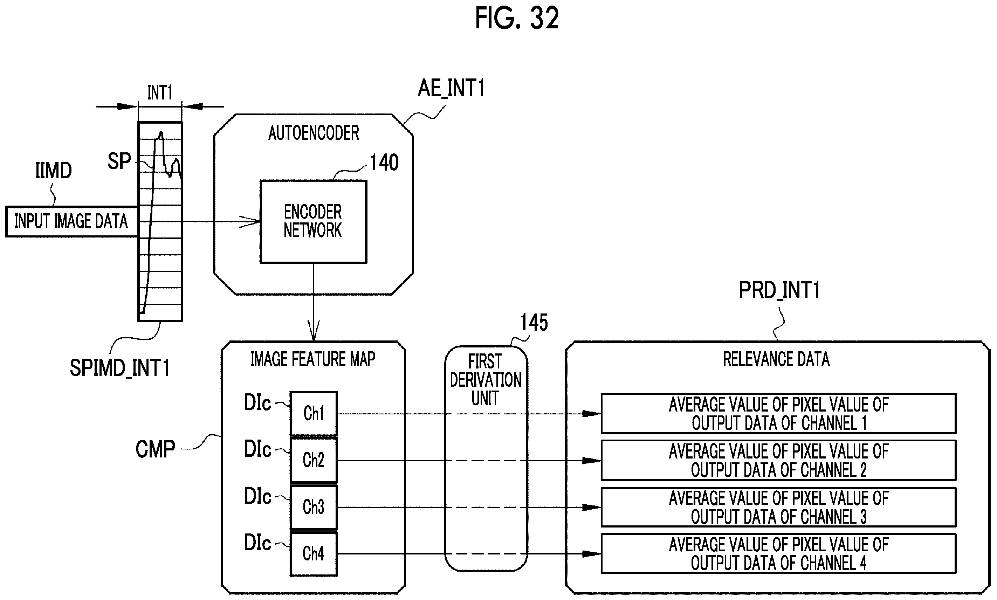

In the third embodiment illustrated in Fig. 32, the relevance data PRD is derived based on the image feature map CMP output from an encoder network 140 which is a part of the autoencoder AE.

As illustrated in Fig. 32, the first derivation unit 145 according to the third embodiment inputs, as the input image data IIMD, the image data SPIMD of the spectrum SP which is the physical-property data PD, to the autoencoder AE. The image feature map CMP is output from the encoder network 140 of the autoencoder AE. The image feature map CMP is, for example, a minimum-size image feature map CMP which is output from a lowest layer of the encoder network 140. The autoencoder AE according to the third embodiment is prepared for each of the plurality of intervals INT1 to INT20 of the spectrum data SPD, similar to the autoencoder AE according to the first embodiment. Here, unlike the autoencoder AE according to the first embodiment, the autoencoder AE according to the third embodiment is learned by inputting, as the learning input image data IIMDL, the image data SPIMD of the spectrum SP of various products PR regardless of the level of the quality.

The first derivation unit 145 derives the relevance data PRD based on the image feature map CMP. That is, the image feature map CMP is an example of "feature data" according to the technique of the present disclosure.

Fig. 32 illustrates a case where the image feature map CMP includes the output data DIc of a channel 1 (Ch1), the output data DIc of a channel 2 (Ch2), the output data DIc of a channel 3 (Ch3), and the output data DIc of a channel 4 (Ch4). An example in which the first derivation unit 145 derives, as the relevance data PRD, an average value of pixel values for each of pieces of the output data DIc of the channels 1 to 4 is illustrated. Instead of or in addition to the average value, a maximum value, a minimum value, a median value, a variance, or the like may be derived as the relevance data PRD. Further, although an illustration and a detailed description are omitted, similar to the first derivation unit 145, the second derivation unit of the operating apparatus also derives, as relevance data for prediction PRDF, an average value of pixel values of the output data DIc of the image feature map CMP in the intervals INT1 to INT20 of the image data SPIMD of the spectrum SP of the product PR of which the quality is unknown.

In Fig. 32, only the autoencoder AE_INT1 is illustrated. As the input image data IIMD, the image data SPIMD_INT1 of the spectrum SP in the interval INT1 is input to the autoencoder AE_INT1. The first derivation unit 145 derives the relevance data PRD_INT1 in the interval INT1, from the image feature map CMP of the encoder network 140 of the autoencoder AE_INT1. Although an illustration and a description are omitted, pieces of the relevance data PRD_INT2 to PRD_INT20 in other intervals INT2 to INT20 are also derived from the image feature map CMP of the encoder network 140 of each of the autoencoders AE_INT2 to AE_INT20.

As described above, in the third embodiment, the relevance data PRD is derived based on the image feature map CMP output from the encoder network 140 of the autoencoder AE. Therefore, as in the first embodiment, a numerical value (in the example, the average value of the pixel values of the output data DIc) that accurately represents the physical property of the product PR can be derived as the relevance data PRD, and thus it is possible to further improve the accuracy of prediction of the learned model TM.

The image feature map CMP may be output from a layer other than the lowest layer of the encoder network 140.

The relevance data PRD based on the image feature map CMP may be used instead of or in addition to the relevance data PRD based on the difference data DD according to the first embodiment.

In the third embodiment, the input image data IIMD is not limited to the image data SPIMD of the exemplified spectrum SP. Instead of or in addition to the image data SPIMD of the spectrum SP, the image data IMD according to the second embodiment that is obtained by imaging the product PR may be used as the input image data IIMD.

[Fourth Embodiment]

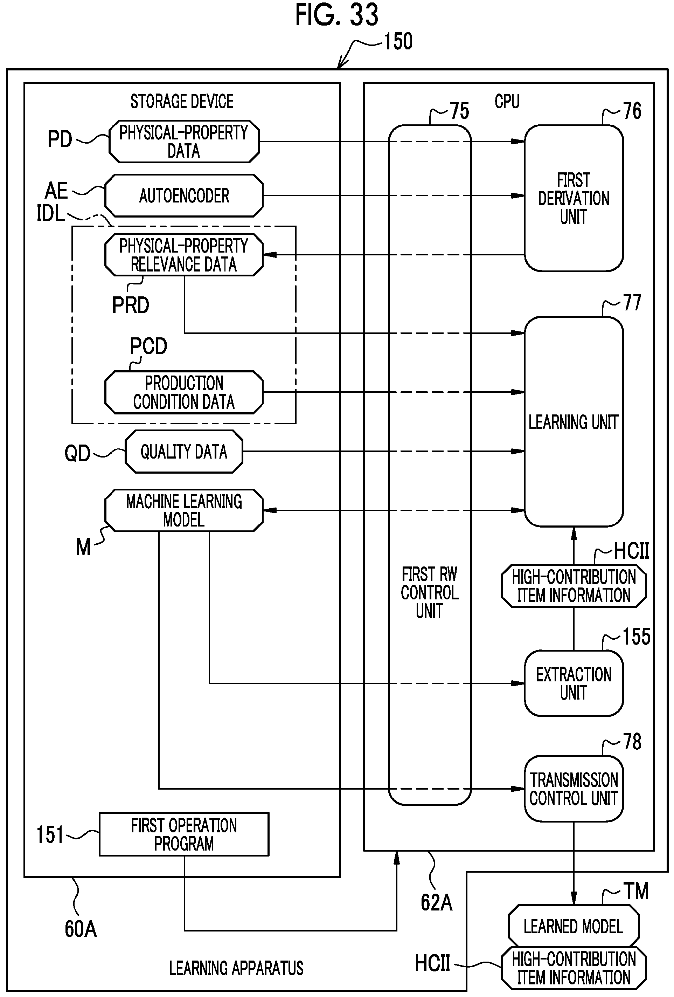

In the fourth embodiment illustrated in Fig. 33 to Fig. 45, a high-contribution item of which a contribution to improvement of accuracy of prediction of the quality of the product PR by the machine learning model M satisfies a preset condition is extracted from a plurality of items of the relevance data PRD, and learning is performed by selectively inputting the relevance data PRD of the high-contribution item to the machine learning model M. In the following description, the same components as those in the first embodiment are denoted by the same reference numerals, and a description thereof will be omitted.

In Fig. 33, a first operation program 151 is stored in the storage device 60A of the learning apparatus 150 according to the fourth embodiment. Similar to the first operation program 70 according to the first embodiment, the first operation program 151 is an example of an "operation program of the learning apparatus" according to the technique of the present disclosure.

In a case where the first operation program 151 is started, the CPU 62A of the computer including the learning apparatus 150 functions as an extraction unit 155 in addition to the first RW control unit 75, the first derivation unit 76, the learning unit 77, and the transmission control unit 78 according to the first embodiment, in cooperation with the memory 61 and the like.

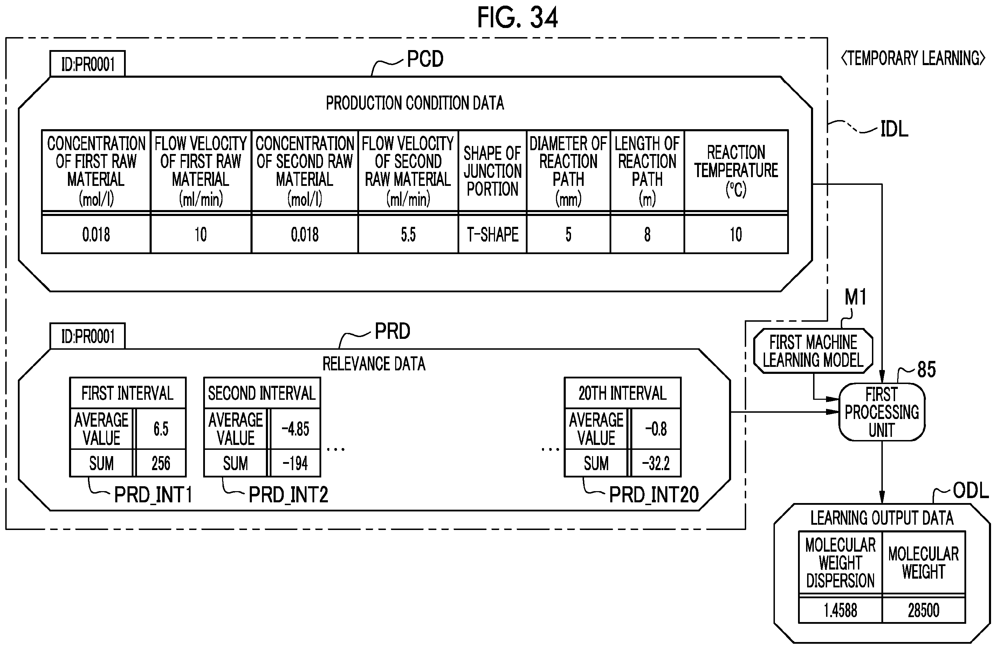

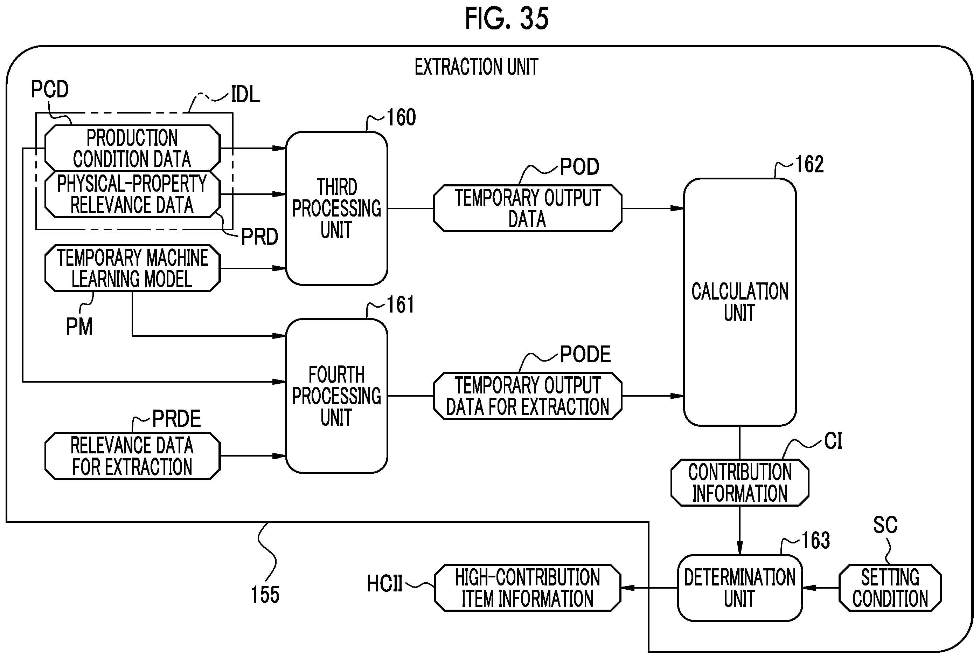

In this case, the learning unit 77 performs learning by inputting the learning input data IDL to the machine learning model M, and outputs a temporary machine learning model PM (refer to Fig. 35). The learning unit 77 outputs the temporary machine learning model PM to the first RW control unit 75. The temporary machine learning model PM is stored in the storage device 60A by the first RW control unit 75. Hereinafter, a period during which the learning unit 77 outputs the temporary machine learning model PM is referred to as temporary learning. Further, the machine learning model M which is used in the temporary learning is referred to as a first machine learning model M1 (refer to Fig. 34).

The first RW control unit 75 reads the temporary machine learning model PM from the storage device 60A, and outputs the temporary machine learning model PM to the extraction unit 155. The extraction unit 155 extracts a high-contribution item from a plurality of items of the relevance data PRD by using the temporary machine learning model PM. The high-contribution item is an item of which a contribution to improvement of accuracy of prediction of the quality of the product PR satisfies a preset condition. The extraction unit 155 outputs high-contribution item information HCII, which is an extraction result of the high-contribution item, to the learning unit 77. Although not illustrated, the extraction unit 155 outputs the high-contribution item information HCII to the first RW control unit 75, and the first RW control unit 75 stores the high-contribution item information HCII in the storage device 60A.

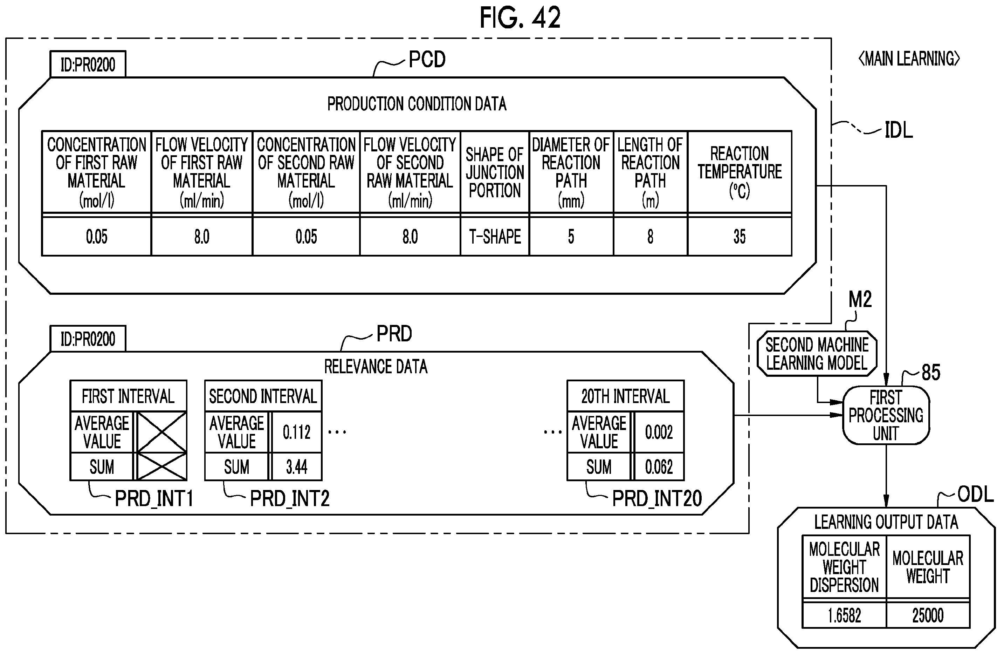

The learning unit 77 receives the high-contribution item information HCII from the extraction unit 155. The learning unit 77 performs learning by selectively inputting the relevance data PRD of the high-contribution item to the machine learning model M based on the high-contribution item information HCII, and outputs the machine learning model M as a learned model TM. Hereinafter, a period during which the learning unit 77 outputs the learned model TM is referred to as main learning. Further, the machine learning model M which is used in the main learning is referred to as a second machine learning model M2 (refer to Fig. 42).

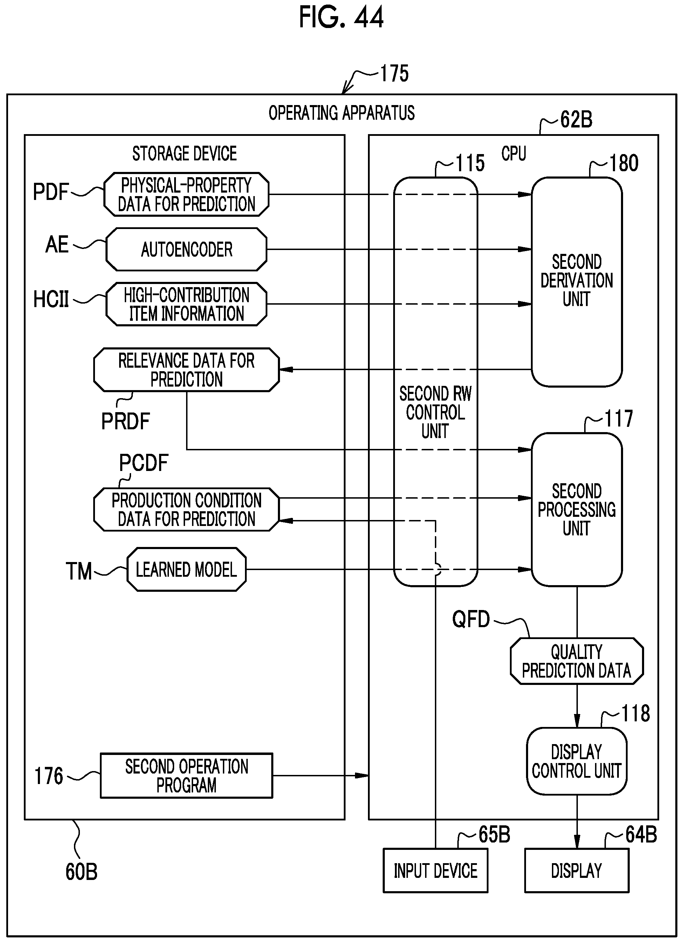

The transmission control unit 78 performs a control for receiving the learned model TM and the high-contribution item information HCII from the first RW control unit 75 and transmitting the high-contribution item information HCII to the operating apparatus 175 (refer to Fig. 44).

As illustrated in Fig. 34, in temporary learning, the first processing unit 85 inputs, as the learning input data IDL, the production condition data PCD and the plurality of items of the relevance data PRD to the first machine learning model M1 without exception. The evaluation unit 86 evaluates an accuracy of prediction of the first machine learning model M1, and the update unit 87 updates the first machine learning model M1. By repeating the processing while changing the learning input data IDL, the accuracy of prediction of the first machine learning model M1 reaches a preset level. The first machine learning model M1 of which the accuracy of prediction reaches a preset level is stored in the storage device 60A by the first RW control unit 75, as the temporary machine learning model PM.

As illustrated in Fig. 35, the extraction unit 155 includes a third processing unit 160, a fourth processing unit 161, a calculation unit 162, and a determination unit 163. The third processing unit 160 outputs temporary output data POD from the temporary machine learning model PM by inputting the learning input data IDL to the temporary machine learning model PM. The temporary output data POD includes the molecular weight dispersion and the molecular weight, similar to the learning output data ODL (refer to Fig. 36 and the like). The third processing unit 160 outputs the temporary output data POD to the calculation unit 162.

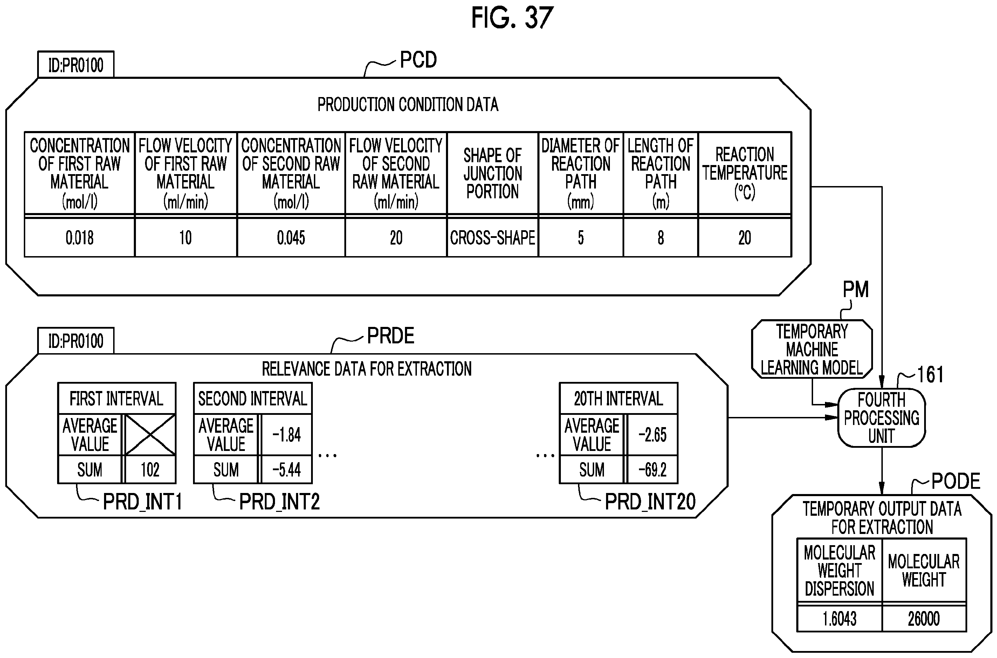

The fourth processing unit 161 outputs temporary output data for extraction PODE from the temporary machine learning model PM by inputting the production condition data PCD and physical-property relevance data for extraction (hereinafter, abbreviated as relevance data for extraction) PRDE to the temporary machine learning model PM, the production condition data PCD being same as the production condition data PCD which is input to the temporary machine learning model PM by the third processing unit 160. The temporary output data for extraction PODE includes the molecular weight dispersion and the molecular weight, similar to the learning output data ODL (refer to Fig. 37 and the like). The fourth processing unit 161 outputs the temporary output data for extraction PODE to the calculation unit 162.

The calculation unit 162 receives the temporary output data POD from the third processing unit 160 and the temporary output data for extraction PODE from the fourth processing unit 161. The calculation unit 162 calculates a contribution of the item of the relevance data PRD that is a degree to which the item of the relevance data PRD contributes to improvement of accuracy of quality prediction of the first machine learning model M1, based on the temporary output data POD and the temporary output data for extraction PODE. The calculation unit 162 outputs contribution information CI, which is a calculation result of the contribution, to the determination unit 163.

The determination unit 163 receives the contribution information CI from the calculation unit 162. The determination unit 163 determines whether or not each of the plurality of items of the relevance data PRD is a high-contribution item based on the contribution information CI and a setting condition SC. The determination unit 163 outputs, as a determination result, the high-contribution item information HCII to the learning unit 77.

As illustrated in Fig. 36, in the third processing unit 160, as in the case of the first processing unit 85 illustrated in Fig. 34, the plurality of items of the relevance data PRD are input to the temporary machine learning model PM without exception. On the other hand, as illustrated in Fig. 37, in the fourth processing unit 161, the relevance data for extraction PRDE, which is obtained by excluding one item among the plurality of items of the relevance data PRD, is input to the temporary machine learning model PM. Fig. 37 illustrates an example in which the item of the average value of the differences in the intensity of the relevance data PRD_INT1 in the first interval INT1 is excluded.

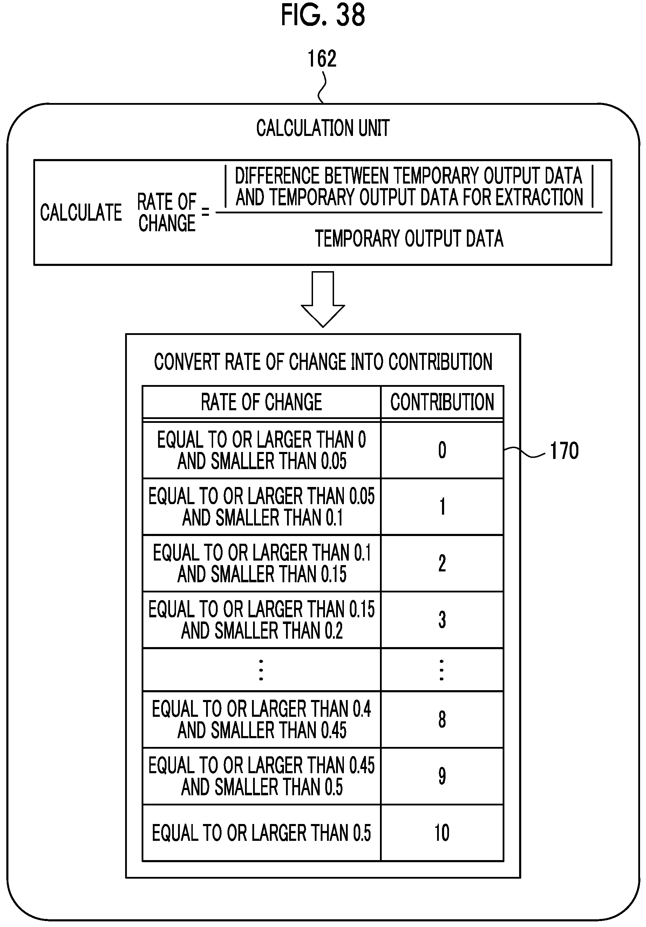

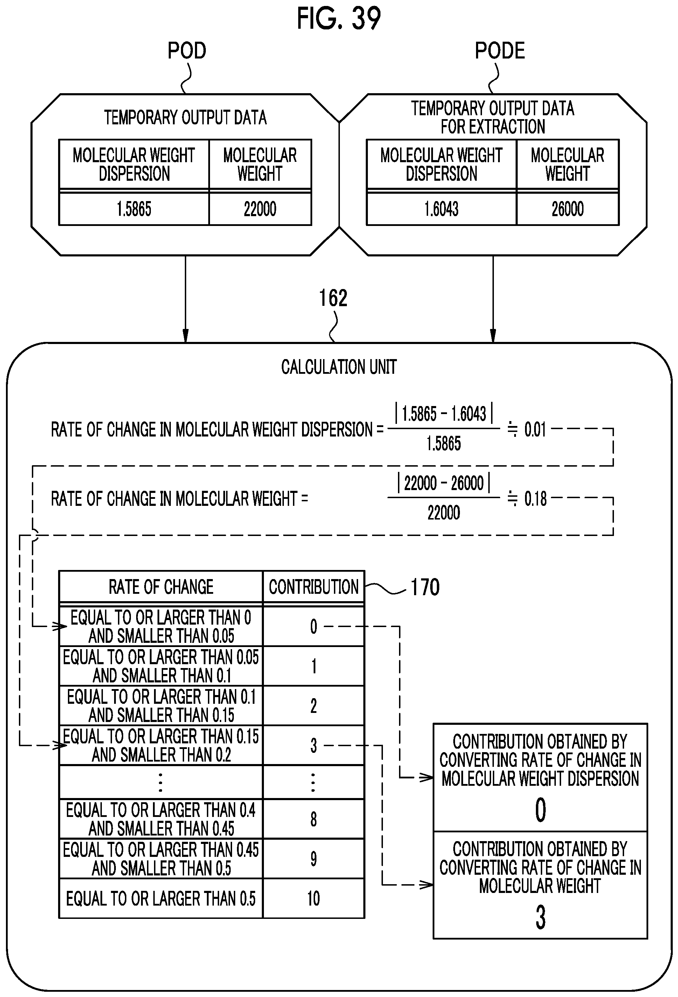

As illustrated in Fig. 38 and Fig. 39, first, the calculation unit 162 calculates a rate of change from the temporary output data POD and the temporary output data for extraction PODE. The rate of change is calculated by the following Equation 2.

$$\text{rate of change} = |\text{difference between temporary output data and temporary output data for extraction}| / \text{temporary output data} \qquad \text{(Equation 2)}$$

The rate of change is a value indicating a degree to which the output data of the temporary machine learning model PM changes due to an influence of the item excluded from the relevance data for extraction PRDE.

Next, the calculation unit 162 converts the rate of change into a contribution by using a conversion table 170 that converts the rate of change into a contribution. In the conversion table 170, in a case where the rate of change is equal to or larger than 0 and smaller than 0.05, the contribution is registered as 0, in a case where the rate of change is equal to or larger than 0.05 and smaller than 0.1, the contribution is registered as 1, ⋯, in a case where the rate of change is equal to or larger than 0.45 and smaller than 0.5, the contribution is registered as 9, and in a case where the rate of change is equal to or larger than 0.5, the contribution is registered as 10.

Fig. 39 illustrates a case of the temporary output data POD illustrated in Fig. 36 that includes the molecular weight dispersion of 1.5865 and the molecular weight of 22000, and a case of the temporary output data for extraction PODE illustrated in Fig. 37 that includes the molecular weight dispersion of 1.6043 and the molecular weight of 26000. In this case, a rate of change in the molecular weight dispersion = $|1.5865-1.6043|/1.5865 \approx 0.01$. According to the conversion table 170, in a case where the rate of change is 0.01, the contribution is 0. Thus, the contribution obtained by converting the rate of change in the molecular weight dispersion is calculated as 0. Similarly, a rate of change in the molecular weight = $|22000-26000|/22000 \approx 0.18$, and thus, the contribution obtained by converting the rate of change in the molecular weight is calculated as 3. The contribution calculated in this way is a contribution of the item excluded in the relevance data for extraction PRDE (in Fig. 39, the item of the average value of the differences in the intensity of the relevance data PRD_INT1).

The fourth processing unit 161 inputs the relevance data for extraction PRDE to the temporary machine learning model PM one after another while changing the excluded items one by one. In the example, since the number of the items of the relevance data PRD is 40, the fourth processing unit 161 inputs 40 pieces of the relevance data for extraction PRDE to the temporary machine learning model PM. In addition, the calculation unit 162 calculates the contribution for each relevance data for extraction PRDE. In order to improve reliability of a value of the rate of change, the rate of change may be calculated not only for one set of the production condition data PCD and the relevance data PRD but also for a plurality of different sets of the production condition data PCD and the relevance data PRD, and an average value of the rate of change may be converted to a contribution.

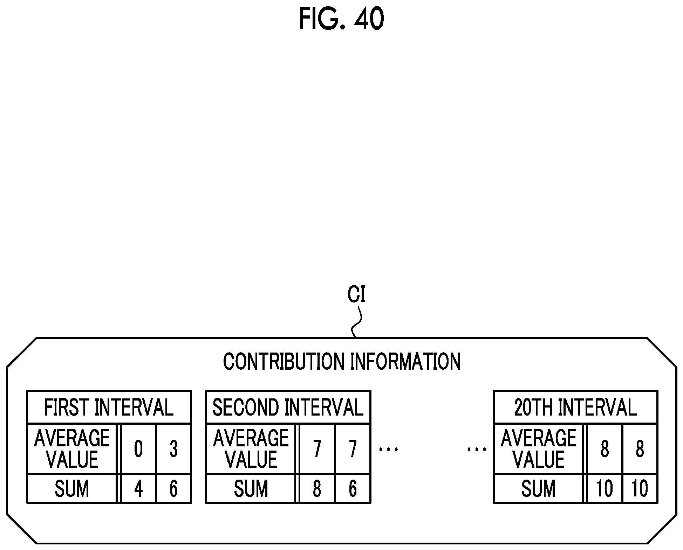

As illustrated in Fig. 40, in the contribution information CI, the contribution of each of the plurality of the items of the relevance data PRD is registered. The two numerical values next to each item are contributions, the left numerical value is the contribution obtained by converting the rate of change in the molecular weight dispersion, and the right numerical value is the contribution obtained by converting the rate of change in the molecular weight. For example, in the sum in the first interval INT1, the contribution obtained by converting the rate of change in the molecular weight dispersion is 4, and the contribution obtained by converting the rate of change in the molecular weight is 6.

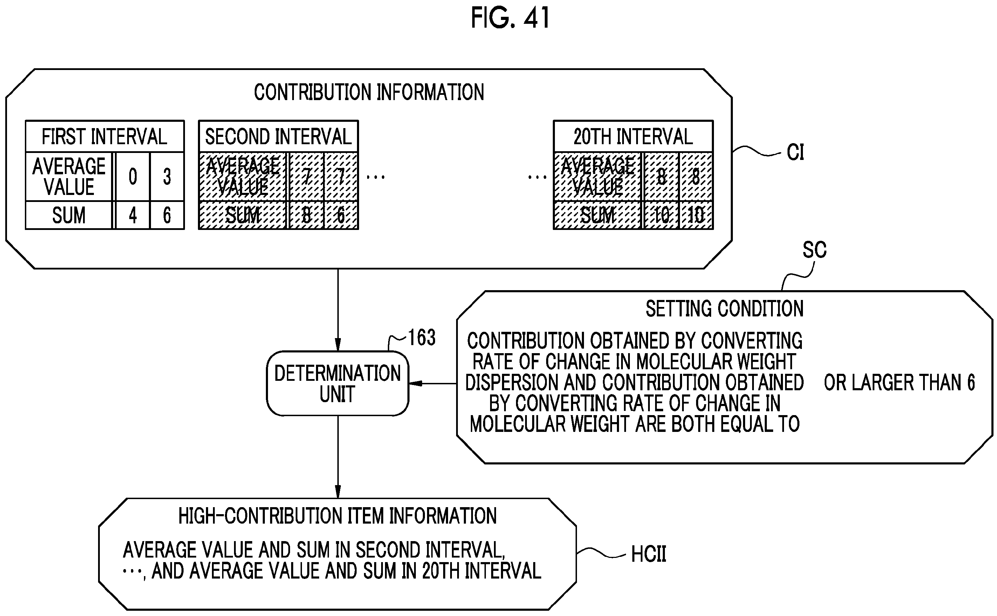

Fig. 41 illustrates, in the contribution information CI illustrated in Fig. 40, a case where the setting condition SC is "the contribution obtained by converting the rate of change in the molecular weight dispersion and the contribution obtained by converting the rate of change in the molecular weight are both equal to or larger than 6". In this case, the determination unit 163 determines that items, which are indicated by hatching and of which the contribution obtained by converting the rate of change in the molecular weight dispersion and the contribution obtained by converting the rate of change in the molecular weight are both equal to or larger than 6, are high-contribution items including the average value and the sum of the differences in the intensity in the second interval INT1, ⋯, and the average value and the sum of the differences in the intensity in the 20th interval INT20.

In this way, a method of extracting an essential part (in the example, the high-contribution item) from a plurality of pieces of data (in the example, the plurality of items of the relevance data PRD) is called sparse modeling. The sparse modeling may be performed, for example, using a glmnet package that can operate on a R language. A detail algorithm for sparse modeling is described in, for example, Regularization Paths for Generalized Linear Models via Coordinate Descent, Journal of statistical software, vol. 33-1 (2010)".

As illustrated in Fig. 42, in main learning, in the first processing unit 85, the relevance data PRD of the high-contribution item is selectively input to the second machine learning model M2. In other words, items other than the high-contribution items are selectively excluded, and the high-contribution items are input to the second machine learning model M2. The evaluation unit 86 evaluates an accuracy of prediction of the second machine learning model M2, and the update unit 87 updates the second machine learning model M2. By repeating the processing while changing the learning input data IDL, the accuracy of prediction of the second machine learning model M2 reaches a preset level. The second machine learning model M2 of which the accuracy of prediction reaches a preset level is stored in the storage device 60A by the first RW control unit 75, as the learned machine learning model TM. The second machine learning model M2 used in main learning is the same as the first machine learning model M1 used in temporary learning, in terms of characteristics such as a type and a performance.

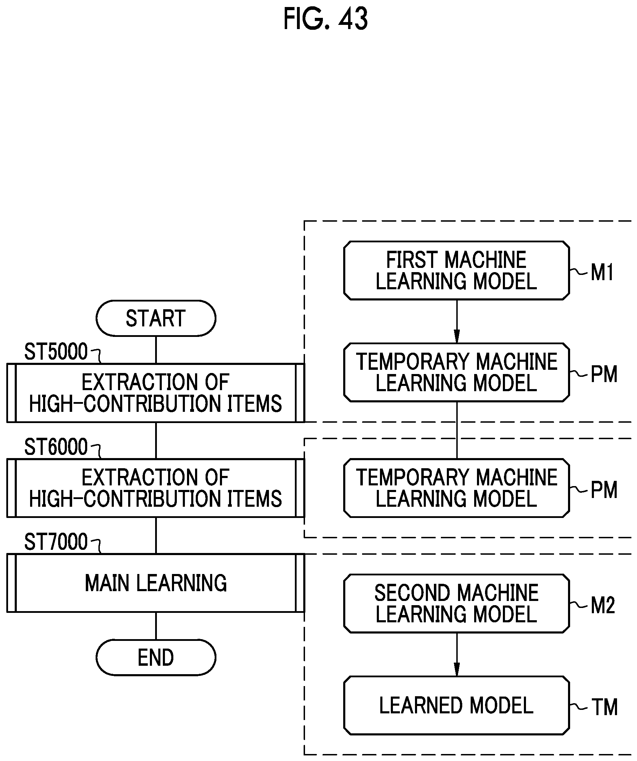

In summary, as illustrated in Fig. 43, in the learning apparatus 150 according to the fourth embodiment, temporary learning (step ST5000), extraction of the high-contribution items (step ST6000), and main learning (step ST7000) are mainly performed. In the temporary learning, the first machine learning model M1 is learned, and is used as the temporary machine learning model PM. The temporary machine learning model PM is used to extract the high-contribution items. In the main learning, the second machine learning model M2 is learned, and is used as the learned model TM.

In Fig. 44, a second operation program 176 is stored in the storage device 60B of the operating apparatus 175 according to the fourth embodiment. Further, the high-contribution item information HCII from the learning apparatus 150 is stored in the storage device 60B.

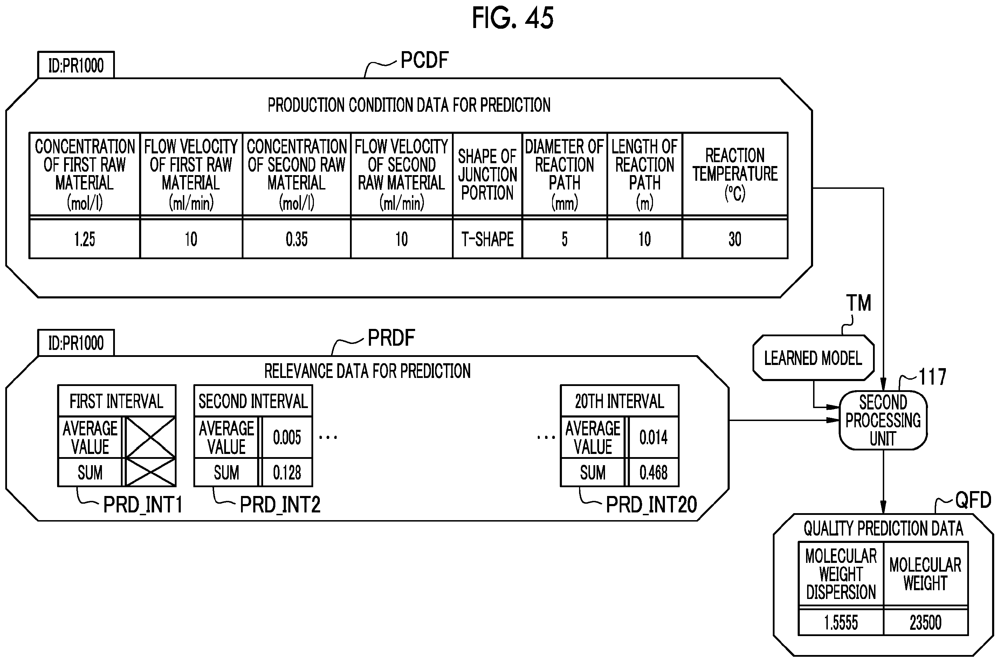

The second RW control unit 115 of the operating apparatus 175 reads the high-contribution item information HCII from the storage device 60B, and outputs the high-contribution item information HCII to the second derivation unit 180. Similar to the second derivation unit 116 of the operating apparatus 11 according to the first embodiment, the second derivation unit 180 derives, as the relevance data for prediction PRDF, the average value and the sum of the differences in the intensity for each of the plurality of intervals INT1 to INT20 obtained by dividing the spectrum data SPD. Here, the second derivation unit 180 selectively derives the high-contribution item based on the high-contribution item information HCII, and does not derive items other than the high-contribution item. Therefore, similar to the relevance data PRD illustrated in Fig. 42, in the relevance data for prediction PRDF, items other than the high-contribution items are selectively excluded (refer to Fig. 45).

Fig. 45 illustrates a method of predicting the quality of the product PR of which an ID is PR1000 and of which the quality is unknown by using the learned model TM. Similar to the case illustrated in Fig. 42, in the second processing unit 117, the relevance data for prediction PRDF of the high-contribution item among the plurality of items is selectively input to the learned model TM. In other words, items other than the high-contribution items are selectively excluded, and the high-contribution items are input to the learned model TM.

As described above, in the learning apparatus 150, the learning unit 77 performs learning by inputting the learning input data IDL to the first machine learning model M1, and outputs a temporary machine learning model PM. Next, the extraction unit 155 extracts the high-contribution item from the plurality of items of the relevance data PRD by using the temporary machine learning model PM. The learning unit 77 performs learning by selectively inputting the relevance data PRD of the high-contribution item to the second machine learning model M2, and outputs the learned second machine learning model M2 as the learned model TM. Therefore, as compared with a case where the relevance data PRD other than the high-contribution item is input and learned, it is possible to improve the accuracy of prediction of the quality of the product PR by the learned model TM. Further, it is possible to prevent an effort for learning from being spent for the item which has a low contribution in the improvement of the accuracy of prediction, and thus it is possible to improve learning efficiency.

The learning input data IDL includes not only the relevance data PRD but also the production condition data PCD. Thus, the high-contribution item can be extracted in consideration of the influence of the production condition data PCD, and thus validity of the high-contribution item can be further enhanced.

The intervals INT obtained by dividing the spectrum data SPD may be overlapped with each other. Similarly, the regions AR obtained by dividing the image data IMD may also be overlapped with each other.

The product PR is not limited to the product that is produced by using a flow synthesis method. For example, the product may be produced by using a batch combination method.

In each of the embodiments, the production condition which is received by the setting unit 25 of the flow reaction apparatus 13 is used as the production condition data PCD. On the other hand, the present disclosure is not limited thereto. As the production condition data PCD, actual measurement values that are measured by the first flow velocity sensor 35, the second flow velocity sensor 36, the third flow velocity sensor 37, the temperature sensor 38, the first flow velocity sensor 51, the second flow velocity sensor 52, the third flow velocity sensor 53, and the fourth flow velocity sensor 54 may be used.

In each of the embodiments, the quality prediction display screen 120 is exemplified as an output form of the quality prediction data QFD. On the other hand, the present disclosure is not limited thereto. Instead of or in addition to the quality prediction display screen 120, a form in which the quality prediction data QFD is printed and output on a paper medium and a form in which the quality prediction data QFD is output as a data file may be adopted.

As the machine learning model M, there are machine learning models using linear regression, Gaussian process regression, support vector regression, decision tree, an ensemble method, a bagging method, a boosting method, a gradient boosting method, and the like. Further, there are machine learning models using a simple perceptron, a multi-layer perceptron, a deep neural network, a convolutional neural network, a deep belief network, a recurrent neural network, a stochastic neural network, and the like. Which machine learning model M is used among the above-described models is not particularly limited, and a machine learning model M using any method may be selected.

As an ensemble method, there is random forest. As well known, random forest is a method of improving accuracy of prediction by creating a plurality of decision tree groups with low correlation using randomly-sampled learning data and randomly-selected explanatory variables and integrating and averaging prediction results by the decision tree groups. In this case, control parameters of the machine learning model M include the number of explanatory variables to be selected and the number of branches of the decision trees.

Since the deep neural network has the relatively large number of control parameters, flexible combinations may be made. For this reason, the deep neural network can exhibit high prediction performance for various data structures. The control parameters include the number of layers of the network and the number of nodes of the network, a type of an activated function, a dropout ratio, a mini-batch size, the number of epochs, a learning rate, and the like.

The machine learning model M includes a plurality of execution frameworks, and an execution framework may be appropriately selected from the execution frameworks. For example, an execution framework may be selected from Tensorflow, Cognitive Toolkit (CNT), Theano, Caffe, mxnet, Keras, PyTorch, Chainer, Scikit-learn, Caret, MATLAB (registered trademark), and the like.

The hardware configuration of the computer including the machine learning system 2 may be modified in various ways. For example, the learning apparatus 10 and the operating apparatus 11 may be integrated and configured by one computer. Further, at least one of the learning apparatus 10 or the operating apparatus 11 may be configured by a plurality of computers which are separated as hardware for the purpose of improving processing capability and reliability. For example, in the learning apparatus 10, the function of the first derivation unit 76 and the function of the learning unit 77 are distributed to two computers. In this case, the learning apparatus 10 is configured by two computers.

In this way, the hardware configuration of the computer of the machine learning system 2 may be appropriately changed according to the required performance such as processing capability, safety, and reliability. Further, not only hardware but also the application program such as the first operation programs 70 and 151 and the second operation programs 110 and 176, may be duplicated or distributed and stored in a plurality of storage devices for the purpose of ensuring safety and reliability.

In each of the embodiments, for example, as a hardware structure of the processing unit that executes various processing, such as the first RW control unit 75, the first derivation units 76, 135, and 145, the learning unit 77 (the first processing unit 85, the evaluation unit 86, and the update unit 87), the transmission control unit 78, the second RW control unit 115, the second derivation units 116 and 180, the second processing unit 117, the display control unit 118, the extraction unit 155 (the third processing unit 160, the fourth processing unit 161, the calculation unit 162, and the determination unit 163), the following various processors may be used. The various processors include, as described above, the CPU 62A or 62B which is a general-purpose processor that functions as various processing units by executing software (the first operation programs 70 and 151, and the second operation programs 110 and 176), a programmable logic device (PLD) such as a field programmable gate array (FPGA) which is a processor capable of changing a circuit configuration after manufacture, a dedicated electric circuit such as an application specific integrated circuit (ASIC) which is a processor having a circuit configuration specifically designed to execute specific processing, and the like.

One processing unit may be configured by one of these various processors, or may be configured by a combination of two or more processors having the same type or different types (for example, a combination of a plurality of FPGAs and/or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as typified by system on chip (System On Chip: SoC), there is a form in which a processor that realizes the functions of the entire system including a plurality of processing units with one IC (Integrated Circuit) chip is used. As described above, the various processing units are configured by using one or more various processors as a hardware structure.

Further, as the hardware structure of the various processors, more specifically, an electric circuit (circuitry) in which circuit elements such as semiconductor elements are combined may be used.

Explanation of References

2: machine learning system
10, 150: learning apparatus
11, 175: operating apparatus
12: network
13: flow reaction apparatus
14, 130: physical-property analysis apparatus
15: quality evaluation apparatus
20: first raw material supply unit
21: second raw material supply unit
22, 45: reaction section
23: temperature control unit
24: recovery/discard section
25: setting unit
26: system controller
30, 46: junction portion
31: reaction portion
32 to 34: first to third pipe portions
35 to 37: first flow velocity sensor to third flow velocity sensor
38: temperature sensor
40: recovery unit
41: discard unit
42: three-way valve
47 to 50: first to fourth pipe portions
51 to 54: first flow velocity sensor to fourth flow velocity sensor
60, 60A, 60B: storage device
61: memory
62, 62A, 62B: CPU
63: communication unit
64, 64B: display
65, 65B: input device
66: bus line
70, 151: first operation program (operation program of learning apparatus)
75: first read/write control unit (first RW control unit, first acquisition unit)
76, 135, 145: first derivation unit (derivation unit)
77: learning unit
78: transmission control unit
80, 140: encoder network
81: decoder network
85: first processing unit
86: evaluation unit
87: update unit
110, 176: second operation program
115: second read/write control unit (second RW control unit, second acquisition unit, third acquisition unit)
116, 180: second derivation unit
117: second processing unit (processing unit)

118: display control unit (output control unit)
120: quality prediction display screen
121: OK button
125: table
155: extraction unit
160: third processing unit
161: fourth processing unit
162: calculation unit
163: determination unit
170: conversion table
AE: autoencoder
AR: region
CI: contribution information
CMP: image feature map (feature data)
DD: difference data
DI: input data of autoencoder
DIc: output data of autoencoder
F: filter
HCII: high-contribution item information
Icp: pixel of output data
IDL: learning input data
IIMD: input image data
IIMDL: learning input image data
IMD: image data
INT: interval
Ip: attention pixel
Is: adjacent pixel
L: length of reaction path
M: machine learning model
M1, M2: first machine learning model, second machine learning model
ODL: learning output data
OIMD: output image data
OIMDL: learning output image data
PCD: production condition data
PCDF: production condition data for prediction
PD: physical-property data
PDF: physical-property data for prediction
PM: temporary machine learning model
POD: temporary output data
PODE: temporary output data for extraction
PR: product
PRD: physical-property relevance data (relevance data)
PRDE: physical-property relevance data for extraction (relevance data for extraction)
PRDF: physical-property relevance data for prediction (relevance data for prediction)
QD: quality data
QFD: quality prediction data
RM: raw material
RM1, RM2: first raw material, second raw material
SC: setting condition
SP: spectrum
SPD: spectrum data
SPIMD: image data of spectrum
ST500, ST600, ST700, ST800, ST1001, ST1004, ST5000, ST6000, ST7000: step
ST1002: step (first acquisition step)
ST1003: step (derivation step)
ST2001 to ST2006: step (learning step)
TM: learned model
Ø: diameter of reaction path

**Claims**

1. A learning apparatus comprising:

a first acquisition unit that acquires multi-dimensional physical-property data representing a physical property of a product;
a derivation unit that derives learning input data to be input to a machine learning model for predicting a quality of the product from the multi-dimensional physical-property data and that derives, as the learning input data, multi-dimensional physical-property relevance data which is related to the multi-dimensional physical-property data by applying at least a part of a plurality of autoencoders to the multi-dimensional physical-property data; and
a learning unit that inputs the learning input data to the machine learning model, performs learning, and outputs the machine learning model as a learned model to be provided for actual operation
wherein the multi-dimensional physical-property data includes image data of a spectrum which is represented by spectrum data detected by performing spectroscopic analysis on the product,
wherein the derivation unit derives the multi-dimensional physical-property relevance data for each of a plurality of intervals obtained by dividing the spectrum data in equal parts, each autoencoder of the plurality of autoencoders being prepared for each of the plurality of intervals of the spectrum data,
wherein the image data of the spectrum of the product of which the quality is higher than a preset level is input to each respective autoencoder, as the learning input image data,
wherein each autoencoder is learned such that the learning input image data and the learning output image data match with each other,
wherein the derivation unit is configured to:

output output image data by inputting, as the input image data, the image data of the spectrum to a respective autoencoder corresponding to each of the intervals;
derive, as difference data, a difference in the intensity of each wave number between the input image data and the output image data for each of the intervals; and
derive, as pieces of the relevance data, an average value and a sum of the differences in the intensity in each of the intervals.

2. The learning apparatus according to claim 1,
wherein the learning input data includes production condition data which is set in a production process of the product.

3. The learning apparatus according to claim 1 or 2,
wherein the derivation unit inputs the multi-dimensional physical-property data to each autoencoder, outputs feature data from an encoder network of the autoencoder, and derives the multi-dimensional physical-property relevance data based on the feature data.

4. The learning apparatus according to any one of claims 1 to 3,
wherein the multi-dimensional physical-property data includes image data obtained by imaging the product.

5. The learning apparatus according to any one of claims 1 to 4,
wherein the product is produced by using a flow synthesis method.

6. An operating apparatus comprising:

a second acquisition unit that acquires the learned model which is output from the learning unit of the learning apparatus according to any one of claims 1 to 5;
a third acquisition unit that acquires multi-dimensional physical-property relevance data for prediction which is data of a product of which a quality is unknown;
a processing unit that inputs the multi-dimensional physical-property relevance data for prediction to the learned model and predicts the quality; and
an output control unit that controls outputting of a prediction result of the quality by the learned model.

7. An operation method of a learning apparatus, the method comprising:

a first acquisition step of acquiring multi-dimensional physical-property data representing a physical property of a product;

a derivation step of deriving learning input data to be input to a machine learning model for predicting a quality of the product from the multi-dimensional physical-property data and deriving, as the learning input data, multi-dimensional physical-property relevance data which is related to the multi-dimensional physical-property data by applying at least a part of a plurality of autoencoders to the multi-dimensional physical-property data; and

a learning step of inputting the learning input data to the machine learning model, performing learning, and outputting the machine learning model as a learned model to be provided for actual operation,

wherein the multi-dimensional physical-property data includes image data of a spectrum which is represented by spectrum data detected by performing spectroscopic analysis on the product,

wherein the derivation step derives the multi-dimensional physical-property relevance data for each of a plurality of intervals obtained by dividing the spectrum data in equal parts, each autoencoder of the plurality of autoencoders being prepared for each of the plurality of intervals of the spectrum data,

wherein the image data of the spectrum of the product of which the quality is higher than a preset level is input to each respective autoencoder, as the learning input image data,

wherein each autoencoder is learned such that the learning input image data and the learning output image data match with each other,

wherein the derivation step includes:

outputting output image data by inputting, as the input image data, the image data of the spectrum to a respective autoencoder corresponding to each of the intervals;

deriving, as difference data, a difference in the intensity of each wave number between the input image data and the output image data for each of the intervals; and

deriving, as pieces of the relevance data, an average value and a sum of the differences in the intensity in each of the intervals.

8. An operation program of a learning apparatus, the program causing a computer to function as:

a first acquisition unit that acquires multi-dimensional physical-property data representing a physical property of a product;

a derivation unit that derives learning input data to be input to a machine learning model for predicting a quality of the product from the multi-dimensional physical-property data and that derives, as the learning input data, multi-dimensional physical-property relevance data which is related to the multi-dimensional physical-property data by applying at least a part of a plurality of autoencoders to the multi-dimensional physical-property data; and

a learning unit that inputs the learning input data to the machine learning model, performs learning, and outputs the machine learning model as a learned model to be provided for actual operation,

wherein the multi-dimensional physical-property data includes image data of a spectrum which is represented by spectrum data detected by performing spectroscopic analysis on the product,

wherein the derivation unit derives the multi-dimensional physical-property relevance data for each of a plurality of intervals obtained by dividing the spectrum data in equal parts, each autoencoder of the plurality of autoencoders being prepared for each of the plurality of intervals of the spectrum data,

wherein the image data of the spectrum of the product of which the quality is higher than a preset level is input to each respective autoencoder, as the learning input image data,

wherein each autoencoder is learned such that the learning input image data and the learning output image data match with each other,

wherein the derivation unit is configured to:

output output image data by inputting, as the input image data, the image data of the spectrum to a respective autoencoder corresponding to each of the intervals;

derive, as difference data, a difference in the intensity of each wave number between the input image data and the output image data for each of the intervals; and

derive, as pieces of the relevance data, an average value and a sum of the differences in the intensity in each of the intervals.

**Patentansprüche**

1. Lernvorrichtung, umfassend:

eine erste Erfassungseinheit, die mehrdimensionale physikalische Eigenschaftsdaten, die eine physikalische Eigenschaft eines Produkts darstellen, erfasst;

eine Ableitungseinheit, die Lerneingabedaten, die in ein Modell für maschinelles Lernen zum Vorhersagen einer Qualität des Produkts einzugeben sind, aus den mehrdimensionalen physikalischen Eigenschaftsdaten ableitet und die als die Lerneingabedaten mehrdimensionale physikalische Eigenschaftsrelevanzdaten ableitet, die durch Anwenden mindestens eines Teils von mehreren Autokodierern auf die mehrdimensionalen physikalischen Eigenschaftsdaten mit den mehrdimensionalen physikalischen Eigenschaftsdaten in Beziehung stehen; und

eine Lerneinheit, die die Lerneingabedaten in das Modell für maschinelles Lernen eingibt, Lernen durchführt und das Modell für maschinelles Lernen als ein gelerntes Modell, das für tatsächlichen Betrieb bereitzustellen ist, ausgibt,

wobei die mehrdimensionalen physikalischen Eigenschaftsdaten Bilddaten eines Spektrums enthalten, das durch Spektraldaten, die durch Durchführen von spektroskopischer Analyse an dem Produkt detektiert werden, dargestellt wird,

wobei die Ableitungseinheit die mehrdimensionalen physikalischen Eigenschaftsrelevanzdaten für jedes von mehreren Intervallen, die durch Unterteilen der Spektraldaten in gleiche Teile erhalten werden, ableitet, wobei jeder Autokodierer der mehreren Autokodierer für jedes der mehreren Intervalle der Spektraldaten vorbereitet ist,

wobei die Bilddaten des Spektrums des Produkts, von dem die Qualität höher als ein voreingestelltes Niveau ist, als die Lerneingabe-Bilddaten in jeden jeweiligen Autokodierer eingegeben werden,

wobei jeder Autokodierer so gelernt wird, dass die Lerneingabe-Bilddaten und die Lernausgabe-Bilddaten miteinander übereinstimmen,

wobei die Ableitungseinheit so konfiguriert ist, dass sie:

Ausgabebilddaten durch Eingeben der Bilddaten des Spektrums als die Eingabebilddaten in einen jeweiligen Autokodierer, der jedem der Intervalle entspricht, ausgibt;

als Differenzdaten eine Differenz in der Intensität jeder Wellenzahl zwischen den Eingabebilddaten und den Ausgabebilddaten für jedes der Intervalle ableitet; und

als die Relevanzdaten einen Durchschnittswert und eine Summe der Differenzen in der Intensität in jedem der Intervalle ableitet.

2. Lernvorrichtung nach Anspruch 1,
wobei die Lerneingabedaten Produktionsbedingungsdaten enthalten, die in einem Produktionsprozess des Produkts eingestellt sind.

3. Lernvorrichtung nach Anspruch 1 oder 2,
wobei die Ableitungseinheit die mehrdimensionalen physikalischen Eigenschaftsdaten in jeden Autokodierer eingibt, Merkmalsdaten von einem Kodierernetzwerk des Autokodierers ausgibt und die mehrdimensionalen physikalischen Eigenschaftsrelevanzdaten auf der Grundlage der Merkmalsdaten ableitet.

4. Lernvorrichtung nach einem der Ansprüche 1 bis 3,
wobei die mehrdimensionalen physikalischen Eigenschaftsdaten Bilddaten enthalten, die durch Abbilden des Produkts erhalten werden.

5. Lernvorrichtung nach einem der Ansprüche 1 bis 4,
wobei das Produkt durch Verwenden eines Durchflusssyntheseverfahrens produziert wird.

6. Betriebsvorrichtung, umfassend:

eine zweite Erfassungseinheit, die das gelernte Modell, das von der Lerneinheit der Lernvorrichtung nach einem der Ansprüche 1 bis 5 ausgegeben wird, erfasst;
eine dritte Erfassungseinheit, die mehrdimensionale physikalische Eigenschaftsrelevanzdaten für Vorhersage erfasst, die Daten eines Produkts sind, von dem eine Qualität unbekannt ist;
eine Verarbeitungseinheit, die die mehrdimensionalen physikalischen Eigenschaftsrelevanzdaten für Vorhersage in das gelernte Modell eingibt und die Qualität vorhersagt; und
eine Ausgabesteuereinheit, die Ausgeben eines Vorhersageergebnisses der Qualität durch das gelernte Modell steuert.

7. Betriebsverfahren einer Lernvorrichtung, wobei das Verfahren umfasst:

einen ersten Erfassungsschritt des Erfassens von mehrdimensionalen physikalischen Eigenschaftsdaten, die eine physikalische Eigenschaft eines Produkts darstellen;

einen Ableitungsschritt des Ableitens von Lerneingabedaten, die in ein Modell für maschinelles Lernen zum Vorhersagen einer Qualität des Produkts aus den mehrdimensionalen physikalischen Eigenschaftsdaten einzugeben sind, und des Ableitens von mehrdimensionalen physikalischen Eigenschaftsrelevanzdaten als die Lerneingabedaten, die mit den mehrdimensionalen physikalischen Eigenschaftsdaten durch Anwenden mindestens eines Teils von mehreren Autokodierern auf die mehrdimensionalen physikalischen Eigenschaftsdaten in Beziehung stehen; und

einen Lernschritt des Eingebens der Lerneingabedaten in das Modell für maschinelles Lernen, des Durchführens von Lernen und des Ausgebens des Modells für maschinelles Lernen als ein gelerntes Modell, das für tatsächlichen Betrieb bereitzustellen ist,

wobei die mehrdimensionalen physikalischen Eigenschaftsdaten Bilddaten eines Spektrums enthalten, das durch Spektraldaten, die durch Durchführen von spektroskopischer Analyse an dem Produkt detektiert werden, dargestellt wird,

wobei der Ableitungsschritt die mehrdimensionalen physikalischen Eigenschaftsrelevanzdaten für jedes von mehreren Intervallen ableitet, die durch Unterteilen der Spektraldaten in gleiche Teile erhalten werden, wobei jeder Autokodierer der mehreren Autokodierer für jedes der mehreren Intervalle der Spektraldaten vorbereitet ist,

wobei die Bilddaten des Spektrums des Produkts, von dem die Qualität höher als ein voreingestelltes Niveau ist, als die Lerneingabe-Bilddaten in jeden jeweiligen Autokodierer eingegeben werden,

wobei jeder Autokodierer so gelernt wird, dass die Lerneingabe-Bilddaten und die Lernausgabe-Bilddaten miteinander übereinstimmen,

wobei der Ableitungsschritt enthält:

Ausgeben von Ausgabebilddaten durch Eingeben der Bilddaten des Spektrums als die Eingabebilddaten in einen jeweiligen Autokodierer, der jedem der Intervalle entspricht;

Ableiten, als Differenzdaten, einer Differenz in der Intensität jeder Wellenzahl zwischen den Eingabebilddaten und den Ausgabebilddaten für jedes der Intervalle; und

Ableiten, als die Relevanzdaten, eines Durchschnittswerts und einer Summe der Differenzen in der Intensität in jedem der Intervalle.

8. Betriebsprogramm einer Lernvorrichtung, wobei das Programm einen Computer veranlasst, zu fungieren als:

eine erste Erfassungseinheit, die mehrdimensionale physikalische Eigenschaftsdaten, die eine physikalische Eigenschaft eines Produkts darstellen, erfasst;

eine Ableitungseinheit, die Lerneingabedaten, die in ein Modell für maschinelles Lernen zum Vorhersagen einer Qualität des Produkts einzugeben sind, aus den mehrdimensionalen physikalischen Eigenschaftsdaten ableitet und die als die Lerneingabedaten mehrdimensionale physikalische Eigenschaftsrelevanzdaten ableitet, die durch Anwenden mindestens eines Teils von mehreren Autokodierern auf die mehrdimensionalen physikalischen Eigenschaftsdaten mit den mehrdimensionalen physikalischen Eigenschaftsdaten in Beziehung stehen; und

eine Lerneinheit, die die Lerneingabedaten in das Modell für maschinelles Lernen eingibt, Lernen durchführt und das Modell für maschinelles Lernen als ein gelerntes Modell, das für tatsächlichen Betrieb bereitzustellen ist, ausgibt,

wobei die mehrdimensionalen physikalischen Eigenschaftsdaten Bilddaten eines Spektrums enthalten, das durch Spektraldaten, die durch Durchführen von spektroskopischer Analyse an dem Produkt detektiert werden, dargestellt wird,

wobei die Ableitungseinheit die mehrdimensionalen physikalischen Eigenschaftsrelevanzdaten für jedes von mehreren Intervallen, die durch Unterteilen der Spektraldaten in gleiche Teile erhalten werden, ableitet, wobei jeder Autokodierer der mehreren Autokodierer für jedes der mehreren Intervalle der Spektraldaten vorbereitet ist,

wobei die Bilddaten des Spektrums des Produkts, von dem die Qualität höher als ein voreingestelltes Niveau ist, als die Lerneingabe-Bilddaten in jeden jeweiligen Autokodierer eingegeben werden,

wobei jeder Autokodierer so gelernt wird, dass die Lerneingabe-Bilddaten und die Lernausgabe-Bilddaten miteinander übereinstimmen,

wobei die Ableitungseinheit so konfiguriert ist, dass sie:

Ausgabebilddaten durch Eingeben der Bilddaten des Spektrums als die Eingabebilddaten in einen jeweiligen Autokodierer, der jedem der Intervalle entspricht, ausgibt;

als Differenzdaten eine Differenz in der Intensität jeder Wellenzahl zwischen den Eingabebilddaten und den Ausgabebilddaten für jedes der Intervalle ableitet; und

als die Relevanzdaten einen Durchschnittswert und eine Summe der Differenzen in der Intensität in jedem der Intervalle ableitet.

**Revendications**

1. Appareil d'apprentissage comprenant :

une première unité d'acquisition qui acquiert des données de propriétés physiques multidimensionnelles représentant une propriété physique d'un produit ;

une unité de dérivation qui dérive des données d'entrée d'apprentissage à entrer dans un modèle d'apprentissage automatique pour prédire une qualité du produit à partir des données de propriétés physiques multidimensionnelles et qui dérive, en tant que données d'entrée d'apprentissage, des données de pertinence de propriétés physiques multidimensionnelles qui sont liées aux données de propriétés physiques multidimensionnelles en appliquant au moins une partie d'une pluralité d'autoencodeurs aux données de propriétés physiques multidimensionnelles ; et

une unité d'apprentissage qui entre les données d'entrée d'apprentissage dans le modèle d'apprentissage automatique, effectue un apprentissage et délivre en sortie le modèle d'apprentissage automatique en tant que modèle appris à fournir pour un fonctionnement réel,

dans lequel les données de propriétés physiques multidimensionnelles incluent des données d'images d'un spectre qui est représenté par des données spectrales détectées en effectuant une analyse spectroscopique du produit,

dans lequel l'unité de dérivation dérive les données de pertinence de propriétés physiques multidimensionnelles pour chacun d'une pluralité d'intervalles obtenus en divisant les données spectrales en parties égales, chaque autoencodeur de la pluralité d'autoencodeurs étant préparé pour chacun de la pluralité d'intervalles des données spectrales,

dans lequel les données d'images du spectre du produit dont la qualité est supérieure à un niveau prédéfini sont entrées dans chaque autoencodeur respectif, en tant que données d'images d'entrée d'apprentissage,

dans lequel chaque autoencodeur est entraîné de sorte que les données d'images d'entrée d'apprentissage et les données d'images de sortie d'apprentissage correspondent l'une à l'autre,

dans lequel l'unité de dérivation est configurée pour :

délivrer en sortie des données d'images de sortie en entrant, en tant que données d'images d'entrée, les données d'images du spectre dans un autoencodeur respectif correspondant à chacun des intervalles ;

dériver, en tant que données de différence, une différence d'intensité de chaque nombre d'onde entre les données d'images d'entrée et les données d'images de sortie pour chacun des intervalles ; et

dériver, en tant qu'éléments des données de pertinence, une valeur moyenne et une somme des différences d'intensité dans chacun des intervalles.

2. Appareil d'apprentissage selon la revendication 1,
dans lequel les données d'entrée d'apprentissage incluent des données de conditions de production qui sont définies dans un processus de production du produit.

3. Appareil d'apprentissage selon la revendication 1 ou la revendication 2,
dans lequel l'unité de dérivation entre les données de propriétés physiques multidimensionnelles dans chaque autoencodeur, délivre en sortie des données de caractéristiques à partir d'un réseau d'encodage de l'autoencodeur et dérive les données de pertinence de propriétés physiques multidimensionnelles sur la base des données de caractéristiques.

4. Appareil d'apprentissage selon l'une quelconque des revendications 1 à 3,
dans lequel les données de propriétés physiques multidimensionnelles incluent des données d'images obtenues par imagerie du produit.

5. Appareil d'apprentissage selon l'une quelconque des revendications 1 à 4,
dans lequel le produit est obtenu au moyen d'un procédé de synthèse en flux.

6. Appareil de fonctionnement comprenant :

une deuxième unité d'acquisition qui acquiert le modèle appris qui est délivré en sortie par l'unité d'apprentissage de l'appareil d'apprentissage selon l'une quelconque des revendications 1 à 5 ;

une troisième unité d'acquisition qui acquiert des données de pertinence de propriétés physiques multidimensionnelles pour la prédiction qui sont des données d'un produit dont une qualité est inconnue ;

une unité de traitement qui entre les données de pertinence de propriétés physiques multidimensionnelles pour la prédiction dans le modèle appris et prédit la qualité ; et

une unité de contrôle de sortie qui contrôle la délivrance en sortie d'un résultat de prédiction de la qualité par le modèle appris.

7.  Procédé de fonctionnement d'un appareil d'apprentissage, le procédé comprenant :

une première étape d'acquisition consistant à acquérir des données de propriétés physiques multidimensionnelles représentant une propriété physique d'un produit ;

une étape de dérivation consistant à dériver des données d'entrée d'apprentissage à entrer dans un modèle d'apprentissage automatique pour prédire une qualité du produit à partir des données de propriétés physiques multidimensionnelles et à dériver, en tant que données d'entrée d'apprentissage, des données de pertinence de propriétés physiques multidimensionnelles qui sont liées aux données de propriétés physiques multidimensionnelles en appliquant au moins une partie d'une pluralité d'autoencodeurs aux données de propriétés physiques multidimensionnelles ; et

une étape d'apprentissage consistant à entrer les données d'entrée d'apprentissage dans le modèle d'apprentissage automatique, à effectuer un apprentissage et à délivrer en sortie le modèle d'apprentissage automatique en tant que modèle appris à fournir pour un fonctionnement réel,

dans lequel les données de propriétés physiques multidimensionnelles incluent des données d'images d'un spectre qui est représenté par des données spectrales détectées en effectuant une analyse spectroscopique du produit,

dans lequel l'étape de dérivation dérive les données de pertinence de propriétés physiques multidimensionnelles pour chacun d'une pluralité d'intervalles obtenus en divisant les données spectrales en parties égales, chaque autoencodeur de la pluralité d'autoencodeurs étant préparé pour chacun de la pluralité d'intervalles des données spectrales,

dans lequel les données d'images du spectre du produit dont la qualité est supérieure à un niveau prédéfini sont entrées dans chaque autoencodeur respectif, en tant que données d'images d'entrée d'apprentissage,

dans lequel chaque autoencodeur est entraîné de sorte que les données d'images d'entrée d'apprentissage et les données d'images de sortie d'apprentissage correspondent l'une à l'autre,

dans lequel l'étape de dérivation inclut :

délivrer en sortie des données d'images de sortie en entrant, en tant que données d'images d'entrée, les données d'images du spectre dans un autoencodeur respectif correspondant à chacun des intervalles ;

dériver, en tant que données de différence, une différence d'intensité de chaque nombre d'onde entre les données d'images d'entrée et les données d'images de sortie pour chacun des intervalles ; et

dériver, en tant qu'éléments des données de pertinence, une valeur moyenne et une somme des différences d'intensité dans chacun des intervalles.

8.  Programme de fonctionnement d'un appareil d'apprentissage, le programme amenant un ordinateur à fonctionner en tant que :

une première unité d'acquisition qui acquiert des données de propriétés physiques multidimensionnelles représentant une propriété physique d'un produit ;

une unité de dérivation qui dérive des données d'entrée d'apprentissage à entrer dans un modèle d'apprentissage automatique pour prédire une qualité du produit à partir des données de propriétés physiques multidimensionnelles et qui dérive, en tant que données d'entrée d'apprentissage, des données de pertinence de propriétés physiques multidimensionnelles qui sont liées aux données de propriétés physiques multidimensionnelles en appliquant au moins une partie d'une pluralité d'autoencodeurs aux données de propriétés physiques multidimensionnelles ; et

une unité d'apprentissage qui entre les données d'entrée d'apprentissage dans le modèle d'apprentissage automatique, effectue un apprentissage et délivre en sortie le modèle d'apprentissage automatique en tant que modèle appris à fournir pour un fonctionnement réel,

dans lequel les données de propriétés physiques multidimensionnelles incluent des données d'images d'un spectre qui est représenté par des données spectrales détectées en effectuant une analyse spectroscopique du produit,

dans lequel l'unité de dérivation dérive les données de pertinence de propriétés physiques multidimensionnelles pour chacun d'une pluralité d'intervalles obtenus en divisant les données spectrales en parties égales, chaque autoencodeur de la pluralité d'autoencodeurs étant préparé pour chacun de la pluralité d'intervalles des données spectrales,

dans lequel les données d'images du spectre du produit dont la qualité est supérieure à un niveau prédéfini sont entrées dans chaque autoencodeur respectif, en tant que données d'images d'entrée d'apprentissage,

dans lequel chaque autoencodeur est entraîné de sorte que les données d'images d'entrée d'apprentissage et les données d'images de sortie d'apprentissage correspondent l'une à l'autre,

dans lequel l'unité de dérivation est configurée pour :

délivrer en sortie des données d'images de sortie en entrant, en tant que données d'images d'entrée, les données d'images du spectre dans un autoencodeur respectif correspondant à chacun des intervalles ;

dériver, en tant que données de différence, une différence d'intensité de chaque nombre d'onde entre les données d'images d'entrée et les données d'images de sortie pour chacun des intervalles ; et

dériver, en tant qu'éléments des données de pertinence, une valeur moyenne et une somme des différences d'intensité dans chacun des intervalles.

## FIG. 1

MACHINE LEARNING SYSTEM

LEARNING APPARATUS

2

10

OPERATING APPARATUS

11

12

FLOW REACTION APPARATUS — 13

PHYSICAL-PROPERTY ANALYSIS APPARATUS — 14

QUALITY EVALUATION APPARATUS — 15

EP 3 995 997 B1

# FIG. 2

RAW MATERIAL — RM

↓

FLOW REACTION APPARATUS — 13

↓

PRODUCT — PR

PHYSICAL-PROPERTY ANALYSIS APPARATUS — 14

QUALITY EVALUATION APPARATUS — 15

PCD — PRODUCTION CONDITION DATA

PHYSICAL-PROPERTY DATA — PD

QUALITY DATA — QD

LEARNING APPARATUS — 10

# FIG. 3

LEARNING APPARATUS

PRODUCTION CONDITION DATA — PCD

PHYSICAL-PROPERTY DATA — PD

QUALITY DATA — QD

PHYSICAL-PROPERTY RELEVANCE DATA — IDL

PRD

MACHINE LEARNING MODEL — M

LEARNING OUTPUT DATA — ODL

UPDATE

EVALUATION

10

LEARNED MODEL — TM

11

OPERATING APPARATUS

PCDF — PRODUCTION CONDITION DATA FOR PREDICTION

PRDF — PHYSICAL-PROPERTY RELEVANCE DATA FOR PREDICTION

MACHINE LEARNING MODEL — TM

QUALITY PREDICTION DATA — QFD

# FIG. 4

PR

PRODUCT

ID:PR0001

PCD

PRODUCTION
CONDITION DATA

PD

PHYSICAL-PROPERTY
DATA

QD

QUALITY DATA

PRD

PHYSICAL-PROPERTY
RELEVANCE DATA

# FIG. 5

TO LEARNING APPARATUS

TO PHYSICAL-PROPERTY ANALYSIS APPARATUS AND QUALITY EVALUATION APPARATUS

13

20 — FIRST RAW MATERIAL SUPPLY UNIT

FIRST RAW MATERIAL — RM

RM1

PR

PRODUCT

PCD

26

25

PRODUCTION CONDITION DATA

SETTING UNIT

35    32    30  31    L

22

φ

42

40

RECOVERY UNIT

37

38

SYSTEM CONTROLLER

34

36    33

RM2

SECOND RAW MATERIAL

DISCARD UNIT

RECOVERY/DISCARD SECTION    41

21 — SECOND RAW MATERIAL SUPPLY UNIT

TEMPERATURE CONTROL UNIT — 23

24

FLOW REACTION APPARATUS

EP 3 995 997 B1

# FIG. 6

TO LEARNING APPARATUS

TO PHYSICAL-PROPERTY ANALYSIS APPARATUS AND QUALITY EVALUATION APPARATUS

13

20 — FIRST RAW MATERIAL SUPPLY UNIT

RM

FIRST RAW MATERIAL

RM1

L

45

46 31

PR

PRODUCT

PCD

26

25

PRODUCTION CONDITION DATA

SETTING UNIT

51

47

49

54

42

40

RECOVERY UNIT

53

50

52

48

RM2

SECOND RAW MATERIAL

38

DISCARD UNIT

SYSTEM CONTROLLER

21 — SECOND RAW MATERIAL SUPPLY UNIT

TEMPERATURE CONTROL UNIT

23

RECOVERY/DISCARD SECTION

41

24

FLOW REACTION APPARATUS

EP 3 995 997 B1

# FIG.7

PCD

PRODUCTION CONDITION DATA

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 0.018 | 10 | 0.018 | 5.5 | T-SHAPE | 5 | 8 | 10 |

# FIG. 8

PR

PRODUCT → PHYSICAL-PROPERTY ANALYSIS APPARATUS ~14

SPECTRUM DATA

| WAVE NUMBER | INTENSITY | |
|---|---|---|
| 650 | 45 | ~SPD |
| 652 | 110 | |
| 655 | 224 | |
| ⋮ | ⋮ | |
| 1000 | 385 | |
| 1004 | 386 | |
| ⋮ | ⋮ | |
| 1995 | 88 | |
| 2000 | 87 | |

PD

PHYSICAL-PROPERTY DATA    SPIMD

SP

INTENSITY

WAVE NUMBER

# FIG. 9

PR

PRODUCT → QUALITY EVALUATION APPARATUS ～15

QUALITY DATA ～QD

| MOLECULAR WEIGHT DISPERSION | MOLECULAR WEIGHT |
|---|---|
| 1.0422 | 22000 |

# FIG. 10

DISPLAY ～64

INPUT DEVICE ～65

CPU ～62

MEMORY ～61

STORAGE DEVICE ～60

COMMUNICATION UNIT ～63

～66

～10,11

～12

# FIG. 11

## FIG. 12

# FIG. 13

EP 3 995 997 B1

## FIG. 14

NUMBER OF
CHANNELS

HEIGHT

DIc
DIc
CMP
DIc
DIc

WIDTH

## FIG. 15

INT1   INT2   INT3   ...   SPIMD   ...   INT20

SP

INTENSITY

WAVE NUMBER

SPIMD_INT1

SPIMD_INT3

SPIMD_INT20

AE_INT1   AE_INT2   AE_INT3   ...   AE_INT20

## FIG. 16

LEARNING INPUT IMAGE DATA
(IMAGE DATA OF SPECTRUM OF PRODUCT OF WHICH QUALITY IS HIGHER THAN PRESET LEVEL)

IIMDL

OIMDL

LEARNING OUTPUT IMAGE DATA

INT1

SP

SPIMD_INT1

AE_INT1

AUTOENCODER

SP

PERFORM LEARNING SUCH THAT LEARNING INPUT IMAGE DATA AND LEARNING OUTPUT IMAGE DATA MATCH WITH EACH OTHER

EP 3 995 997 B1

# FIG. 17

IIMD — INPUT IMAGE DATA

SPIMD_INT1

SP

INT1

AE_INT1 — AUTOENCODER

OIMD — OUTPUT IMAGE DATA

SP

## DIFFERENCE DATA — DD

### FIRST INTERVAL

| WAVE NUMBER | DIFFERENCE IN INTENSITY |
|---|---|
| 650 | 12 |
| 652 | 8 |
| 655 | 6 |
| ⋮ | ⋮ |

DD_INT1

### SECOND INTERVAL

| WAVE NUMBER | DIFFERENCE IN INTENSITY |
|---|---|
| 720 | −11 |
| 722 | −15 |
| 725 | −13 |
| ⋮ | ⋮ |

DD_INT2

### 20TH INTERVAL

| WAVE NUMBER | DIFFERENCE IN INTENSITY |
|---|---|
| 1930 | 1 |
| 1932 | 0 |
| 1935 | −1 |
| ⋮ | ⋮ |

DD_INT20

EP 3 995 997 B1

## FIG. 18

**DD_INT1 — DIFFERENCE DATA (FIRST INTERVAL)**

| WAVE NUMBER | DIFFERENCE IN INTENSITY |
|---|---|
| 650 | 12 |
| 652 | 8 |
| 655 | 6 |
| ... | ... |

**DD_INT2 — DIFFERENCE DATA (SECOND INTERVAL)**

| WAVE NUMBER | DIFFERENCE IN INTENSITY |
|---|---|
| 720 | -11 |
| 722 | -15 |
| 725 | -13 |
| ... | ... |

**DD_INT20 — DIFFERENCE DATA (20TH INTERVAL)**

| WAVE NUMBER | DIFFERENCE IN INTENSITY |
|---|---|
| 1930 | 1 |
| 1932 | 0 |
| 1935 | -1 |
| ... | ... |

**FIRST DERIVATION UNIT** 76

**PRD_INT1 — RELEVANCE DATA (FIRST INTERVAL)**

| AVERAGE VALUE | 6.5 |
|---|---|
| SUM | 256 |

**PRD_INT2 — RELEVANCE DATA (SECOND INTERVAL)**

| AVERAGE VALUE | -4.85 |
|---|---|
| SUM | -194 |

**PRD_INT20 — RELEVANCE DATA (20TH INTERVAL)**

| AVERAGE VALUE | -0.8 |
|---|---|
| SUM | -32.2 |

## FIG. 19

LEARNING UNIT 77

QD — QUALITY DATA

PCD

IDL

PRODUCTION CONDITION DATA

PHYSICAL-PROPERTY RELEVANCE DATA

PRD

MACHINE LEARNING MODEL

M

FIRST PROCESSING UNIT 85

ODL — LEARNING OUTPUT DATA

EVALUATION UNIT 86

UPDATE UNIT 87

EP 3 995 997 B1

# FIG. 20

PCD — ID:PR0001

PRODUCTION CONDITION DATA

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 0.018 | 10 | 0.018 | 5.5 | T-SHAPE | 5 | 8 | 10 |

PRD — ID:PR0001

RELEVANCE DATA

| FIRST INTERVAL | | SECOND INTERVAL | | | 20TH INTERVAL | |
|---|---|---|---|---|---|---|
| AVERAGE VALUE | 6.5 | AVERAGE VALUE | -4.85 | ... | AVERAGE VALUE | -0.8 |
| SUM | 256 | SUM | -194 | | SUM | -32.2 |

PRD_INT1    PRD_INT2    PRD_INT20

IDL

M — MACHINE LEARNING MODEL

85 — FIRST PROCESSING UNIT

ODL — LEARNING OUTPUT DATA

| MOLECULAR WEIGHT DISPERSION | MOLECULAR WEIGHT |
|---|---|
| 1.4588 | 28500 |

EP 3 995 997 B1

# FIG. 21

~11

OPERATING APPARATUS
~62B

STORAGE DEVICE
~115  CPU  ~116

PDF — PHYSICAL-PROPERTY DATA FOR PREDICTION

AE — AUTOENCODER

RELEVANCE DATA FOR PREDICTION
PRDF

SECOND DERIVATION UNIT

SECOND RW CONTROL UNIT

PCDF
~117

PRODUCTION CONDITION DATA FOR PREDICTION

TM — LEARNED MODEL

SECOND PROCESSING UNIT

QFD — QUALITY PREDICTION DATA
~118

110 — SECOND OPERATION PROGRAM

DISPLAY CONTROL UNIT

60B

~65B
INPUT DEVICE

~64B
DISPLAY

# FIG. 22

ID:PR0500 — PCDF

### PRODUCTION CONDITION DATA FOR PREDICTION

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 0.35 | 15 | 0.35 | 15 | T-SHAPE | 5 | 10 | 20 |

ID:PR0500 — PRDF

### RELEVANCE DATA FOR PREDICTION

| FIRST INTERVAL | | | SECOND INTERVAL | | | 20TH INTERVAL | |
|---|---|---|---|---|---|---|---|
| AVERAGE VALUE | 0.025 | | AVERAGE VALUE | -0.098 | ... | AVERAGE VALUE | 1.023 |
| SUM | 1.495 | | SUM | -3.664 | | SUM | 11.49 |

PRD_INT1   PRD_INT2   ... PRD_INT20

TM

LEARNED MODEL

~117

SECOND PROCESSING UNIT

~QFD

### QUALITY PREDICTION DATA

| MOLECULAR WEIGHT DISPERSION | MOLECULAR WEIGHT |
|---|---|
| 1.5555 | 23500 |

# FIG. 23

~120

```
┌─────────────────────────────────────────────┐
│         QUALITY PREDICTION APPLICATION        │
│  - DISPLAYING OF QUALITY PREDICTION DATA      │
├─────────────────────────────────────────────┤
│         QUALITY PREDICTION DATA OF            │
│            PRODUCT IS DISPLAYED.              │
│                                              │
│   ┌───────────────────────────────┐          │
│   │  QUALITY PREDICTION DATA      │  QFD      │
│   │  ┌──────────┬──────────────┐  │          │
│   │  │MOLECULAR │              │  │          │
│   │  │ WEIGHT   │  MOLECULAR   │  │          │
│   │  │DISPERSION│   WEIGHT     │  │          │
│   │  ├──────────┼──────────────┤  │          │
│   │  │  1.5555  │    23500     │  │          │
│   │  └──────────┴──────────────┘  │          │
│   └───────────────────────────────┘          │
│                                              │
│              ┌──────┐                         │
│              │  OK  │ ~121                     │
│              └──────┘                         │
└─────────────────────────────────────────────┘
```

# FIG. 24

```
        ( START OF DERIVATION )
                  │
ST1001 ┐          │                              NO
  < IS NEW PHYSICAL-PROPERTY DATA RECEIVED? >─────┐
                  │ YES                           │
ST1002 ┐          │                               │
  ┌──────────────────────────────────────┐        │
  │   READ(ACQUIRE) PHYSICAL-PROPERTY DATA │       │
  └──────────────────────────────────────┘        │
ST1003 ┐          │                               │
  ┌──────────────────────────────────────┐        │
  │   DERIVE RELEVANCE DATA BY APPLYING    │       │
  │ AUTOENCODER TO PHYSICAL-PROPERTY DATA  │       │
  └──────────────────────────────────────┘        │
ST1004 ┐          │                               │
  ┌──────────────────────────────────────┐        │
  │        OUTPUT RELEVANCE DATA          │        │
  └──────────────────────────────────────┘        │
                  │←──────────────────────────────┘
                  │
              ( END )
```

## FIG. 25

```
              ┌─────────────────────────┐
              │     START OF LEARNING    │
              └─────────────────────────┘
                          │
                          ▼ ◄──────────────────────────────┐
ST2001                                                      │
   ┌──────────────────────────────────────────┐            │
   │        READ LEARNING INPUT DATA           │            │
   └──────────────────────────────────────────┘            │
ST2002                                                      │
   ┌──────────────────────────────────────────┐            │
   │   OUTPUT LEARNING OUTPUT DATA BY INPUTTING │           │
   │ LEARNING INPUT DATA TO MACHINE LEARNING MODEL │         │
   └──────────────────────────────────────────┘            │
ST2003                                                      │
   ┌──────────────────────────────────────────┐    ST2005  │
   │    EVALUATE ACCURACY OF PREDICTION OF     │  ┌─────────────────────────────────┐
   │  QUALITY OF PRODUCT BY MACHINE LEARNING   │  │ UPDATE MACHINE LEARNING MODEL   │
   │ MODEL BY COMPARING LEARNING OUTPUT DATA   │  └─────────────────────────────────┘
   │            AND QUALITY DATA               │
   └──────────────────────────────────────────┘
ST2004
   ◄──────────────────────────────────────────►  NO
   │   DOES ACCURACY REACH PRESET LEVEL?       │───────────┘
   ◄──────────────────────────────────────────►
ST2006                         │ YES
   ┌──────────────────────────────────────────┐
   │          OUTPUT LEARNED MODEL             │
   └──────────────────────────────────────────┘
                          │
                          ▼
              ┌─────────────────────────┐
              │            END           │
              └─────────────────────────┘
```

# FIG. 26

START

ST500 —

READ(ACQUIRE) LEARNED MODEL

ST600 —

READ(ACQUIRE) PRODUCTION CONDITION DATA FOR PREDICTION AND RELEVANCE DATA FOR PREDICTION

ST700 —

OUTPUT QUALITY PREDICTION DATA BY INPUTTING PRODUCTION CONDITION DATA FOR PREDICTION AND RELEVANCE DATA FOR PREDICTION TO LEARNED MODEL

ST800 —

OUTPUT QUALITY PREDICTION DATA

END

# FIG. 27

125

| | DETERMINATION COEFFICIENT OF MOLECULAR WEIGHT DISPERSION | DETERMINATION COEFFICIENT OF MOLECULAR WEIGHT |
|---|---|---|
| COMPARATIVE EXAMPLE 1 | 0.6 | 0.65 |
| COMPARATIVE EXAMPLE 2 | 0.82 | 0.81 |
| EXAMPLE | 0.91 | 0.90 |

COMPARATIVE EXAMPLE 1: LEARNING INPUT DATA = ONLY PRODUCTION CONDITION DATA
COMPARATIVE EXAMPLE 2: LEARNING INPUT DATA = PRODUCTION CONDITION DATA + RELEVANCE DATA (REPRESENTATIVE VALUE OF INTENSITY)
EXAMPLE: LEARNING INPUT DATA = PRODUCTION CONDITION DATA + RELEVANCE DATA DERIVED USING AUTOENCODER

## FIG. 28

SPD_INT1 —

| SPECTRUM DATA (FIRST INTERVAL) | |
|---|---|
| WAVE NUMBER | INTENSITY |
| 650 | 45 |
| 652 | 110 |
| 655 | 224 |
| ⋮ | ⋮ |

| SPECTRUM DATA (SECOND INTERVAL) | |
|---|---|
| WAVE NUMBER | INTENSITY |
| 720 | 2040 |
| 722 | 2035 |
| 725 | 2028 |
| ⋮ | ⋮ |

— SPD_INT2

· · ·

· · ·

| SPECTRUM DATA (20TH INTERVAL) | |
|---|---|
| WAVE NUMBER | INTENSITY |
| 1930 | 45 |
| 1932 | 110 |
| 1935 | 224 |
| ⋮ | ⋮ |

— SPD_INT20

PRD_INT1 —

| RELEVANCE DATA (FIRST INTERVAL) | |
|---|---|
| AVERAGE VALUE | 1500 |
| MAXIMUM VALUE | 2800 |
| MINIMUM VALUE | 45 |
| MEDIAN VALUE | 1150 |
| VARIANCE | 60.95 |
| SKEWNESS | 0.985 |
| KURTOSIS | 16.84 |

| RELEVANCE DATA (SECOND INTERVAL) | |
|---|---|
| AVERAGE VALUE | 1960 |
| MAXIMUM VALUE | 2055 |
| MINIMUM VALUE | 1876 |
| MEDIAN VALUE | 1921 |
| VARIANCE | 5.03 |
| SKEWNESS | 0.997 |
| KURTOSIS | 4.69 |

— PRD_INT2

· · ·

· · ·

| RELEVANCE DATA (20TH INTERVAL) | |
|---|---|
| AVERAGE VALUE | 360 |
| MAXIMUM VALUE | 421 |
| MINIMUM VALUE | 126 |
| MEDIAN VALUE | 285 |
| VARIANCE | 18.29 |
| SKEWNESS | 0.123 |
| KURTOSIS | −12.4 |

— PRD_INT20

EP 3 995 997 B1

## FIG. 29

PR

PRODUCT → PHYSICAL-PROPERTY ANALYSIS APPARATUS ~130

↓

PHYSICAL-PROPERTY DATA  PD

IMD

## FIG. 30

AR1-1  AR1-2  AR1-3  AR1-4          IMD          AR1-10

AR2-1
AR3-1

AR4-1

AR10-1                                      AR10-10

## FIG. 31

| IMD_AR1-1 | IMD_AR1-2 | IMD_AR10-10 |
| --- | --- | --- |

FIRST DERIVATION UNIT ⟨135⟩

PRD_AR1-1

| RELEVANCE DATA (REGION 1-1) | |
| --- | --- |
| AVERAGE VALUE | 3.8 |
| SUM | 111 |

| RELEVANCE DATA (REGION 1-2) | |
| --- | --- |
| AVERAGE VALUE | -7.52 |
| SUM | -226 |

PRD_AR1-2

| RELEVANCE DATA (REGION 10-10) | |
| --- | --- |
| AVERAGE VALUE | 0.192 |
| SUM | 5.85 |

PRD_AR10-10

EP 3 995 997 B1

## FIG. 32

INT1

IIMD
INPUT IMAGE DATA

SP

SPIMD_INT1

AE_INT1

AUTOENCODER

140

ENCODER
NETWORK

PRD_INT1

145

CMP

IMAGE FEATURE MAP

DIc — Ch1
DIc — Ch2
DIc — Ch3
DIc — Ch4

FIRST
DERIVATION
UNIT

RELEVANCE DATA

AVERAGE VALUE OF PIXEL VALUE OF
OUTPUT DATA OF CHANNEL 1

AVERAGE VALUE OF PIXEL VALUE OF
OUTPUT DATA OF CHANNEL 2

AVERAGE VALUE OF PIXEL VALUE OF
OUTPUT DATA OF CHANNEL 3

AVERAGE VALUE OF PIXEL VALUE OF
OUTPUT DATA OF CHANNEL 4

EP 3 995 997 B1

# FIG. 33

FIG. 34

⟨TEMPORARY LEARNING⟩

ID:PR0001 — PCD

PRODUCTION CONDITION DATA

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 0.018 | 10 | 0.018 | 5.5 | T-SHAPE | 5 | 8 | 10 |

— IDL

ID:PR0001 — PRD

RELEVANCE DATA

| FIRST INTERVAL | | | SECOND INTERVAL | | | 20TH INTERVAL | |
|---|---|---|---|---|---|---|---|
| AVERAGE VALUE | 6.5 | | AVERAGE VALUE | -4.85 | ... | AVERAGE VALUE | -0.8 |
| SUM | 256 | | SUM | -194 | ... | SUM | -32.2 |

PRD_INT1    PRD_INT2    PRD_INT20

M1

FIRST MACHINE LEARNING MODEL

— 85

FIRST PROCESSING UNIT

— ODL

LEARNING OUTPUT DATA

| MOLECULAR WEIGHT DISPERSION | MOLECULAR WEIGHT |
|---|---|
| 1.4588 | 28500 |

EP 3 995 997 B1

## FIG. 35

EXTRACTION UNIT

PCD ⌐IDL

PRODUCTION CONDITION DATA

PHYSICAL-PROPERTY RELEVANCE DATA ⌐PRD

~160
THIRD PROCESSING UNIT

⌐POD
TEMPORARY OUTPUT DATA

~162
CALCULATION UNIT

TEMPORARY MACHINE LEARNING MODEL
⌐PM

~161
FOURTH PROCESSING UNIT

⌐PODE
TEMPORARY OUTPUT DATA FOR EXTRACTION

⌐PRDE
RELEVANCE DATA FOR EXTRACTION

~CI
CONTRIBUTION INFORMATION

155

SC
~163
HCII~ HIGH-CONTRIBUTION ITEM INFORMATION ← DETERMINATION UNIT ← SETTING CONDITION

EP 3 995 997 B1

# FIG. 36

EP 3 995 997 B1

**PCD**

ID:PR0100

PRODUCTION CONDITION DATA

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 0.018 | 10 | 0.045 | 20 | CROSS-SHAPE | 5 | 8 | 20 |

**IDL**

**PRD**

ID:PR0100

RELEVANCE DATA

| FIRST INTERVAL | |
|---|---|
| AVERAGE VALUE | 3.64 |
| SUM | 102 |

PRD_INT1

| SECOND INTERVAL | |
|---|---|
| AVERAGE VALUE | −1.84 |
| SUM | −5.44 |

PRD_INT2

...

| 20TH INTERVAL | |
|---|---|
| AVERAGE VALUE | −2.65 |
| SUM | −69.2 |

PRD_INT20

**PM**

TEMPORARY MACHINE LEARNING MODEL

THIRD PROCESSING UNIT — 160

**POD**

TEMPORARY OUTPUT DATA

| MOLECULAR WEIGHT DISPERSION | MOLECULAR WEIGHT |
|---|---|
| 1.5865 | 22000 |

## FIG. 37

ID:PR0100 — PCD

### PRODUCTION CONDITION DATA

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 0.018 | 10 | 0.045 | 20 | CROSS-SHAPE | 5 | 8 | 20 |

PM — TEMPORARY MACHINE LEARNING MODEL

ID:PR0100 — PRDE

### RELEVANCE DATA FOR EXTRACTION

| FIRST INTERVAL | | SECOND INTERVAL | |
|---|---|---|---|
| AVERAGE VALUE | ✕ | AVERAGE VALUE | -1.84 |
| SUM | 102 | SUM | -5.44 |
| PRD_INT1 | | PRD_INT2 | |

| 20TH INTERVAL | |
|---|---|
| AVERAGE VALUE | -2.65 |
| SUM | -69.2 |
| PRD_INT20 | |

~161 FOURTH PROCESSING UNIT

~PODE

### TEMPORARY OUTPUT DATA FOR EXTRACTION

| MOLECULAR WEIGHT DISPERSION | MOLECULAR WEIGHT |
|---|---|
| 1.6043 | 26000 |

EP 3 995 997 B1

# FIG. 38

162

## CALCULATION UNIT

$$\text{CALCULATE} \quad \underset{\text{CHANGE}}{\text{RATE OF}} = \frac{\left| \begin{array}{c} \text{DIFFERENCE BETWEEN TEMPORARY OUTPUT DATA} \\ \text{AND TEMPORARY OUTPUT DATA FOR EXTRACTION} \end{array} \right|}{\text{TEMPORARY OUTPUT DATA}}$$

### CONVERT RATE OF CHANGE INTO CONTRIBUTION

| RATE OF CHANGE | CONTRIBUTION |
|---|---|
| EQUAL TO OR LARGER THAN 0 AND SMALLER THAN 0.05 | 0 |
| EQUAL TO OR LARGER THAN 0.05 AND SMALLER THAN 0.1 | 1 |
| EQUAL TO OR LARGER THAN 0.1 AND SMALLER THAN 0.15 | 2 |
| EQUAL TO OR LARGER THAN 0.15 AND SMALLER THAN 0.2 | 3 |
| ⋮ | ⋮ |
| EQUAL TO OR LARGER THAN 0.4 AND SMALLER THAN 0.45 | 8 |
| EQUAL TO OR LARGER THAN 0.45 AND SMALLER THAN 0.5 | 9 |
| EQUAL TO OR LARGER THAN 0.5 | 10 |

170

# FIG. 39

POD

PODE

| TEMPORARY OUTPUT DATA | |
|---|---|
| MOLECULAR WEIGHT DISPERSION | MOLECULAR WEIGHT |
| 1.5865 | 22000 |

| TEMPORARY OUTPUT DATA FOR EXTRACTION | |
|---|---|
| MOLECULAR WEIGHT DISPERSION | MOLECULAR WEIGHT |
| 1.6043 | 26000 |

162

## CALCULATION UNIT

$$\text{RATE OF CHANGE IN MOLECULAR WEIGHT DISPERSION} = \frac{|1.5865 - 1.6043|}{1.5865} \fallingdotseq 0.01$$

$$\text{RATE OF CHANGE IN MOLECULAR WEIGHT} = \frac{|22000 - 26000|}{22000} \fallingdotseq 0.18$$

| RATE OF CHANGE | CONTRIBUTION |
|---|---|
| EQUAL TO OR LARGER THAN 0 AND SMALLER THAN 0.05 | 0 |
| EQUAL TO OR LARGER THAN 0.05 AND SMALLER THAN 0.1 | 1 |
| EQUAL TO OR LARGER THAN 0.1 AND SMALLER THAN 0.15 | 2 |
| EQUAL TO OR LARGER THAN 0.15 AND SMALLER THAN 0.2 | 3 |
| ⋮ | ⋮ |
| EQUAL TO OR LARGER THAN 0.4 AND SMALLER THAN 0.45 | 8 |
| EQUAL TO OR LARGER THAN 0.45 AND SMALLER THAN 0.5 | 9 |
| EQUAL TO OR LARGER THAN 0.5 | 10 |

170

| CONTRIBUTION OBTAINED BY CONVERTING RATE OF CHANGE IN MOLECULAR WEIGHT DISPERSION |
|---|
| 0 |

| CONTRIBUTION OBTAINED BY CONVERTING RATE OF CHANGE IN MOLECULAR WEIGHT |
|---|
| 3 |

## FIG. 40

CI

| CONTRIBUTION INFORMATION | | |
|---|---|---|

| FIRST INTERVAL | | | SECOND INTERVAL | | | | 20TH INTERVAL | | |
|---|---|---|---|---|---|---|---|---|---|
| AVERAGE VALUE | 0 | 3 | AVERAGE VALUE | 7 | 7 | ... ... | AVERAGE VALUE | 8 | 8 |
| SUM | 4 | 6 | SUM | 8 | 6 | | SUM | 10 | 10 |

## FIG. 41

CONTRIBUTION INFORMATION

| FIRST INTERVAL | | |
|---|---|---|
| AVERAGE VALUE | 0 | 3 |
| SUM | 4 | 6 |

| SECOND INTERVAL | | |
|---|---|---|
| AVERAGE VALUE | 7 | 7 |
| SUM | 8 | 6 |

...

| 20TH INTERVAL | | |
|---|---|---|
| AVERAGE VALUE | 8 | 8 |
| SUM | 10 | 10 |

CI

DETERMINATION UNIT ~163

SETTING CONDITION

CONTRIBUTION OBTAINED BY CONVERTING RATE OF CHANGE IN MOLECULAR WEIGHT DISPERSION AND CONTRIBUTION OBTAINED BY CONVERTING RATE OF CHANGE IN MOLECULAR WEIGHT ARE BOTH EQUAL TO OR LARGER THAN 6

SC

HIGH-CONTRIBUTION ITEM INFORMATION

AVERAGE VALUE AND SUM IN SECOND INTERVAL, ···, AND AVERAGE VALUE AND SUM IN 20TH INTERVAL

HCII

EP 3 995 997 B1

# FIG. 42

<MAIN LEARNING>

ID:PR0200 — PCD — IDL

PRODUCTION CONDITION DATA

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 0.05 | 8.0 | 0.05 | 8.0 | T-SHAPE | 5 | 8 | 35 |

ID:PR0200 — PRD

RELEVANCE DATA

| FIRST INTERVAL | | SECOND INTERVAL | | ... | 20TH INTERVAL | |
|---|---|---|---|---|---|---|
| AVERAGE VALUE | ☒ | AVERAGE VALUE | 0.112 | ... | AVERAGE VALUE | 0.002 |
| SUM | ☒ | SUM | 3.44 | | SUM | 0.062 |

PRD_INT1  PRD_INT2  PRD_INT20

M2
SECOND MACHINE LEARNING MODEL

85
FIRST PROCESSING UNIT

— ODL

LEARNING OUTPUT DATA

| MOLECULAR WEIGHT DISPERSION | MOLECULAR WEIGHT |
|---|---|
| 1.6582 | 25000 |

EP 3 995 997 B1

# FIG. 43

# FIG. 44

~175

OPERATING APPARATUS

~62B

STORAGE DEVICE

~115    CPU

~180

PDF — PHYSICAL-PROPERTY DATA FOR PREDICTION

AE — AUTOENCODER

HCII — HIGH-CONTRIBUTION ITEM INFORMATION

RELEVANCE DATA FOR PREDICTION

PRDF

PCDF

PRODUCTION CONDITION DATA FOR PREDICTION

TM — LEARNED MODEL

SECOND RW CONTROL UNIT

SECOND DERIVATION UNIT

~117

SECOND PROCESSING UNIT

QFD — QUALITY PREDICTION DATA

~118

DISPLAY CONTROL UNIT

176 — SECOND OPERATION PROGRAM

60B

~65B

INPUT DEVICE

~64B

DISPLAY

# FIG. 45

ID:PR1000 — PCDF

PRODUCTION CONDITION DATA FOR PREDICTION

| CONCENTRATION OF FIRST RAW MATERIAL (mol/l) | FLOW VELOCITY OF FIRST RAW MATERIAL (ml/min) | CONCENTRATION OF SECOND RAW MATERIAL (mol/l) | FLOW VELOCITY OF SECOND RAW MATERIAL (ml/min) | SHAPE OF JUNCTION PORTION | DIAMETER OF REACTION PATH (mm) | LENGTH OF REACTION PATH (m) | REACTION TEMPERATURE (°C) |
|---|---|---|---|---|---|---|---|
| 1.25 | 10 | 0.35 | 10 | T-SHAPE | 5 | 10 | 30 |

ID:PR1000 — PRDF

RELEVANCE DATA FOR PREDICTION

FIRST INTERVAL
| AVERAGE VALUE | ⊠ |
| SUM | ⊠ |
PRD_INT1

SECOND INTERVAL
| AVERAGE VALUE | 0.005 |
| SUM | 0.128 |
PRD_INT2

...

20TH INTERVAL
| AVERAGE VALUE | 0.014 |
| SUM | 0.468 |
PRD_INT20

TM

LEARNED MODEL

~117

SECOND PROCESSING UNIT

~QFD

QUALITY PREDICTION DATA

| MOLECULAR WEIGHT DISPERSION | MOLECULAR WEIGHT |
|---|---|
| 1.5555 | 23500 |

EP 3 995 997 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018018354 A

- JP 016091359 A

**Non-patent literature cited in the description**

- Regularization Paths for Generalized Linear Models via Coordinate Descent. *Journal of statistical software*, 2010, vol. 33-1